(19) **Europäisches Patentamt / European Patent Office / Office européen des brevets**

(11) **EP 4 645 768 A1**

(12) **EUROPEAN PATENT APPLICATION**

(43) Date of publication:
**05.11.2025  Bulletin 2025/45**

(21) Application number: **25172610.5**

(22) Date of filing: **25.04.2025**

(51) International Patent Classification (IPC):
**H04L 25/02** $^{(2006.01)}$

(52) Cooperative Patent Classification (CPC):
**H04L 25/0254; H04L 25/0224**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.04.2024  US 202463640195 P
23.09.2024  US 202463697935 P
27.01.2025  US 202563750260 P
21.04.2025  US 202519185150**

(71) Applicant: **Samsung Electronics Co., Ltd.
Suwon-si, Gyeonggi-do 16677 (KR)**

(72) Inventors:
• **SABER, Hamid
San Jose, CA, 95134 (US)**
• **BAE, Jung Hyun
San Jose, CA, 95134 (US)**

(74) Representative: **Kuhnen & Wacker
Patent- und Rechtsanwaltsbüro PartG mbB
Prinz-Ludwig-Straße 40A
85354 Freising (DE)**

(54) **MODEL INTEROPERABILITY AND COLLABORATION FOR MACHINE LEARNING BASED REPORTING OF COMMUNICATION CHANNEL INFORMATION**

(57)    An apparatus (3101) may include a receiver configured to receive a reference signal (3117) using a channel (3115), a transmitter configured to transmit a representation (3107) relating to the channel (3115), and a processing circuit configured to determine channel information based on the reference signal, generate, using a model, the representation based on the channel information, and transfer, using the receiver or the transmitter, at least one of the following: (a) model information (3173A) to specify the model, (b) capability information (3173B) for the apparatus relating to the model, and (c) data set information (3173C) to specify a data set for the model. The model information (3173A) may include an identifier for the model. The model information (3173A) may include structure information for the model. The model information (3173A) may include information about a type of input for the model. The model information (3173A) may include information about a format of input for the model. The model information (3173A) may include mapping information for mapping channel information to an input of the model. The mapping information may include information for a first subband, and information for a second subband.

FIG. 31

**Description**

TECHNICAL FIELD

This disclosure relates generally to communication systems and more particularly to model interoperability and collaboration for machine learning based reporting of communication channel information.

SUMMARY

In some wireless communication systems, a user equipment (UE) may determine channel conditions to report to a base station by making channel measurements based on a reference signal transmitted through the channel by the base station. The UE may use the channel measurements to calculate feedback in the form of a precoding matrix that the UE may report to the base station. The base station may apply the precoding matrix to subsequent downlink transmissions through the channel which may improve the performance of the downlink transmissions.

Sending feedback information on channel conditions, however, may consume a relatively large amount of resources as overhead. To reduce the amount of data used to transmit feedback information, some wireless communication systems may use one or more types of codebooks to enable a receiving device to send implicit and/or explicit channel condition feedback to a transmitting device. The use of a codebook, however, may not provide feedback with adequate accuracy. Moreover, the use of a codebook may still involve the transmission of a significant amount of overhead data on a UL channel.

To overcome this issue, a feedback scheme may use one or more machine learning (ML) models to transmit channel information for a wireless communication system. For example, a UE may use a first ML model to generate a compressed representation of channel information which may reduce the amount of resources required to send the information to a base station. The base station may use a second ML model to reconstruct the channel information.

An issue with this approach is that it may involve some form of collaboration between apparatus at a UE side (and/or the vendors of UE side apparatus) and apparatus at a network side (and/or the vendors of network side apparatus) to enable interoperability of models deployed at the UE side and the network (e.g., base station) side. For example, apparatus and/or vendors may need to collaborate to train an encoder model at a UE and a corresponding decoder model at a base station. Collaboration, however, may be difficult or impossible without techniques (e.g., standards) for exchanging information about models, data transfer, training, capabilities, and/or the like.

To overcome these issues, systems and methods are described herein to enable interoperability of models in wireless communication systems, for example, by facilitating collaboration between wireless apparatus and/or vendors of wireless apparatus.

Some systems and methods described herein relate to model information that may be used to specify a model. For example, model information may include a model structure that may specify a model type (e.g., convolutional neural network (CNN), multi-layer perceptron (MLP), and/or the like), input and/or output features, input and/or output shapes, number of layers, activation functions, and/or the like. As another example, model information may specify a type and/or format for model input and/or output (e.g., target channel information) which may be specified in spatial, frequency, angular, and/or delay domains.

Some additional systems and methods described herein relate to mapping between channel information and resources for models. For example, a model description may include mappings between target channel information (e.g., target channel state information (CSI)) across resources such as subbands, slots, and/or the like, to inputs and/or outputs of a model.

Some additional systems and methods described herein relate to schemes for a wireless apparatus such as a UE to indicate a capability to support one or more models. For example, a UE may declare a capability to support one or more specified models (e.g., a reference model). A network side apparatus (e.g., a base station) may configure the UE with one or more of the supported models which the UE may apply to an inference operation. As another example, a UE may declare a capability to support one or more specified model structures (e.g., a reference model structure). A network side apparatus may configure the UE with one or more of the supported model structures, and one or more parameters for the model structure (e.g., weights) may be transferred to the UE.

Some additional systems and methods described herein relate to schemes for a wireless apparatus such as a UE to indicate a capability to modify the operation of a model. For example, a UE may declare a capability to run a model (e.g., a reference model) as specified (e.g., directly), or perform one or more operations such as a tuning operation to modify the performance of the model. As another example, a UE may declare a capability to run a model based on a specified model structure (e.g., a reference model structure) as specified (e.g., based on training with field data or other data), or perform one or more operations such as an engineering operation to modify the performance of the model.

Some additional systems and methods described herein relate to schemes for transferring data to a wireless apparatus such as a UE to train a model. For example, a data set may be specified to include a type and/or format of each data point (e.g., a precoding matrix or a channel matrix). Additionally, or alternatively, a data set may be specified to include information to map data points to resources such as subbands, slots, and/or the like, in time, space, and/or frequency domains.

Some of these approaches may provide an improvement because they may reduce the amount of collaboration between vendors of wireless apparatus. Additionally, or alternatively, some of these approaches may provide an improvement because they may enable vendors of wireless apparatus to collaborate in a specified manner.

Some additional systems and methods described herein relate to schemes for performing inference in embodiments where CSI compression (e.g., in a time-spatial-frequency (TSF) domain) may have a predictive information. For example, a UE may use a CSI prediction model to predict some CSI and apply the predicted CSI to an encoder (e.g., compression) model. In some such embodiments described herein, a UE may receive an indication that an output of the CSI prediction model may not be reported directly to a network side. The indication may be provided, for example, by a report quantity, a link between a first report configuration and a second report configuration, and/or in other manners. Additionally, or alternatively, a UE may be configured to report an output of a CSI prediction model to a network side based, for example, on an indication from the network side. In some embodiments, a UE may determine an amount of processing capability from a specification and/or report an amount of processing capability.

Some additional systems and methods described herein relate to schemes for collecting training data in embodiments where CSI compression (e.g., in a TSF domain) may have a predictive information. For example, in some embodiments, an encoder (e.g., compression) model may be trained with measured target CSI for measurement slots and predicted CSI for prediction slots as input. As another example, in some embodiments, an encoder (e.g., compression) model may be trained with measured target CSI for both measurement slots and predicted slots as input. As a further example, in some embodiments, a prediction model and an encoder (e.g., compression) model may be jointly trained.

An apparatus may include a receiver configured to receive a reference signal using a channel, a transmitter configured to transmit a representation relating to the channel, and a processing circuit configured to determine channel information based on the reference signal, generate, using a model, the representation based on the channel information, and transfer, using the receiver or the transmitter, model information to specify the model. The model information may include an identifier for the model. The model information may include structure information for the model. The model information may include information about a type of input for the model. The model information may include information about a format of input for the model. The model information may include mapping information for mapping channel information to an input of the model. The mapping information may include information for a first subband, and information for a second subband. The mapping information may include information for a first slot, and information for a second slot.

An apparatus may include a receiver configured to receive a reference signal using a channel, a transmitter configured to transmit a representation relating to the channel, and a processing circuit configured to determine channel information based on the reference signal, generate, using a model, the representation based on the channel information, and transfer, using the receiver or the transmitter, capability information for the apparatus relating to the model. The capability information may include information about a model supported by the apparatus. The capability information may include information about a model structure supported by the apparatus. The capability information may include information about an inference operation for the model. The processing circuit may be configured to transfer the capability information using a channel information report configuration. The capability information may include information about a type of collaboration supported by the apparatus. The capability information may include information about a capability of the apparatus to modify the model. The capability information may include information about an amount of time associated with modifying the model.

An apparatus may include a receiver configured to receive a reference signal using a channel, a transmitter configured to transmit a representation relating to the channel, and a processing circuit configured to determine channel information based on the reference signal, generate, using a model, the representation based on the channel information, and transfer, using the receiver or the transmitter, data set information to specify a data set for the model. The data set information may include a type of information in the data set. The data set information may include a format of information in the data set. The data set information may include mapping information for the data set.

An apparatus may include a receiver configured to receive a reference signal using a channel, a transmitter configured to transmit a representation relating to the channel, and a processing circuit configured to determine channel information based on the reference signal, generate, using one or more models, based on the channel information, a prediction relating to the channel, and generate, using the one or more models, based on the prediction, the representation. The processing circuit may be configured to receive a report configuration comprising an indication, and report the representation based on the indication. The indication may include a report quantity. The report configuration may be a first report configuration comprising a link to a second report configuration. The link may include a configuration identifier. The first report configuration may be a prediction configuration, and the second report configuration may be a compression configuration. The processing circuit may be configured to receive a report configuration comprising an indication, and report the prediction based on the indication. The processing circuit may be configured to combine the prediction with the representation to generate a combined report, and report the combined report. The processing circuit may be configured to determine, from a specification, an amount of processing capability. The processing circuit may be configured to report an amount of processing capability of the apparatus.

An apparatus may include a receiver, and a processing circuit configured to perform one or more operations comprising receiving, using the receiver, one of one or more reference signals for a measurement slot for a channel, determining, based on one of the one or more reference signals for the measurement slot, measured channel information, generating, using a first model, based on the measured channel information, predicted channel information for one or more prediction slots for the channel, and collecting, based on one of the one or more reference signals for the measurement slot, training data for a second model. The processing circuit may be configured to perform one or more operations comprising training, using the training data and the predicted channel information, the second model. The training data may be first training data, and the processing circuit may be configured to perform one or more operations comprising receiving, using the receiver, a reference signal for a prediction slot for the channel, and collecting, based on the reference signal for the prediction slot, second training data for the second model. The processing circuit may be configured to perform one or more operations comprising training, using the first training data and the second training data, the second model. The processing circuit may be configured to perform one or more operations comprising jointly training, using the using the training data and the predicted channel information, the first model and the second model. The second model may be a generation model, and the processing circuit may be configured to perform the training based on the measured channel information and an output of a reconstruction model configured to receive an output of the generation model. The processing circuit may be configured to perform the training further based on measured channel information for the prediction slot and the predicted channel information.

BRIEF DESCRIPTION OF THE DRAWINGS

The figures are not necessarily drawn to scale and elements of similar structures or functions are generally represented by like reference numerals or portions thereof for illustrative purposes throughout the figures. The figures are only intended to facilitate the description of the various embodiments described herein. The figures do not describe every aspect of the teachings disclosed herein and do not limit the scope of the claims. To prevent the drawing from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.

Fig. 1 illustrates an embodiment of a wireless communication apparatus according to the disclosure.

Fig. 2 illustrates another embodiment of a wireless communication apparatus according to the disclosure.

Fig. 3 illustrates an embodiment of a two-model training scheme according to the disclosure.

Fig. 4 illustrates an embodiment of a system having a pair of models to provide channel information feedback according to the disclosure.

Fig. 5 illustrates an example embodiment of a system for reporting downlink physical layer information according to the disclosure.

Fig. 6 illustrates an example embodiment of a system for reporting uplink physical layer information according to the disclosure.

Fig. 7 illustrates an example embodiment of a system for reporting downlink physical layer channel state information according to the disclosure.

Fig. 8 illustrates an embodiment of a learning process for a machine learning model according to the disclosure.

Fig. 9 illustrates an example embodiment of a method for joint training of a pair of encoder and decoder models according to the disclosure.

Fig. 10 illustrates an example embodiment of a method for training models with latest shared values according to the disclosure.

Fig. 11 illustrates an example embodiment of a two-model training scheme with pre-processing and post-processing according to the disclosure.

Fig. 12 illustrates an embodiment of a system for using a two-model scheme according to the disclosure.

Fig. 13 illustrates an example embodiment of a user equipment (UE) in accordance with the disclosure.

Fig. 14 illustrates an example embodiment of a base station in accordance with the disclosure.

Fig. 15 illustrates an embodiment of a method for providing physical layer information feedback in accordance with the disclosure.

Fig. 16 illustrates an embodiment of a system having a pair of models to provide channel information feedback according to the disclosure.

Fig. 17 illustrates an example embodiment of a pair of models that may be used for joint compression of channel information and channel quality information in accordance with the disclosure.

Fig. 18 illustrates an embodiment of a system having a pair of models to channel information based on one or more subbands according to the disclosure.

Fig. 19 illustrates an embodiment of a pair of models that may be used for channel quality indicator compression across subbands in accordance with the disclosure.

Fig. 20 illustrates an embodiment of a system having a pair of models to provide channel information compression according to the disclosure.

Fig. 21 illustrates a first embodiment of a pair of models that may be used for implementing a compression scheme in accordance with the disclosure.

Fig. 22 illustrates a second embodiment of a pair of models that may be used for implementing a compression scheme in accordance with the disclosure.

Fig. 23 illustrates a third embodiment of a pair of models that may be used for implementing a compression scheme in accordance with the disclosure.

Fig. 24 illustrates an embodiment of a communication system using channel restriction information and artificial intelligence and/or machine learning to provide channel information feedback according to the disclosure.

Fig. 25 illustrates an example embodiment of a communication system in which a decoder model is shared with a UE that is configured with a restricted sub-space according to the disclosure.

Fig. 26 illustrates an example embodiment of a communication system in which a decoder model is not shared with a UE that is configured with a restricted sub-space according to the disclosure.

Fig. 27 illustrates an embodiment of a system using restricted sub-space information as input to a model according to the disclosure.

Fig. 28 illustrates an embodiment of a communication system having data collection functionality for one or more models that may be used to provide channel information feedback according to the disclosure.

Fig. 29 illustrates an example embodiment of a communication system having data collection functionality for one or more models that may be used to provide channel information feedback according to the disclosure.

Fig. 30 illustrates an example embodiment of a communication system having data collection functionality for one or more models that may be used to provide channel information feedback for an NCJT scheme according to the disclosure.

Fig. 31 illustrates an embodiment of a communication system having model training collaboration functionality according to the disclosure.

Fig. 32 illustrates an example embodiment of a communication system having model training collaboration functionality according to the disclosure.

Fig. 33 illustrates an embodiment of a scheme for mapping channel information and/or reconstructed channel information to model inputs and/or outputs according to the disclosure.

Fig. 34 illustrates an embodiment of channel information processing time constraints for a communication system according to the disclosure.

Fig. 35 illustrates an embodiment of a timeline for an aperiodic CSI report based on a periodic reference signal according to the disclosure.

Fig. 36 illustrates an embodiment of a timeline of CPU occupancy for a P/SP CSI report based on a periodic reference signal according to the disclosure.

Fig. 37 illustrates an embodiment of a timeline of CPU occupancy for an aperiodic CSI report based on a periodic reference signal according to the disclosure.

Fig. 38 illustrates an embodiment of a communication system having functionality relating to channel information compression with predictive information according to the disclosure.

Fig. 39 illustrates an example embodiment of a communication system having functionality relating to channel information compression with predictive information according to the disclosure.

FIG. 40 is a block diagram of an electronic device in a network environment, according to an embodiment of the disclosure.

FIG. 41 shows a system including a UE and a base station in communication with each other, according to an embodiment of the disclosure.

DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components, and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

Overview

In some wireless communication systems, a transmitting device may rely on a receiving device to provide feedback information on channel conditions to enable the transmitting device to transmit more effectively to the receiving device through the channel. For example, in a 5G New Radio (NR) system, a base station (e.g., a gNodeB or gNB) may send a reference signal to a user equipment (UE) through a downlink (DL) channel. The UE may measure the reference signal to determine channel conditions on the DL channel. The UE may then send feedback information (e.g., channel state information (CSI)) indicating the channel conditions on the DL channel to the base station through an uplink (UL) channel. The base station may use the feedback information to improve the manner in which it transmits to the UE through the DL channel, for example, through the use of beamforming.

Sending feedback information on channel conditions, however, may consume a relatively large amount of resources as overhead. To reduce the amount of data used to transmit feedback information, some wireless communication systems may use one or more types of codebooks to enable a receiving device to send implicit and/or explicit channel condition feedback to a transmitting device. For example, in 5G NR systems, a Type-I codebook may be used to provide implicit CSI feedback to a gNB in the form of an index that may point to a predefined PMI selected by the UE based on the DL channel conditions. The gNB may then use the PMI for beamforming in the DL channel. As another example, a Type-II codebook may be used to provide explicit CSI feedback in which a UE may derive a PMI that may be fed back to the gNB which may use the PMI for beamforming in the DL channel. The use of a Type-I codebook, however, may not provide CSI feedback with adequate accuracy. Moreover, the use of a Type-II codebook may still involve the transmission of a significant amount of overhead data on a UL channel.

A feedback scheme in accordance with the disclosure may use artificial intelligence (AI), machine learning (ML), deep learning, and/or the like (any or all of which may be referred to individually and/or collectively as machine learning or ML) to generate a representation of physical layer information for a wireless communication system. For example, in some embodiments, a feedback scheme may use an ML model to generate a representation of feedback information for a channel condition (e.g., a representation of a channel matrix, a precoding matrix, and/or the like). The representation may be a compressed, encoded, or otherwise modified form of the feedback information which, depending on the implementation details, may reduce the resources involved in transmitting the feedback information between apparatus.

A feedback scheme in accordance with the disclosure may also use machine learning to reconstruct the physical layer information from the representation. For example, in some embodiments, a feedback scheme may use an ML model to reconstruct feedback information, or an approximation of the feedback information, from a representation of the feedback information for a channel condition. For convenience, an ML model may be referred to simply as a model.

A model that generates a representation of an input (e.g., physical layer information such as feedback information for a channel condition) may be referred to as a generation model. A model that reconstructs an input, or an approximation of the input, from a representation of the input may be referred to as a reconstruction model. An output of a reconstruction model may be referred to as a reconstructed input. Thus, a reconstructed input may be the input applied to the generation model, or an approximation, estimate, prediction, etc., of the input applied to the generation model. A generation model and a corresponding reconstruction model may be referred to collectively as a pair of ML models or a pair of models. In some embodiments, a generation model may be implemented as an encoder model, and/or a reconstruction model may be implemented as a decoder model. Thus, an encoder model and a decoder model may also be referred to as a pair of ML models or a pair of models.

Any model may be referred to as a first model, a second model, Model A, Model B, and/or the like for purposes of distinguishing the model from one or more other models, and the label used for the model is not intended to imply the type of model unless otherwise apparent from context. For instance, in the context of a pair of models, if Model A refers to a generation model, Model B may refer to a reconstruction model.

A node may refer to a base station, a UE, or any other apparatus that may use one or more ML models as disclosed herein. Additional examples of nodes may include a UE side server, a based station side server (e.g., a gNB side server), an eNodeB, a master node, a secondary node, and/or the like, whether logical nodes, physical nodes, or a combination thereof. Any node may be referred to as a first node, a second node, Node A, Node B, and/or the like for purposes of distinguishing the node from one or more other nodes, and the label used for the node is not intended to imply the type of node unless otherwise apparent from context. For example, in some embodiments, a first node may refer to a UE and a second node may refer to a base station. In some other embodiments, however, a first node may refer to a first UE and a second node may refer to a second UE configured for sidelink communications with the first UE.

In some example embodiments, a first node may use a first model (e.g., a generation model) to encode a channel matrix, a precoding matrix, and/or the like, to generate a feature vector that may be transmitted to a second node. A second node may use a second model (e.g., a reconstruction model) to decode the feature vector to reconstruct the original information (e.g., the channel matrix, precoding matrix, and/or the like) or an approximation of the original information.

Some embodiments in accordance with the disclosure may implement a two-model training scheme in which models may be trained in pairs. For example, a reconstruction model may be used to train a generation model, and/or a generation model may be used to train a reconstruction model. In some example implementations, a pair of models may be configured to implement an auto-encoder in which an encoder model (e.g., for a first node) may be trained with a decoder model (e.g., for a second node).

In some embodiments, a first model (e.g., a generation model) that may be used for inference by a first node may be trained using a second model (e.g., a reconstruction model) that may actually be used for inference by a second node. The training may be performed by the first node, the second node, and/or any other apparatus, for example, by a server that may train the models (e.g., offline) and transfer one or more of the trained models to one or more of the nodes to use for inference.

Alternatively, or additionally, the first model may be trained using a second model that may provide some amount of matching between the first model and the second model, even if the second model is not the actual model that may be used for inference by the second node. Alternatively, or additionally, the first model may be trained using a reference model for the second model. Alternatively, or additionally, the first model may be trained using a second model that may be configured with values of weights, hyperparameters, and/or the like that may be initialized to predetermined values, randomized values, and/or the like.

In some embodiments, a pair of models may be trained simultaneously, sequentially (e.g., alternating between training a first model while freezing a second model, then training the second model while freezing the first model), and/or the like using the same or different training data sets.

In some embodiments, a node may use a quantizer to convert a representation of physical layer information to a form that may be more readily transmitted through a communication channel. For example, a quantizer may convert a real number (e.g., an integer) representation of physical layer information to a binary bit stream that may then be applied to a polar encoder or other apparatus for transmission through a physical uplink or downlink channel. Similarly, a node may use a dequantizer to convert a bit stream to a representation of physical layer information that may be used to reconstruct the physical layer information. In some embodiments, a quantizer or dequantizer may be considered part of an ML model. For example, a generation model may include an encoder and a corresponding quantizer, and/or a reconstruction model may include a corresponding dequantizer and decoder.

Some embodiments in accordance with the disclosure may implement one or more frameworks for training models and/or transferring models between nodes. For example, in a first type of framework, a first node (Node A) may jointly train a pair of models (Model A and Model B). Node A may use the trained Model A for inference and transfer the trained Model B to a second node (Node B) which may use the trained Model B for inference. In a variation of the first type of framework, Node A may transfer the trained Model A to Node B, and Node B may use the trained Model A to train its own Model B to use for inference.

In a second type of framework, a reference model may be established as Model A for a Node A, and a Node B may then train a Model B using the reference model as Model A (e.g., assuming Node A will use the reference model as Model A for inference). Node A may then use the reference model as Model A without further training, or Node A may proceed to train the reference model to use as Model A. In some embodiments, multiple reference models may be established for Model A, and Node B may train one or more versions of Model B corresponding to one or more of the reference models for Model A. In embodiments with multiple reference models for Model A, Node B may train one or more versions of Model B based on the multiple reference models for Model A, and Node B may indicate to Node A which version of Model B it has selected for use, which version or versions of Model B provide(s) best performance, and/or the like. Based on the indication from Node B, Node A may proceed with the reference model corresponding to the Model B indicated by Node B, or Node A may select any other model to use as Model A.

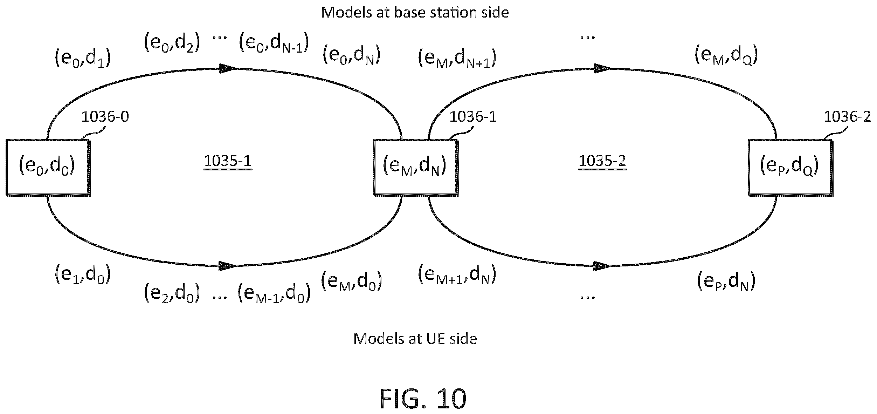

In a third type of framework, a Node A may begin with a Model A that may be in any initial state, for example, pre-trained (e.g., trained offline), untrained but configured with initial values, and/or the like. A Node B may begin with a Model B that may also be in any initial state. In some embodiments, before training their own models, Node A and/or Node B may have models that are matched to each other (e.g., trained together). One or both nodes may train their respective models for a period of time, then one or both nodes may share trained model values and/or trained models with the other node. An example embodiment is described in more detail below with respect to Fig. 10 where a first node (e.g., a UE) and a second node (e.g., a base station) may have a pair of models ($e\_0, d\_0$), where $e\_0$ may be the encoder model in an initial state at the UE and $d\_0$ may be the decoder model in an initial state at the base station. In a variation of the third type of framework, one or both nodes may train their respective models for one or more additional periods of time, and one or both nodes may share trained model values and/or trained models with the other node, for example, at the end of each period of time, at the end of alternating periods of time, and/or the like.

In any of the frameworks disclosed herein, when a model is transferred to or from a node, a corresponding quantizer or dequantizer may be transferred along with the model.

In some embodiments, training data may be collected based on a resource window (e.g., a window of time and/or frequency resources). For example, a node may be configured to collect training data (e.g., channel estimates) for a specific range of frequencies (e.g., subcarriers, subbands, etc.) and a specific range of times (e.g., symbols, slots, frames, etc.). The size of a window may be determined, for example, based on an amount of training data a node may be able to store in memory. The collected training data may be used for online training by one or more nodes or saved for offline training.

In some embodiments, pre-processing and/or post-processing may enable a pair of models to operate more effectively. For example, domain knowledge (e.g., frequency domain knowledge) of one or more inputs may be used to perform a pre-processing operation on at least a portion of one or more inputs to generate one or more transformed inputs. The one or more transformed inputs may be applied to a generation model to generate a representation of the one or more transformed inputs. The representation of the one or more transformed inputs may be applied to a reconstruction model that may generate a reconstructed transformed input (e.g., the one or more transformed inputs, or an approximation thereof). Domain knowledge may also be used to perform a post-processing operation (e.g., an inverse of the pre-processing operation) on the reconstructed transformed input to recover the original one or more inputs or an approximation thereof. Depending on the implementation details, transforming inputs and/or outputs (e.g., based on domain knowledge) may exploit one or more correlations between elements of the one or more inputs, thereby reducing the processing burden, memory usage, power consumption, and/or the like, of the generation model and/or the reconstruction model.

In some embodiments, a node may be provided with processing time for a model. For example, if a node is configured to perform online training of a model (e.g., using a training data set that is provided to the node or collected by the node), the node may be expected to update the model within a predetermined number of symbols or other measure of time.

Some embodiments in accordance with the disclosure may implement a scheme in which multiple pairs of models may be trained, deployed, and/or activated for use by one or more nodes (e.g., by a pair of nodes). For example, different pairs of trained models may be activated to handle different channel environments, different matrix dimensions (e.g., for channel matrices, precoding matrices, etc.), and/or the like. In some embodiments, a pair of models may be activated by signaling (e.g., RRC signaling, MAC-CE signaling, etc.). In some embodiments, a first node (e.g., a gNB) may also indicate to a second node (e.g., a UE) to switch or deactivate a current active model, for example, via RRC, MAC CE or dynamic signaling. A pair of models may be activated to train one or more of the models, use one or more of the models for inference, and/or the like.

Some embodiments in accordance with the disclosure may implement one or more formats for a representation of feedback information that may be generated by a generation model at a first node and transmitted to a second node for reconstruction. For example, a format for a representation of feedback information may be established as a type of uplink control information (UCI). A format may involve one or more types of coding (e.g., polar coding, low density parity check (LDPC) coding, and/or the like) which may depend, for example, on a type of physical channel used to transmit the UCI.

In some embodiments, CSI compression performance may be improved using AI and/or ML, for example, by exploiting one or more correlations in the time, frequency and/or space domains, and/or by defining a training data set across time, frequency, and/or space.

Some embodiments in accordance with the disclosure may enable a first node (e.g., a UE) to determine precoding information that may be used by a second node (e.g., a base station). The precoding information may be used, for example, to determine channel quality information for a channel with which the precoding information may be used. Depending on the implementation details, enabling a first node to determine precoding information used by a second node may reduce or eliminate mismatch between the precoding information and channel quality information that may be determined based on the precoding information. For example, a base station may share a decoder model with a UE which may use the model to determine a precoding matrix used by the base station. As another example, a UE may train a decoder (e.g., a reference decoder as described below) to reconstruct a precoding matrix used by the base station.

In some embodiments in accordance with the disclosure, a pair of encoder and decoder models may be trained to jointly compress channel information (e.g., a channel matrix, a precoding matrix, and/or the like) and channel quality information that may be determined based on the channel information (e.g., CQI) to reduce or eliminate mismatch between the channel information and the channel quality information. For example, an encoder and decoder may be trained with a training data set that may include precoding information that may match corresponding channel quality information. Depending on the implementation details, this may reduce or eliminate mismatch between the precoding information (e.g., a precoding matrix) and the channel quality information (e.g., CQI) that may be determined based on the precoding information.

Some embodiments in accordance with the disclosure may use one or more machine learning models to compress channel information across one or more subbands. For example, a first node may use an encoder model to generate a representation of channel information for multiple subbands by combining (e.g., concatenating) the channel information (e.g., channel quality information) for the multiple subbands into a vector and compressing the vector. A second node may use a decoder to reconstruct the channel information for the multiple subbands from the representation. Depending on the implementation details, compressing channel information across one or more subbands may improve performance, reduce complexity, and/or the like.

Some embodiments in accordance with the disclosure may use one or more decoder models to implement one or more compression schemes for generating a representation of, and/or reporting, channel information which, in some implementations, may include precoding information. Depending on the implementation details, such embodiments may mimic a codebook scheme while providing improved performance and/or flexibility, reduced complexity, and/or the like. In some example embodiments, a pair of machine learning models (e.g., an encoder and a decoder) may be configured and/or trained to generate precoding information from channel information. For example, a first node (e.g., a UE) may apply channel information (e.g., one or more reference signal measurements) to an encoder which may generate, using a compression scheme, a representation (e.g., a codeword) based on the channel information. A second node (e.g., a base station) may apply the representation to a decoder that may construct precoding information (e.g., a precoding matrix) based on the representation. In other example embodiments, a pair of machine learning models may receive any type of information such as channel state information (e.g., channel quality information), precoding information (e.g., a precoding matrix), rank information, and/or the like, as input, apply one or more compression schemes, and provide any type of information that may be used to determine precoding information as output.

Some embodiments that may use one or more decoder models to implement one or more compression schemes, may provide spatial compression, frequency compression, a combination of spatial compression and frequency compression, and/or the like. Depending on the implementation details, a compression scheme may provide separate compression for separate subbands, combined compression for separate subbands, and/or a combination thereof.

For example, a first node (e.g., a UE) may use one or more encoders to spatially compress channel information for one or more subbands to generate one or more representations (e.g., separate representations) of the channel information for the one or more subbands. A second node (e.g., a base station) may use one or more decoders to recover the channel information for the one or more subbands (e.g., using the one or more separate representations).

As another example, a first node may use one or more spatial encoders and one or more frequency encoders to provide separate spatial compression and combined frequency compression for channel information for one or more subbands to generate one or more representations (e.g., a single representation) of the channel information for the one or more subbands. A second node may use one or more spatial decoders and one or more frequency decoders to recover, from the one or more representations, the channel information for the one or more subbands using separate spatial decompression and combined frequency decompression.

As a further example, a first node may use a joint spatial and frequency encoder to provide combined spatial and frequency compression of channel information for one or more subbands to generate a combined representation of the channel information for the one or more subbands. A second node may use a joint spatial and frequency decoder to recover, from the combined representation, the channel information for the one or more subbands.

Thus, in some embodiments, a decoder model may refer to one or more decoder models, an encoder model may refer to one or more encoder models, and a pair of models may refer to one or more decoder models and one or more encoder models.

Depending on the implementation details, embodiments that use one or more decoder models to generate precoding information, and/or other information that may be used to determine precoding information, may provide improved performance and/or flexibility, reduced complexity, and/or the like.

This disclosure encompasses numerous inventive principles relating to artificial intelligence and machine learning for a physical layer of a communication system. These principles may have independent utility and may be embodied individually, and not every embodiment may utilize every principle. Moreover, the principles may also be embodied in various combinations, some of which may amplify the benefits of the individual principles in a synergistic manner.

For purposes of illustration, some embodiments may be described in the context of some specific implementation details and/or applications such as compressing, decompressing, and/or sending channel feedback information between one or more UEs, base stations (e.g., gNBs), and/or the like, in 5G NR systems. However, the inventive principles are not limited to these details and/or applications and may be applied in any other context in which physical layer information may be processed and/or sent between wireless apparatus regardless of whether any of the apparatus may be base stations, UEs, peer devices, and/or the like, and regardless of whether a channel may be a UL channel, a DL channel, a peer channel, and/or the like. Moreover, the inventive principles may be applied to any type of wireless communication systems that may process and/or exchange physical layer information such as other types of cellular networks (e.g., 4G LTE, 6G, and/or any future generations of cellular networks), Bluetooth, Wi-Fi, and/or the like.

Machine Learning Models for Physical Layer

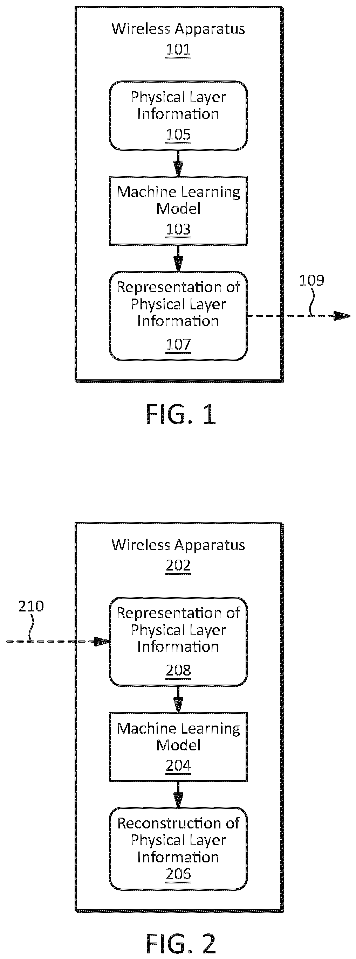

Fig. 1 illustrates an embodiment of a wireless communication apparatus according to the disclosure. The apparatus 101 may include a machine learning model 103 that may receive physical layer information 105 as an input and generate a representation 107 of the physical layer information as an output. In some implementations, the apparatus 101 may transmit the representation 107 of the physical layer information to one or more other apparatus as shown by arrow 109.

The representation 107 of the physical layer information may be a compressed, encoded, encrypted, mapped, or otherwise modified form of the physical layer information 105. Depending on the implementation details, the modification of the physical layer information 105 by the machine learning model 103 to generate the representation 107 of the physical layer information may reduce the resources involved in transmitting the physical layer information 105 between apparatus.

The machine learning model 103 may be implemented with one or more of any types of AI and/or ML models including neural network (e.g., deep neural network), linear regression, logistic regression, decision tree, linear discriminant analysis, naive Bayes, support vector machine, learning vector quantization, and/or the like. The machine learning model 103 may be implemented, for example, with a generation model.

The physical layer information 105 may include any information relating to the operation of a physical layer of a wireless communication apparatus. For example, the physical layer information 105 may include information (e.g., status information, precoding information, etc.) relating to one or more physical layer channels, signals, beams, and/or the like. Examples of physical layer channels may include one or more of a physical broadcast channel (PBCH), physical random access channel (PRACH), physical downlink control channel (PDCCH), physical downlink shared channel (PDSCH), physical uplink shared channel (PUSCH), physical uplink control channel (PUCCH), physical sidelink shared channel (PSSCH), physical sidelink control channel (PSCCH), physical sidelink feedback channel (PSFCH), and/or the like. Examples of physical layer signals may include one or more of a primary synchronization signal (PSS), secondary synchronization signal (SSS), channel state information reference signal (CSI-RS), tracking reference signal (TRS), sounding reference signal (SRS), and/or the like.

Fig. 2 illustrates another embodiment of a wireless communication apparatus according to the disclosure. The apparatus 202 may include a machine learning model 204 that may receive a representation 208 of physical layer information as an input and generate, as an output, a reconstruction 206 of physical layer information on which the representation 208 may be based. In some implementations, the apparatus 202 may receive the representation 208 of the physical layer information from one or more other apparatus as shown by arrow 210.

The reconstruction 206 (which may be referred to as a reconstructed input) may be the physical layer information on which the representation 208 may be based, or an approximation, estimate, prediction, etc., of the physical layer information on which the representation 208 may be based. The reconstruction 206 may be a decompressed, decoded, decrypted, reverse-mapped, or otherwise modified form of the physical layer information on which the representation 208 may be based.

The machine learning model 204 may be implemented with one or more of any types of AI and/or ML models including neural network (e.g., deep neural network), linear regression, logistic regression, decision tree, linear discriminant analysis, naive Bayes, support vector machine, learning vector quantization, and/or the like. The machine learning model 204 may be implemented, for example, with a reconstruction model.

The reconstructed physical layer information 206 may include any information relating to the operation of a physical layer of a wireless communication apparatus, for example, one or more channels, signals, and/or the like as described above with respect to the embodiment illustrated in Fig. 1.

Although not limited to any specific uses, the wireless communication apparatus 101 and 202 illustrated in Fig. 1 and Fig. 2, respectively, may be used together to facilitate the transmission of physical layer information from between the apparatus. For example, in some embodiments, apparatus 101 may be implemented as a UE in which the model 103 is implemented as a generation model, and apparatus 202 may be implemented as a base station in which the model 204 may be implemented as a reconstruction model. In such an embodiment, the generation model 103 may generate the representation 107 by compressing physical layer information 105 (e.g., relating to a DL channel from the base station to the UE). The UE may transmit the representation 107 to the base station (e.g., using a UL channel). The base station may input the representation (indicated as 208) to the reconstruction model 204 which may generate reconstructed physical layer information 206. The base station may use the reconstructed physical layer information 206, for example, to facilitate DL transmissions from the base station to the UE. Depending on the implementation details, transmitting the physical layer information 105 in the form of a compressed representation 107 may reduce the amount of UL resources associated with transmitting the physical layer information 105.

Two-Model Training

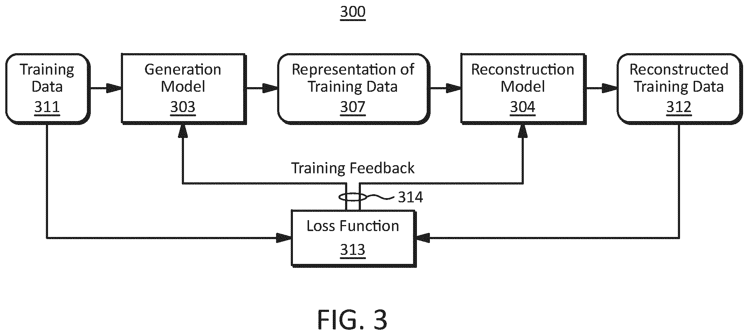

Fig. 3 illustrates an embodiment of a two-model training scheme according to the disclosure. The embodiment 300 illustrated in Fig. 3 may be used, for example, with one or more of the models illustrated in Fig. 1 and Fig. 2, or any other embodiments disclosed herein.

Referring to Fig. 3, training data 311 may be applied to a generation model 303 which may generate a representation 307 of the training data. A reconstruction model 304 may generate a reconstruction 312 of the training data based on the representation 307 of the training data. In some embodiments, the generation model 303 may include a quantizer to convert the representation 307 to a quantized form (e.g., a bit stream) that may be transmitted through a communication channel. Similarly, in some embodiments, the reconstruction model 304 may include a dequantizer that may convert a quantized representation 307 (e.g., a bit stream) to a form that may be used to generate the reconstructed training data 312.

The generation model 303 and reconstruction model 304 may be trained as a pair, for example, by using a loss function 313 to provide training feedback 314 to the generation model 303 and/or the reconstruction model 304. The training feedback 314 may be implemented, for example, using gradient descent, backpropagation, and/or the like. In embodiments in which one or both of the generation model 303 and reconstruction model 304 may be implemented with one or more neural networks, the training feedback 314 may update one or more values of weights, hyperparameters, and/or the like, in the generation model 303 and/or the reconstruction model 304.

In some embodiments, the loss function 313 (which may be implemented, for example, at least partially with a reconstruction loss) may operate to train the generation model 303 and reconstruction model 304 to generate the reconstructed training data 312 to be close to the original training data 311. This may be accomplished, for example, by reducing or minimizing a loss output of the loss function 313.

For example, if the training data 311 is represented as $x$, and the reconstructed training data 312 is represented as $\hat{x}$, the generation model 303 may be represented by a function $f(x)$, and the reconstruction model 304 may be represented by a function $g(f(x))$, and thus, $\hat{x}=g(f(x))$. The loss function 313 may be represented as $L(x, \hat{x})$. Thus, in some embodiments, training the pair of models 303 and 304 may involve reducing or minimizing L through the use of training feedback 314.

Although not limited to any specific type of representation 307 of the training data, in some embodiments, the pair of models 303 and 304 may seek to reduce the dimensionality of the representation 307 of the training data relative to the original training data 311. For example, the generation model 303 may be trained to generate a feature vector that may identify or separate one or more features (e.g., latent features) of the training data that may reduce the overhead associated with storing and/or transmitting the representation 307. The reconstruction model 304 may similarly be trained to reconstruct the original training data 311, or an approximation thereof, based on the representation 307.

Once trained, the generation model 303 and/or reconstruction model 304 may be used for inference, for example, in one or both of the wireless communication apparatus 101 and 202 illustrated in Fig. 1 and Fig. 2, respectively, or any other embodiments disclosed herein. Moreover, the two-model training scheme described with respect to Fig. 3 may be used with one or more frameworks for training models and/or transferring models between wireless apparatus as disclosed herein. The training described with respect to Fig. 3 may be performed anywhere, for example, at the wireless apparatus 101, at the wireless apparatus 202, at another location (e.g., at a server remote from both apparatus 101 and 202), or at a combination of any such locations. Moreover, once trained, one or both of the generation model 303 and/or reconstruction model 304 may be transferred to another location for use for inference. In some embodiments, once trained, one of the models may be discarded and the remaining model may be used, for example, as a pair with a separately trained model.

Machine Learning Models for Channel Information Feedback

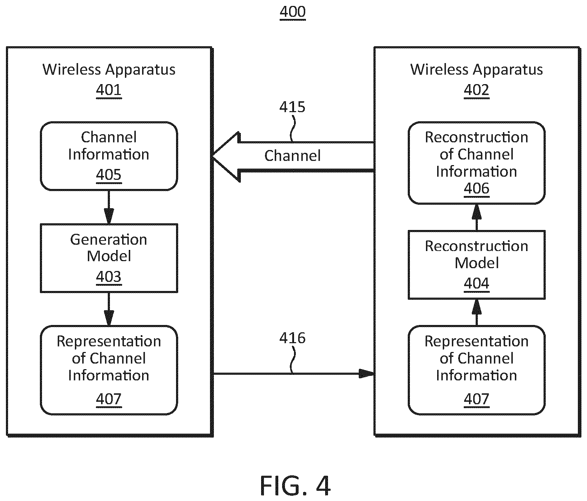

Fig. 4 illustrates an embodiment of a system having a pair of models to provide channel information feedback according to the disclosure. The system 400 illustrated in Fig. 4 may be used to implement, or may be implemented with, any of the apparatus, models, training schemes, and/or the like disclosed herein, including those illustrated in Fig. 1, Fig. 2, and Fig. 3.

Referring to Fig. 4, the system 400 may include a first wireless apparatus 401 and a second wireless apparatus 402. The first wireless apparatus 401 may be configured to receive transmissions from second wireless apparatus 402 through a channel 415. To improve the effectiveness (e.g., efficiency, reliability, bandwidth, etc.) of the transmissions through the channel 415, the first wireless apparatus 401 may provide feedback to the second wireless apparatus 402 in the form of channel information 405 that may be obtained, for example, by measuring one or more signals (e.g., reference signals) transmitted by the second wireless apparatus 402 through the channel 415.

The first wireless apparatus 401 may use a first machine learning model 403, which in this example may be implemented as a generation model, to generate a representation 407 of the channel information 405. The first wireless apparatus 401 may transmit the representation 407 to the second wireless apparatus 402, for example, using another channel, signal, and/or the like 416. The representation 407 may be a compressed, encoded, encrypted, mapped, or otherwise modified form of the channel information 405. Depending on the implementation details, the modification of the channel information 405 by the machine learning model 403 to generate the representation 407 may reduce the resources involved in transmitting the channel information 405 to the second wireless apparatus 402.

The second wireless apparatus 402 may apply the representation 407 of the channel information to a second machine learning model 404 which in this example may be implemented as a reconstruction model. The reconstruction model 404 may generate a reconstruction 406 of the channel information 405. The reconstruction 406 (which may be referred to as a reconstructed input) may be the channel information 405 on which the representation 407 may be based, or an approximation, estimate, prediction, etc., of the channel information 405. The reconstruction 406 may be a decompressed, decoded, decrypted, reverse-mapped, or otherwise modified form of the channel information 405. The second wireless apparatus 402 may use the channel information 405 to improve the manner in which it transmits to the first wireless apparatus 401 through the channel 415.

The system 400 illustrated in Fig. 4 is not limited to any specific apparatus (e.g., UEs, base stations, peer devices, etc.), applications (e.g., 4G, 5G, 6G, Wi-Fi, Bluetooth, etc.) and/or implementation details. However, for purposes of illustrating some of the inventive principles, some example embodiments may be described in the context of a 5G NR system in which a UE may receive different DL signals from a gNB.

Uplink and Downlink Transmissions

In an NR system, a UE may receive DL transmissions that include a variety of information from a gNB. For example, a UE may receive user data from the gNB in a specific configuration of time and frequency resources referred to as a Physical Downlink Shared Channel (PDSCH). A Multiple Access (MAC) layer at the gNB may provide user data that is intended to be delivered to the corresponding MAC layer at the UE side. The Physical (PHY) layer of the UE may receive the physical signal received on the PDSCH and apply it as an input to a PDSCH processing chain, the output of which may be fed as an input to the MAC layer at the UE. Similarly, the UE may receive control data from the gNB using a Physical Downlink Control Channel (PDCCH). The control data may be referred to as Downlink Control Information (DCI) and may be converted to a PDCCH signal through a PDCCH processing chain on the gNB side.

A UE may send UL signals to the gNB to convey user data and control information using a Physical Uplink Shared Channel (PUSCH) and a Physical Uplink Control Channel (PUCCH), respectively. The PUSCH may be used by the UE MAC layer to deliver data to the gNB. The PUCCH may be used to convey control information, which may be referred to as Uplink Control Information (UCI), which may be converted to PUCCH signals through a PUCCH processing chain at the UE side.

Channel State Information

In an NR system, a UE may include a Channel State Information (CSI) generator that may calculate a channel quality indicator (CQI), a precoding matrix indicator (PMI), a CSI reference signal resource indicator (CRI), and/or a rank indication (RI) any or all of which may be reported to one or more gNBs serving the UE. A CQI may be associated with a modulation and coding scheme (MCS) for adaptive modulation and coding and/or frequency selective resource allocation, a PMI may be used for a channel-dependent closed-loop multiple-input multiple-output system, and an RI may correspond to the number of useful transmission layers.

In an NR system, CSI generation may be performed based on a CSI reference signal (CSI-RS) transmitted by the gNB. A UE may use the CSI-RS to measure downlink channel conditions and generate CSI, for example, by performing a channel estimation and/or a noise variance estimation based on measurements of the CSI-RS signal.

In an NR system, CSI may be reported to a serving gNB using a Type-I codebook which may provide implicit CSI feedback to a gNB in the form of an index that may point to a predefined PMI. Alternatively, or additionally, CSI may be reported to a serving gNB using a Type-II codebook which may provide explicit CSI feedback in which a UE may determine one or more dominant eigenvectors or singular vectors based on DL channel conditions. The UE may then use the dominant eigenvectors or singular vectors to derive a PMI that may be fed back to the gNB which may use the PMI for beamforming in the DL channel.

The use of codebooks may provide adequate performance, for example, in embodiments with a limited number of antenna ports and/or users. However, in systems with larger numbers of antenna ports and/or users (e.g., multiple-input multiple-output (MIMO) systems), and particularly with the use of frequency division duplexing (FDD), the relatively low resolution of a Type-I codebook may not provide CSI feedback with adequate accuracy. Moreover, the use of a Type-II codebook may still involve the transmission of a significant amount of overhead data on a UL channel.

Depending on the implementation details, some embodiments of channel information feedback schemes based on machine learning according to the disclosure may enable a UE to send full CSI information to a gNB while reducing the overhead associated with the UL transmission to the gNB. Moreover, the inventive principles are not limited to a UE sending CSI to a gNB but may be applied to any situation in which a first apparatus may send channel information feedback to a second apparatus (e.g., reporting channel conditions for uplink channels from a UE to a gNB, reporting channel conditions for sidelink channels between UEs, and/or the like).

Example Embodiments

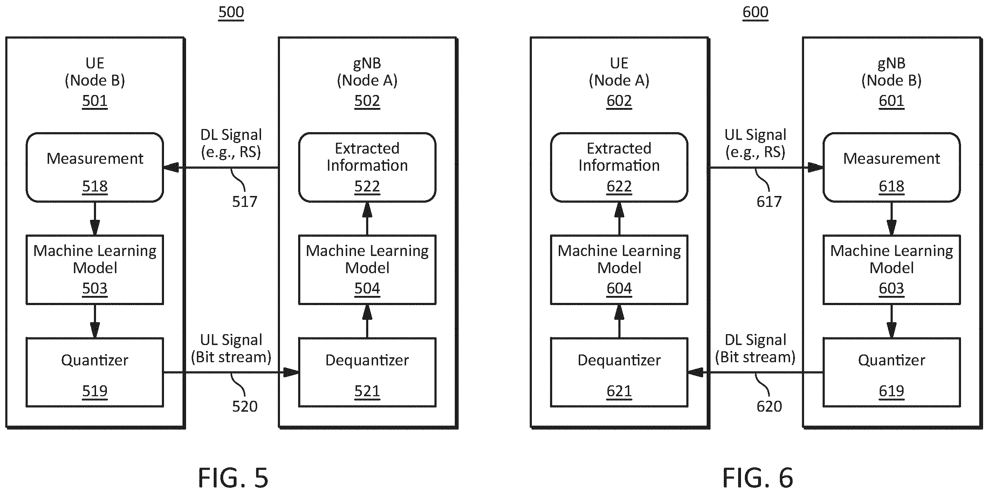

Fig. 5 illustrates an example embodiment of a system for reporting downlink physical layer information according to the disclosure. The system 500 may include a UE 501 (which may be designated as Node B) and a gNB 502 (which may be designated as Node A). The gNB 502 may send a transmission of a DL signal 517 (e.g., a reference signal (RS) transmission) to the UE 501 which may extract a measurement 518 from the transmission. The UE 501 may include a model 503 that may be configured, for example, as an encoder to encode the measurement 518 into a feature vector relating to the DL physical layer. The encoded measurement may then be quantized by a quantizer 519 and transmitted back to the gNB 502 as a UL signal 520 (e.g., a bitstream). In some embodiments, the description of a model at a node may also include a quantizer and/or dequantizer description, for example, a function that may map channel information (e.g., a real CSI codeword) at the output of an encoder model to quantized values or a bit stream, and vice versa at a decoder model at the other node. The gNB 502 may apply the received UL signal 520 to a dequantizer 521 to generate an equivalent feature vector which may be fed to a model 504 to extract information 522 (e.g., necessary or optional information) relating to the DL physical layer.

Fig. 6 illustrates an example embodiment of a system for reporting uplink physical layer information according to the disclosure. In some aspects, the system 600 illustrated in Fig. 6 may be similar to the system 500 illustrated in Fig. 5, but the system 600 may be configured to report uplink physical layer information instead of downlink physical layer information.

Specifically, the system 600 may include a gNB 601 (which may be designated as Node B) and a UE 602 (which may be designated as Node A). The UE 602 may send a transmission of a UL signal 617 (e.g., a reference signal (RS) transmission) to the gNB 601 which may extract a measurement 618 from the transmission. The gNB 601 may include a model 603 that may be configured, for example, as an encoder to encode the measurement 618 into a feature vector relating to the UL physical layer. The encoded measurement may then be quantized by a quantizer 619 and transmitted back to the UE 602 as a DL signal 620 (e.g., a bitstream). The UE 602 may apply the received DL signal 620 to a dequantizer 621 to generate an equivalent feature vector which may be fed to a model 604 to extract information 622 (e.g., necessary or optional information) relating to the UL physical layer.

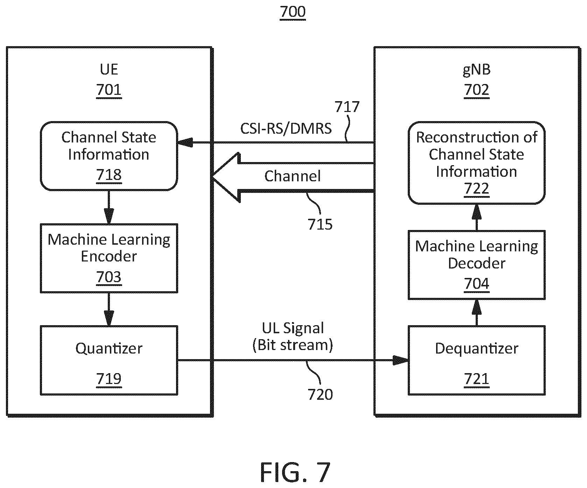

Fig. 7 illustrates an example embodiment of a system for reporting downlink physical layer channel state information according to the disclosure. Depending on the implementation details, the system 700 illustrated in Fig. 7 may enable a gNB or other base station to retrieve full CSI information from a UE (in contrast, for example, to a codebook based pointer, precoding matrix indicator, and/or the like) while using ML models to compress the CSI (e.g., into a relatively low number of bits), thereby reducing the uplink resource overhead involved in sending the CSI.

The system 700 may include a UE 701 and a gNB 702. The gNB 702 may transmit a DL reference signal 717 such as a CSI-RS or demodulation reference signal (DMRS) that may enable the UE 701 to determine CSI 718 for a DL channel 715. The UE 701 may include an ML model 703 that may be configured as an encoder to encode the CSI 718 into a feature vector. The UE 701 may also include a quantizer 719 that may quantize the feature vector into a stream of bits that may be transmitted to the gNB 702 using a UL signal 720. The gNB 702 may include a dequantizer 721 that may reconstruct the feature vector from the stream of bits. The feature vector may then be fed into an ML model 704 that may be configured as a decoder to reconstruct an estimate 722 of the CSI 718.

In some embodiments, a performance metric $f(H, \hat{H})$ may be used to evaluate the accuracy of the design, configuration, and/or training of the encoder model 703, decoder model 704, quantizer 719, and/or dequantizer 721. For example, the performance metric $f(H, \hat{H})$ may be implemented as a measure of the error between channel estimates as follows:

$$f(H, \hat{H}) = \|H - \hat{H}\|^2 / \|H\|^2 \qquad \text{(Eq. 1)}$$

where $H$ and $\hat{H}$ may represent the channel estimates (e.g., CSI) at the UE 701 and gNB 702, respectively. Such performance metrics may be useful, for example, to evaluate the accuracy of channel state information extracted by the gNB 702.

Additionally, or alternatively, the system 700 may be configured to enable the UE 701 to use the DL reference signal 717 to determine a precoding matrix based on the current channel conditions. The precoding matrix may then be encoded into a feature by encoder model 703, quantized by quantizer 719, and transmitted to the gNB 702 using the UL signal 720. At the gNB 702, the dequantizer 721 may recover the feature vector which may be applied to the decoder model 704 to reconstruct an estimate of the precoding matrix. For example, for a channel realization $H$, a suitable precoding matrix may be implemented as a set of singular vectors $S$ using Singular Value Decomposition (SVD) of $H$ which may be given as $H = S\Sigma D$ where $\Sigma$ may be a diagonal matrix and $D$ may be a unitary matrix. In such an embodiment, the encoder model 703, decoder model 704, quantizer 719, and/or dequantizer 721 may be configured to enable the gNB 702 to extract a set of singular vectors (e.g., a matrix) S, and a performance metric may be implemented accordingly. Although the embodiment illustrated in Fig. 7 reports downlink physical layer information, other embodiments may be configured to report uplink physical layer information, sidelink physical information, and/or the like using similar principles according to the disclosure.

## Model Development, Training, and Operation

Artificial intelligence (AI), machine learning (ML), deep learning, and/or the like (any or all of which, as mentioned above, may be referred to individually and/or collectively as machine learning or ML) may provide techniques for inferring one or more functions (e.g., complex functions) of data according to the disclosure. In a machine learning process, samples of data may be provided to an ML model which, in turn, may apply one of various machine learning techniques to learn how to determine the one or more functions using the provided data samples. For example, a machine learning process may allow an ML model to learn a function $f(x)$ of a data sample input $x$. As mentioned above, an ML model may also be referred to as a model.

In some embodiments, a machine learning process (which may also be referred to as a development process) may proceed in one or more stages (which may also be referred to as phases) such as training, validation, testing, and/or inference (which may also be referred to as an application stage). Some embodiments may omit one or more of these stages and/or include one or more additional stages. In some embodiments, all or a portion of one or more stages may be combined into one stage, and a stage may be split into multiple stages. Moreover, the order of the stages or portions thereof may be changed.

In a training stage, a model may be trained to perform one or more target tasks. A training stage may involve the use of a training data set that may include i) data samples, and ii) an outcome of the function $f(x)$ for the samples (e.g., each sample) in the training data set. In a training stage, one or more training techniques may enable a model to learn an approximate relation (e.g., an approximate function) that may behave as, or closely follow, the function $f(x)$.

In a validation stage, the model may be tested (e.g., after performing an initial training) to assess the suitability of the trained model for one or more target tasks. A model may undergo further training if the validation result is not satisfactory. The training stage may be considered to be successfully completed if a validation stage provides successful results.

In a testing stage, a trained model may be tested to assess the suitability of the trained ML model for the one or more target tasks. In some embodiments, a trained model may not proceed to a testing stage unless training is completed and validation provides successful results.

In an inference stage, the trained model is used (e.g., in real-world application) to perform the one or more target tasks.

In a testing and/or inference stage, a model may use a learned approximate function that has been obtained via a training phase to determine the function value $f(x)$ of other data samples which can be different than the samples in the training phase.

In some embodiments, the success and/or performance of a machine learning process may involve the use of a sufficiently large training data set that may contain sufficient information about the function $f(x)$ and thus enables the model to obtain an acceptably close approximation of the function $f(x)$ through the training stage.

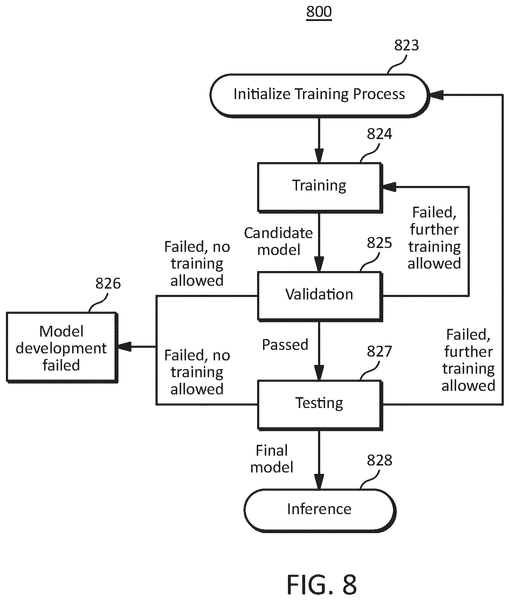

Fig. 8 illustrates an embodiment of a learning process for a machine learning model according to the disclosure. The process 800 may begin at operation 823 at which a training process may be initialized. For example, the structure of the model may be determined, values (e.g., neural network weights, hyperparameters, etc.) of the model may be initialized, a training data set with an adequate number of samples may be constructed, and/or the like.

At operation 824, the initialized model may be trained using the training data set to determine a configuration of a candidate trained model, for example, by updating values of neural network weights, hyperparameters, etc., using gradient descent, backpropagation, and/or the like.

In some embodiments, there may be an interrelationship between the construction of a training data set and the training stage. For example, the training stage may involve a relatively large duration of time for completion, and the duration can be dependent on the number of samples in the training data set. The duration may depend, in turn, on a type of training. For example, for full training and/or initial training, the model may be initialized and training may be performed using a large data set that may consist of many samples (e.g., samples that may not have been used previously for training the model). As another example, for partial training and/or update training, the model may have been previously trained (or partially trained), and an event (e.g., obtaining new data samples, performance degradation of the model, a model update event, etc.) may prompt a modification or adaptation of the model. In the case of partial training and/or update training, the model may be trained using a modified data set that may be different from the large training data set used for full training and/or initial training. For example, the modified training data set may be a subset of the full data set used for initial training, a set of new data samples that have been newly acquired, or a combination thereof.

At operation 825, the trained candidate model may be validated. In some embodiments, the validation stage 825 may be performed iteratively with the training stage 824. For example, if the candidate model fails the validation stage 825, it may return to the training stage 824 which may generate a new candidate model. In some embodiments, different criterion may be established for determining validation success or failure (e.g., classification accuracy, minimum mean square error (MMSE), and/or the like).

In some embodiments, a failed candidate model may not be allowed to return to the training stage 824 (for example, after failing a number of times that exceeds a threshold or if a performance criteria does not pass a threshold over a particular duration or a particular number of validation steps), and the method may terminate at to operation 826. However, if the performance of the candidate model using validation data is determined to be acceptable (e.g., based on the criteria for determining success or failure), the validation may be considered successful, and the trained candidate model may be passed to a testing stage at operation 827.

At operation 827, the performance of a trained model candidate that has passed the validation stage may be assessed. Criteria for declaring successful testing and/or failure of a model during the testing stage of development may be similar to the criteria used in the validation stage. However, one or more parameters used with the criteria during the testing stage (e.g., a number of steps, a performance threshold, etc.) may or may not be different from those used in the validation stage.

If testing is successful, the model may be designated as a final model, and the process may proceed to operation 828. In some embodiments, if the model fails the testing stage, the process may return to the training stage at operation 824 for further training. In some embodiments, however, further training may not be allowed (for example, based on criteria similar to those used during the validation stage 825), and the process may terminate at operation 826.

Model Training and Deployment Frameworks

Some embodiments in accordance with the disclosure may implement one or more frameworks for training and/or deploying models. In some embodiments of frameworks disclosed herein, one or more models trained and/or developed by a node may be tested against one or more reference models for the node, for example, to assess the compliance of the model with one or more potential test cases that may be specified for a respective application.

In any of the embodiments of frameworks disclosed herein, a quantizer function may be differentiable with a derivative value of essentially zero (e.g., with a probability of 1) throughout some or all of a quantizer range (e.g., essentially throughout the entire range). Depending on the implementation details, this may result in backpropagation that may provide little or no updating encoder weights. Thus, in some embodiments, a quantizer function may be approximated with a differentiable function (e.g., a reference differentiable quantizer function) that may be referred to as $f\_(quantizer, approx)$ $(x)$ in a training phase, while the actual quantizer function may be used in an inference phase. Similarly, a dequantizer function may be approximated with a differentiable function (e.g., a reference differentiable dequantizer function) that may be referred to as $f\_(dequantizer, approx)$ $(x)$ in a training phase, while the actual dequantizer function may be used in an inference phase. In some embodiments, a quantizer or dequantizer function used in conjunction with a model may be considered part of a complete description of the corresponding model and may be transferred along with, and as part of, the model. Thus, with any of the frameworks disclosed herein, if a first node shares a trained model with a second node (e.g., if Node A trains a pair of models Model A and Model B, then sends the trained Model B to Node B), the first model may also share one or both of the approximated quantizer function $f\_(quantizer, approx)$ $(x)$ and/or approximated dequantizer function $f\_(dequantizer, approx)$ $(x)$ with the second node, for example, via RRC signaling.

Although the frameworks disclosed herein are not limited to any specific applications and/or implementation details, in some embodiments, and depending on the implementation details, the frameworks may be used to train and/or test models that may reduce CSI feedback overhead.

Joint Training Frameworks

In some embodiments, a pair of models (e.g., Model A and Model B) may be jointly trained by one of two nodes (Node A or Node B), and the trained model for the non-training node may be conveyed to the non-training node (e.g., if joint training is performed by Node A, the trained Model B may be conveyed to Node B) to use for inference. For example, in the context of CSI compression, a base station may perform joint training of a pair of encoder and decoder models, and then convey the encoder model to the UE. An encoder model may also be referred to as an encoder, and a decoder model may also be referred to as a decoder.

In some embodiments of a joint training framework, further training (e.g., fine-tuning) of one or both of the trained models may be performed by the nodes at which the models may be used for inference (e.g., to improve or optimize one or both of the models). In some embodiments, further training may be based on online data that may be obtained by one or more of the nodes, for example, during on-going communication.

In some embodiments of a joint training framework, the training node may train one or both models using a corresponding quantizer and/or dequantizer function (e.g., an approximated and/or differentiable quantizer and/or dequantizer function). A node that receives a trained model may also receive and use the corresponding quantizer and/or dequantizer function for further training, validation, testing, inference, and/or the like.

In some implementations, joint training of models by a node may result in models that may be jointly matched to a target task, and thus, may provide improved or optimized performance. Depending on the implementation details, such performance improvement may outweigh any communication overhead associated with conveying a model to a different node, and/or any mismatch between models and/or nodes that be caused, for example, by joint training at one node that may be produced by a different manufacturer than the other node.

In a variation of a joint training framework, one node, for example, a base station, may jointly train a pair of encoder and decoder models. The encoder and decoder pair may be trained, for example, using reference differentiable quantizer and dequantizer functions as described above. The base station may then share the trained decoder model with the UE, e.g., via RRC signaling. However, the base station may or may not share the trained encoder model with the UE. If the base station shares the trained encoder model with the UE, the UE may use the trained encoder model as a reference encoder model. If the base station does not share the trained encoder model with the UE, the UE may establish a reference encoder model based, for example, on randomly initialized weights, on weights that may be chosen for the UE implementation, or on any other basis.

The UE may then train the reference encoder model using the trained decoder model it received from the base station. The reference encoder model may be trained online (which may refer to training that may be performed during operation). In some implementations, online training may be performed on the fly (which may refer to training performed using training data (e.g., channel estimates $H$) that may be collected during operation). Thus, the UE may train the reference encoder model using channel estimates $H$ that may be collected over time. The collected channel estimates may be used as a new training data set, for example, at specific points during training. Moreover, the collected channel estimates $H$ may also be stored for future online and/ or offline training by the UE or any other apparatus.

The UE may then use the trained encoder model for inference. The UE may also share the trained encoder model with the base station. This training procedure may continue as more training samples, e.g., channel estimates H, are collected and used by the UE for training.

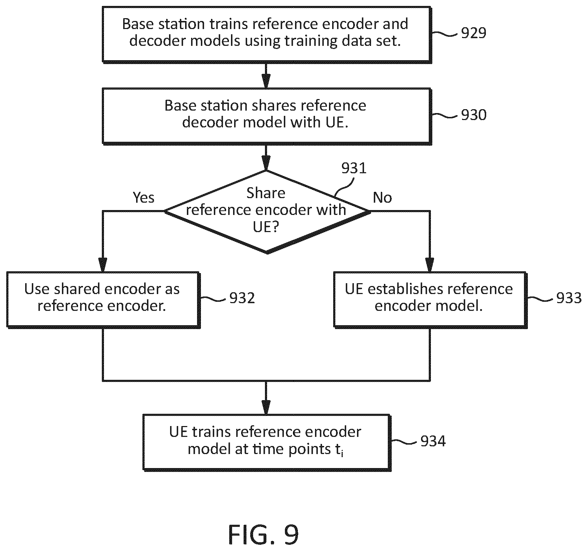

Fig. 9 illustrates an example embodiment of a method for joint training of a pair of encoder and decoder models according to the disclosure. At operation 929, a base station may jointly train a pair of reference encoder and decoder models using a training data set which may be referred to as *Enc_ref* and *Dec_ref.* At operation 930, the base station may share the reference decoder model *Dec_ref* with a UE. At operation 931, the base station decides whether to share the reference encoder model with the UE. If the base station shares the reference encoder with the UE, then at operation 932, the UE may use the shared reference encoder as the reference encoder for training. If the base station does not share the reference encoder with the UE, then at operation 933, the UE may establish a reference encoder model, for example, using random weights, using weights based on the UE implementation, and/or the like. At operation 934, the UE may train the reference encoder model at time points $t\_i$. The time points $t\_i$ may be determined, for example, as times at which the UE has performed and collected sufficient channel estimates since a previous time point. This may be implemented, for example, as shown in Algorithm 1 where, for each time point $t\_i$, the UE may have collected a new online training set $S\_i$ on the fly, where $S\_i$ may include channel estimates from $t\_(i - 1)$ to $t\_i$, and $N$ may be a maximum number of online trainings at the UE side. In some implementations, after completing Algorithm 1, the UE may share the trained encoder model with the base station.

Algorithm 1

| 1 | For i=1, ... N |
|---|---|
| 2 | UE trains encoder model with training set $S_i$ using reference encoder model as initial weights |
| 3 | UE sets the reference encoder model to the trained encoder model |
| 4 | UE constructs new training data set containing channel estimates from time $t\_(i - 1)$ to $t\_i$ |

Any of the training and deployment frameworks disclosed herein may be used with any types and/or combinations of apparatus and with any type of model and/or physical layer information. For example, even though, in the embodiment illustrated in Fig. 8, the base station performs the initial joint training and the encoder and decoder may be trained and used with channel estimates, in other embodiments the joint training may be performed by a UE or any other apparatus and the models may be trained and used with precoding matrices or any other type of physical layer information.

In some embodiments, a node such as a UE or base station may collect new training data within a window (e.g., an explicit time and/or frequency window). The collected data may be used, for example, to construct a training data set that the node may use to train a model. A window may be configured with a start and/or end time that may be determined, for example, by a base station. In some embodiments, a timeline used to determine a data collection window may be measured, for example, from one or more CSI-RS resources.

Alternatively, or additionally, online training may be performed as follows. A first node base station) may have a first model, and second node may have second model that may form a pair with the first model. In some embodiments, the first and second nodes may operate in a connected mode (e.g., an RRC connected mode). One or both of the nodes may have obtained their model through sharing by the other node. In this example, one of the nodes may be a base station and the other node may be a UE.

The base station may configure a UE with a predetermined online training data set, and both nodes may use the predetermined online training data set to update their respective models. When a node updates its own model, the other model at the other node may be assumed to be frozen. In some embodiments, one or more online training data sets may be specified (e.g., as part of a specification and/or provided to the UE and/or base station by a third node). Once the first node updates its first model (e.g., an encoder or decoder), it may share the updated first model with the second node, and the second node may begin training its second model assuming the first model is frozen. The models may continue to alternate between periodically training and freezing their models, for example, until an end time is reached.

Although the embodiments disclosed above may be described in a context in which a UE may update and use an encoder, in some embodiments with online training, both a UE and a base station (or any two other nodes with a pair of models such as two UEs configured for sideband communications) may collect new training data and use it to update either their own model (e.g., an encoder or a decoder), or both models (e.g., both an encoder and decoder which may be configured, for example, as an auto-encoder).

In some embodiments, a first node may share newly collected training data (e.g., channel matrices) with a second node by transmitting the training data as data or control information. For example, a UE may generate a binary representation of one or more channel matrices and transmit the representation using a PUSCH or PUCCH following the normal procedures for uplink transmission, encoding, modulation, etc.

Alternatively, or additionally, a UE may use its encoder as currently trained to encode a channel matrix it has obtained. The UE may transmit the encoded channel matrix, which may be referred to as a CSI codeword, to a base station. The base station may then use its currently trained decoder to recover the channel matrix. The base station may then include the recovered channel matrix in a new training data set that may be used for further (e.g., online) training at the base station.

In some embodiments, in addition to exchanging training data between nodes, one or more nodes may also share their latest trained models (e.g., encoders and/or decoders) with another node. Sharing of training data and/or models may be performed at intervals (e.g., a model may be transmitted when it is updated) that may manage the amount of communication overhead involved in such sharing.

In a framework with online training of models, a node may use a memory buffer to store collected physical layer information (e.g., CSI matrices from time from $t\_(i - 1)$ to time $t\_i$). Depending on the implementation details, a node may collect some or all of a new training data set before may begin using the new training data to update a model. However, if a node uses a dedicated memory buffer to store a training data set, and the interval between time $t\_(i - 1)$ and time $t\_i$ exceeds a certain value, the amount of memory involved with storing the training data may exceed the available buffer size as the number of CSI-RSs in the time window may become too large. Also, even if the interval between time $t\_(i - 1)$ and time $t\_i$ is generally short enough to prevent a buffer overflow, a node may encounter some reference signals with relatively short periodicities (e.g., a relatively large number of reference signals (e.g., CSI-RSs) may be configured in the window), and thus, the CSI matrices collected based on the reference signals may exceed the available dedicated memory buffer.

In some embodiments, a node may declare a data buffering capability that may be related, for example, to the size of a training data set constructed from collected training data. Depending on the implementation details, this may reduce or prevent problems with exceeding the capacity of a memory buffer for new training data. For example, a node may declare or be assigned a predetermined memory buffer capability based on (1) a time gap (e.g., a maximum time gap) for obtaining training data and/or updating a model based on the obtained training data; (2) a maximum number of reference signals (e.g., CSI-RSs) within a time window the node is expected to use for constructing a training set; or (3) the shorted periodicity of reference signals (e.g., CSI-RSs) used for constructing the training data set. A situation in which a node may be configured with one or more reference signals and/or a time window that may violate the predetermined memory buffer capability may be considered an error case.

Alternatively, or additionally, a default behavior may be defined when a violation of the predetermined memory buffer capability of a node occurs. For example, if a configuration of reference signals and/or a time window violates a node's memory buffer capacity, the node may use only store and/or use a subset of the collected training data to update a model. For example, if the UE reports a maximum of N_max CSI-RSs within a window, and a gNB configures a larger number N_(CSI-RS) of CSI-RSs within the window, the UE may only use N_max CSI-RSs from the N_(CSI-RS) CSI-RSs to update the model. How the UE selects which CSI-RSs to use may be determined based on the UE implementation and/or according to one or more configured and/or fixed rules (e.g., the UE may use the latest N_max resources among the N_(CSI-RS) resources).

In some embodiments, a buffer size for collected training data may be based on a node implementation, for example, without involving a specification. For example, if a UE's training data buffer overflows, the UE may stop storing newly collected data (e.g., matrices) and proceed to update the model with the data in the buffer. In some embodiments, the UE may flush the buffer once the model is updated, then begin collecting new training data again.

In some embodiments, UE may use a shared buffer to store new training data. Examples of shared buffers may include one or more buffers already used for storing other channels, e.g., a PDSCH buffer, a master CCE LLR buffer, and/or the like. In such an embodiment, the shared buffer space may be used based on availability as it may already be fully or partially occupied based on other dedicated uses. In some embodiments, buffering of collected training data may be based on the node implementation.

Training Frameworks with Reference Models

In some frameworks according to the disclosure, a reference model may be established as Model A for Node A, and Node B may then train a Model B using the reference model as Model A (e.g., assuming Node A will use the reference model as Model A for inference). Node A may then use the reference model as Model A without further training, or Node A may proceed to train the reference model to use as Model A. In some embodiments, one or multiple Model As may be provided and/or specified for a Node A, and a Node B may train one or more Model Bs using a Model A at Node B that may be assumed to be one or multiple of the reference models for Node A. For example, Node B may train a first version of Model B using a Model A that is assumed to be one reference model specified for Model A. Node B may also train a second version of Model B assuming Model A to be another reference model and so on.

References models may be established, for example, through specifications, signaling (e.g., RRC signaling from a base station to a UE after a UE is RRC-connected), and/or the like.

In some embodiments, Node B may inform Node A of which reference models it has selected to use to train the different versions of Model A. In cases in which there is only one reference model available for Model A, no communication may be involved because the reference model can be known implicitly. Node B may inform Node A of one reference model among the multiple reference models available for training versions of Model B; this model may correspond, for example, to the reference model that provided the best performance. Alternatively, or additionally, Node B may inform Node A of a subset of the reference models among the multiple reference models; this subset may include a collection of the best-performing reference models.

Regardless of any signaling from Node B to Node A, Node A may or may not indicate to Node B which reference model it has selected. Indicating the reference model can be useful, for example, to establish a common understanding between Node A and Node B, whereas not indicating the reference model may reduce signaling overhead. In an implementation with multiple reference models, if the subset of best performing models includes only one reference model, (e.g., only one reference model was indicated from Node B to Node A as the best performing reference model), then Node A may not provide an indication to Node B because the selection by Node A may be implicitly known by Node B.

Once a reference model is established for Node A, Node A may either use the reference model as Model A or proceed to train the reference model. Depending on the implementation details, using the reference model as Model A (e.g., with little or no further training or tuning) may provide a relatively high level of matching (e.g., the best matching) between the two models because Node B may train Model B assuming the use of the reference model for Model A. If there are multiple reference models used by Node B to train different versions of Model B, then Node A may use a reference model corresponding to any of the trained versions of Model B; this may involve establishing a establish a common understanding between Node A and Node B of which of the trained versions of Model B will be used (e.g., Node B may communicate to Node A which trained version of Model B is used, or Node A may inform Node B of which model to use).

Rather than using the reference model as Model A without further training, Node A may proceed to train Model A. This may be beneficial, for example, if the reference model is not suitable for the current network status (e.g., the wireless environment if the models are to be used for CSI compression and decompression). Thus, allowing Node A to further train (e.g., tune or optimize) Model A may enable the models to match the current network status. However, changing Model A from the reference model that was assumed by Node B when training Model B may lead to a potential mismatch between the two models which, in turn, may lead to a degradation of performance.

In some embodiments, Model A may be trained to overcome this potential mismatch. For example, to train Model A, Node B may send Model B to Node A so the training of Model A may be based on the actual model used by Node B as Model B.

If there are multiple trained versions of Model B, Node B may communicate a subset of the trained versions of Model B, and Node A may train multiple corresponding Model As for the communicated versions of Model B. In such an embodiment, Model A and Model B may communicate to establish a common understanding of which pair of Model A and Model B may be selected for use. Depending on the implementation details, sharing multiple versions of Model A may allow Node A and/or Node B to improve (e.g., optimize) performance by selecting the best pair of Model A and Model B, among the communicated models, which may be best-performing. Alternatively, to reduce communication overhead, Node B may communicate one of the multiple versions of Model B, and Node A may train a Model A corresponding to the communicated version of Model B.

Alternatively, or additionally, if Node A proceeds to train Model A, Node A may train a trial version of Model B to mimic the actual Model B used by Node B. The level of similarity between the trial Model B and the actual Model B may depend on the design and/or architecture of Model B, the training data set used to train the trial version of Model B, and/or the training procedure (e.g., initializations of weights, hyperparameters, etc.) use to train the trial version of Model B. If there are multiple trained versions of Model B that have been trained by Node B, Node A may train multiple corresponding trial versions of Model B. Alternatively, Node A may train multiple Model As using a trial version of Model B corresponding to each of the available reference models for Model A; this may be particularly useful because it may enable Node A to train Model A prior to being informed by Node B of which reference model or models Node B has selected. In such an embodiment, Model A and Model B may communicate to establish a common understanding of which pair of Model A and Model B may be selected for use.

To further reduce the mismatch between a trial Model B and an actual Model B, Node B may share some auxiliary information with Node A. Depending on the implementation details, sharing auxiliary information may help Node A train a trial Model B in a manner that would produce a trial Model B similar to the actual Model B. Examples of auxiliary information may include initialization values (e.g., random seeds used by Node B for training an actual Model B, initial network weights, etc.), one or more optimization algorithms, one or more algorithms used for feature selection, one or more algorithms used for data preprocessing, information on the type of neural network (e.g., a recurrent neural network (RNN), a convolutional neural network (CNN), etc.), information about the structure of the model (e.g., a number of layers, a number of nodes per layer, etc.), information about the training data set, and/or the like. Using this information can be mandated (e.g., via a specification) or left to the implementation of a node.

In some embodiments, a reference model for Node A and/or Node B may be specified (e.g., in a specification), for example, for testing purposes. Such an embodiment may not involve any indication of which model is used by Node A and/or Node B. For example, a UE may be expected to meet one or more performance specifications when the gNB uses one or more reference models. Depending on the implementation details, this may provide a guideline for deployment as to which models to be used by nodes to attain suitable performance for a machine learning task. In some embodiments, one or more performance requirements may be established for a machine learning CSI compression task, for example, as part of a specification.

In some embodiments of a framework with a reference model, a node may train any model, including a reference model, using a corresponding quantizer and/or dequantizer function (e.g., an approximated and/or differentiable quantizer and/or dequantizer function), and any model may also use a corresponding quantizer and/or dequantizer function for further training, validation, testing, inference, and/or the like.

Training Frameworks with Latest Shared Values

In some frameworks according to the disclosure, Node A may begin with a Model A that may be in any initial state (e.g., pre-trained (e.g., trained offline), untrained but configured with initial values, and/or the like). Node B may begin with a Model B that may also be in any initial state. One or both nodes may train their respective models for a period of time (which may be referred to as a training cycle or iteration), then one or both nodes may or may not share trained model values and/or trained models with the other node. In some embodiments, a new training data set may be provided directly or indirectly to one or both nodes, e.g., at the beginning or end of a cycle. Node A and Node B may train their respective models with their latest knowledge of the weights of the model at the other node, e.g., without any model exchange.

A first node may train its model (e.g., a UE may train an encoder) assuming the model at the second node (e.g., a decoder at a base station) is frozen with the latest weights (e.g., that were fed back by the second node). The first node may train its model and updates its weights, for example, a maximum number of times (e.g., $K\_e$ times for an encoder) and then share the updated model weights with the second node. The same procedure may be implemented at the second node. Specifically, once the second node has received the updated model weights from the first node, the second node may train its model and update its weights a maximum number of times (e.g., $K\_d$ times for a decoder), assuming the model weights of the model at the first node are frozen at the latest states shared model by the first node. The second node may then share its updated model weights with the first node. Thus, the first and/or second nodes may have trained their respective models a maximum number of times and then shared updated model values with the other node (which may be referred to as a sharing cycle or iteration).

In a variation of this framework, after one or more of the nodes shares model state information (e.g., weights) with the other node, e.g., at the end of a sharing cycle, one or both of the nodes may begin another sharing cycle. For example, both nodes may train their models assuming the values of the model on the other node is frozen to the latest values shared by the other node. At certain points in time, or after a certain number of training cycles are performed by the first and/or second nodes (e.g., at the end of another sharing cycle), one or both nodes may stop training and share their latest trained model with each other node. In some embodiments, at the beginning, a shared model (e.g., a fully shared model that may be initialized, for example, through offline training, hand shaking, etc.) may be used for the initial values of the latest shared weights.

Fig. 10 illustrates an example embodiment of a method for training models with latest shared values according to the disclosure. For purposes of illustration, the method illustrated in Fig. 10 may be described in the context of a UE having an encoding model for CSI and a base station having a decoding model for CSI, but the principles may be applied to any types of nodes and/or physical layer information.

Referring to Fig. 10, at the beginning of a first sharing cycle 1035-1, an encoder model may be in an initial state $e\_0$, and a decoder model may be in an initial state $d\_0$ as shown at sharing point 1036-0. The encode and decoder models in the initial states ($e\_0, d\_0$) may both be provided to a UE and base station. Thus, the UE and base station both begin with encoder and decoder models in the same initial state. The UE may then perform $M$ training cycles (e.g., trains its encoder $M$ times while its decoder model remains in the initial state $d\_0$). While the UE is performing $M$ training cycles, the base station may perform $N$ training cycles (e.g., trains its encoder $N$ times while its encoder model remains in the initial state $e\_0$).

For example, after a first training cycle by the UE, the UE's encoder and decoder models may have states ($e\_1, d\_0$), after a second training cycle by the UE, the UE's encoder and decoder models may have states ($e\_2, d\_0$) and so on until, after the $Mth$ training cycle, the UE's encoder and decoder models may have states ($e\_M, d\_0$).

Similarly, after a first training cycle by the base station, the base station's encoder and decoder models may have states ($e\_0, d\_1$), after a second training cycle by the base station, the base station's encoder and decoder models may have states ($e\_0, d\_2$) and so on until, after the $Nth$ training cycle, the base station's encoder and decoder models may have states ($e\_0, d\_N$).

At sharing point 1036-1 at the end of sharing cycle 1035-1, the UE may send its trained encoder model to the base station, and the base station may send its trained decoder model to the UE. Thus, both the UE and base station may have encoder and decoder models with states ($e\_M, d\_N$).

In some embodiments, UE and/or base station may stop training at this point and begin using their trained encoder and decoder models for inference. In some other embodiments, however, one or both of the UE and/or base station may begin another sharing cycle 1035-2. For example, the UE may then perform $P$ training cycles by training its encoder $P$ times while its decoder model remains in the state $d\_N,$ and the base station may perform $Q$ training cycles by training its decoder $Q$ times while its encoder model remains in the state $e\_M.$

At sharing point 1036-2 at the end of sharing cycle 1035-2, the UE may send its trained encoder model to the base station, and the base station may send its trained decoder model to the UE. Thus, both the UE and base station may have

**EP 4 645 768 A1**

encoder and decoder models with states ($e\_P, d\_Q$). The UE and/or base station may perform any number of sharing cycles, and any number of training cycles per sharing cycle.

A special case of the embodiment illustrated in Fig. 10 is when $M$ or $N = 0$, if $M \gg N$, or if $N \gg M$. For example, with $N$ = 0, and $M > 0$, the base station may not update the decoder model (e.g., may not perform any training cycles) during the sharing cycles. The UE, however, may train its encoder $M$ times before sharing it with the base station. Similarly, with $M = 0$, and $N > 0$, the UE may not update its encoder model while the base station may update its decoder model $N$ times before sharing it with the UE. Depending on the implementation details, one or more of these special cases may be beneficial, for example, if one of the nodes has difficulty or is unable to obtain a training data set for online training at the node. In such a situation, the node with access (or more ready access) to training data may continue with online training which may enable the node that continues with training to provide a trained model to the other node that has no or limited access to training data.

A special case may also be performed in an interlaced and/or alternating manner. For example, the two nodes may start with one of the variables $M$ or $N$ equal to zero while the other variable is greater than zero. Once the model with the applicable model is updated a number of times determined by the nonzero variable and shared with the other node, the non-zero variable may take a zero value while the other variable becomes non-zero. This process may continue with $M$ and $N$ alternatingly take zero values. Such an interlaced training procedure may cause a first node (e.g., a UE or gNB) to train its model (e.g., an encoder or decoder) a number of times while the model at a second node is frozen. Then, after the first node shares its trained model with the second node, the second node may train its model a number of times while the model of the first node is frozen and so on.

In some embodiments, the value of the nonzero variable may affect the performance of the trained pair of models. For example, if the time between sharing points is relatively large, the trained models ($e\_M, d\_N$) may have relatively poor performance, for example, if each node has been training assuming a model weight on the other side that may be significantly different from the model that will be shared at the next sharing point. For example, in the embodiment illustrated in Fig. 10, the base station may train its decoder assuming an encoder with weights $e\_0$ and may later pair the trained decoder with a new encoder model $e\_M$ which may have diverged significantly from $e\_0$. Thus, in some embodiments, sharing models with relatively high frequency may improve the performance of the trained models.

In any of the frameworks disclosed herein, a node may train any model, including a reference model, using a corresponding quantizer and/or dequantizer function (e.g., an approximated and/or differentiable quantizer and/or dequantizer function), and any model may also use a corresponding quantizer and/or dequantizer function for further training, validation, testing, inference, and/or the like.

With any of the frameworks disclosed herein, one or more of the nodes may transfer collected training data and/or data sets (e.g., channel estimates, precoding matrices, etc.) to another apparatus that may train one or more of the models. For example, a UE and/or base station may upload collected online training data and/or one or more models to a server (e.g., a cloud based sever) that may train one or more of the models using the uploaded training data and download one or more trained models to the UE and/or base station.

Any of the frameworks disclosed herein may be modified such that a first type of node may train a model for another type of node and share the trained model with multiples instances of the second type of node. For example, a base station may train an encoder for its decoder and shares the trained encoder with multiple UEs. One or more of the UEs may apply the shared encoder to compress CSI at the UE and/or use the shared encoder for further online training. Moreover, any of the frameworks disclosed herein may be implemented in systems in which one of the nodes is not a base station, for example, with two UEs or other peer devices configured for sidelink communications. In such an implementation, a UE may train a decoder for its encoder and share the trained decoder with one or more other UEs that may use the trained decoder for direct inference and/or as a source of initial values (e.g., of weights) for further online training.

Model Sharing Mechanisms

In some embodiments, nodes may transfer models, weights, and/or the like, using any type of communication mechanism such as one or more uplink and/or downlink channels, signals, and/or the like. For example, upon triggering sharing of an encoder model, a UE may use one or more MAC control element (MAC CE) PUSCHs to send the encoder model and/or weights to a gNB. Similarly, a gNB may send a decoder model and/or weights in one or multiple UEs using one or more MAC CE PDSCHs.

Depending on the implementation details, sharing a full set of weights may be inefficient as the model may be relatively large and may consume relatively large amounts of downlink and/or uplink resources for sharing.

Some embodiments may establish one or more sets of quantized models that may be referred to as model books. Upon training a model by a node, if sharing is requested, the node may map the model to one of the quantized models in a model book. One or more of the model books may be commonly shared between nodes. Rather than sending a mode, the node may send an index of the mapped model in a model book. Depending on the implementation details, this may reduce communication resources associated with model sharing.

22

In some embodiments, once a set of parameters for a model are known, the end result of training may be deterministically known. For example, given (1) a training set, (2) an initial random seed that determines the initial weights, (3) an optimizer parameter (e.g., a fully defined optimizer parameter), and/or a training procedure, the trained model at the end of a certain number of training epochs (e.g., training cycles) may be uniquely determined. These parameters may be referred to, for example, as minimal describing parameters. If the size of the minimal describing is smaller than the size of the weights for a model, then a node may share the minimal describing parameters rather than the weights. Depending on the implementation details, this may reduce communication overhead associated with sharing models.

In some embodiments, one or more values of a model (e.g., weights of a CSI encoding and/or deciding model at a node) may be arranged in a vector $W$ (e.g., a vector of weight elements). A dedicated compression auto-encoder model (e.g., an encoder and decoder model pair) may be trained to compress W with an encoder at one node and a decoder at the other node. If sharing of the CSI model is triggered and/or requested, a node may construct the vector $W$ of the CSI model, and encode it with the model-compression encoder and send the encoded vector to the other node. The other node may use the model-compression decoder to recover the weight vector $W.$ Depending on the implementation details, this may reduce communication overhead associated with sharing models.

Online Training Processing Time

In embodiments in which a node may perform online training of a model, the node may be provided with a resource allowance (e.g., an allowance of processing time, processing resources, and/or the like) to perform the training. Such an allowance may be provided for training with an online training data set that may be collected by the node (e.g., channel estimations based on measurements performed by the node), or online training data sets that may be RRC configured (or re-configured) or MAC-CE activated. A resource processing time allowance may ensure that a node may have sufficient time to update a model using the online training data set before the node is expected to have completed the update, for example, to share an updated model with another node. In some embodiments, however, a node may be provided with a processing time allowance regardless of whether the node is expected to share a trained model after the processing.

For example, in embodiments in which a UE may collect an online training data set by calculating channel estimations, the UE may be provided an amount of time (e.g., to update an encoder model) determined by $N\_(AIML, upadte)$ symbols from the end of the last symbol of the latest CSI-RS used for the online training set. If the UE is configured to report the updated model to another node (e.g., a gNB), the UE may not be expected to report the model to the gNB earlier than $N\_(AIML, report)$ symbols from the last symbol of the latest CSI-RS in the training set.

As another example, in embodiments in which a UE may perform online training of an encoder using an online training data set that is RRC configured (or re-configured) or MAC-CE activated to the UE, the UE may not be expected to update and/or report its encoder earlier than $N$ symbols from the latest symbol at which the corresponding RRC (re)-configuration is complete or the MAC-CE activation command has been received.

Pre-Processing Based on Domain Knowledge

For purposes of compression, a machine learning encoder may receive an input signal and generate a set of output features that may be sufficient for a decoder to use to reconstruct the input signal. With maximal compression, the output features may be expected to be independent of each other, otherwise they may be further compressed.

Although a pair of machine learning models may be capable of generating a feature vector from an input and reconstructing the input from the feature vector, in some embodiments according to the disclosure, one or more pre-processing and/or post-processing operations may be performed on the input to a generation model and/or the output from a reconstruction model. Depending on the implementation details, this may provide one or more potential benefits such as reducing the processing burden and/or memory usage of one or both of the models, improving the accuracy and/or efficiency of one or both of the models, and/or the like.

In some embodiments, pre-processing and/or post-processing may be based on domain knowledge of the input signals. In some embodiments, pre-processing and/or post-processing may provide an encoder with auxiliary information from the domain knowledge which, depending on the implementation details, may reduce the processing burden on the encoder. For example, if a vector that is to be compressed by an encoder may be characterized as a low-pass signal with a relatively small variation, a discrete Fourier transform (DFT) and/or inverse DFT (IDFT) may be performed to analyze the frequency domain representation of the vector. If a DC component of the DFT vector is larger (e.g., significantly larger) than the other components, it may indicate that the signal has a low variation and, therefore, may be pre-processed before compression by the encoder (and post-processed after decompression by the decoder) to reduce the burden on the encoder/decoder pair.

In some embodiments, performing a transform and/or inverse transform such as a DFT and/or an IDFT may provide a machine learning model with a clearer understanding of the level of correlation between the elements of an input vector. For example, in some embodiments (e.g., with any of the frameworks disclosed herein), a CSI matrix may be input to a pre-processor that may apply a transform (e.g., DFT/IDFT, discrete cosine transform (DCT)/inverse DCT (IDCT), and/or the like) to all or a portion of the input, e.g., on different CSI-RS ports. The transformed signal may then be input to the encoder and compressed. On the decoder side, the output of the decoder may be applied to an inverse operator of the pre-processor transformation (which may be implemented, for example, with a post-processor) to generate a reconstructed input signal.

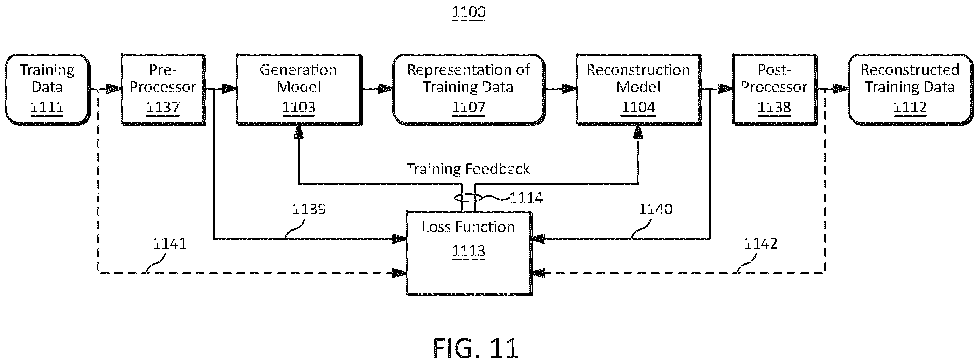

Fig. 11 illustrates an example embodiment of a two-model training scheme with pre-processing and post-processing according to the disclosure. In some aspects, the embodiment 1100 illustrated in Fig. 11 may be similar to the embodiment illustrated in Fig. 3, and similar components may be identified with reference designators ending in the same digits. However, the embodiment illustrated in Fig. 11 may include a pre-processor 1137 and a post-processor 1138. The pre-processor 1137 may apply any type of transformation to the training data 1111 before it is applied to the generation model 1103. Similarly, the post-processor 1138 may apply any type of inverse transformation (e.g., an inverse of a transformation applied by the pre-processor 1137) to the output of the reconstruction model 1104 to generate the final reconstructed training data 1112.

In some embodiments, the loss function 1113 for training the models 1103 and 1104 may be defined between the input of the generation model 1103 and the output of the reconstruction model 1104 as shown by the solid lines 1139 and 1140. In some embodiments, however, the loss function 1113 may be defined between the input of the pre-processor 1137 and the output of the post-processor 1138 as shown by the dashed lines 1141 and 1142. Once the models 1103 and 1104 are trained as shown in Fig. 11, they may be used for inference.

Although the principles relating to pre-processing and/or post-processing are not limited to any specific implementation details, for purposes of illustrating the inventive principles, an example embodiment of a scheme for pre- and post-processing CSI matrices based on domain knowledge may be implemented as follows. With a channel matrix of size $N\_rx \times N\_tx$, for each pair $(i, j)$ of RX and TX antenna, the channel elements corresponding to the pair for all of the resource elements (REs) within a time and frequency window may be concatenated to obtain a combined matrix $\mathbf{H}\_(i, j)$ of size $M \times N$ where $M$ and $N$ may be the number of subcarriers and orthogonal frequency division multiplexing (OFDM) symbols of the CSI-RSs in the window. In some embodiments, the matrix may be assumed to be complex. In an example embodiment of a pre-processing scheme, $\mathbf{H}\_(i, j)$ may be transformed, for example, using DFT matrices. If $\mathbf{U}\_freq$ and $\mathbf{U}\_time$ are the $M \times M$ and $N \times N$ DFT matrices, respectively, the matrix $\mathbf{H}\_(i, j)$ may be transformed to $\mathbf{X}\_(i, j)$ as follows

$$\mathbf{X}\_(i,j) = \mathbf{U}\_freq^\wedge * \mathbf{H}\_(i,j)\, \mathbf{U}\_time \qquad\qquad (\text{Eq. 2})$$

which may be referred to as the delay-Doppler representation (DDR) of $\mathbf{H}\_(i, j)$. Matrix $\mathbf{H}\_(i, j)$ may be reconstructed from the DDR as follows:

$$\mathbf{H}\_(i,j) = \mathbf{U}\_freq\, \mathbf{X}\_(i,j)\, \mathbf{U}\_time^\wedge *. \qquad\qquad (\text{Eq. 3})$$

In some embodiments, the use of a DDR transform may result in a sparse $\mathbf{X}$ matrix which, in turn, may ease the learning and inference complexity.

In some embodiments, the use of pre-processing and/or post-processing transforms may enable the original training set to transform the corresponding DDR matrices. In such an embodiment, the CSI compression may then compress the transformed training set. Thus, pre-processing (e.g., a DDR transform) may be performed on the UE side while post-processing (e.g., an inverse of DDR to recover $\mathbf{H}$) may be performed at the gNB side.

In some embodiments, a loss function may be defined based on the transformed matrices (e.g., between the transformed matrix input to the encoder and the transformed matrix output of the decoder as illustrated in Fig. 11). In some embodiments, the matrix $\mathbf{H}$ may be constructed based on the union of the individual CSI matrices in time and/or frequency domains for each spatial channel, for example, for each transmission antenna (port) and each receive antenna (port) pair. One or multiple models may be trained and tested for each spatial channel. In some embodiments, $\mathbf{H}$ may be constructed based on the channel matrices of the REs, e.g., where each matrix may have a size of $N\_r \times N\_t$ in which $N\_r$ and $N\_t$ may be the number of receive antennas at a UE and transmit antennas at a gNB, respectively.

CSI Matrix Formulations

In some embodiments, the CSI information of an RE or a group of REs that a UE may compress may be referred to as a CSI matrix. From an analysis of a multiple-input, multiple-output (MIMO) channel, a capacity distribution may be a Gaussian distribution with possibly different power allocation across a transmit antenna. If a channel matrix is decomposed as $\mathbf{H}\_(r \times t) = \mathbf{U}\Sigma\mathbf{V}^\wedge H$, the capacity achieving distribution may be obtained by first setting $\tilde{\mathbf{x}} = \mathbf{V}\mathbf{x}$ where $\mathbf{x}$ is the i.i.d. Gaussian random vector with zero mean and unit variance and then multiplying each element of

$$\tilde{\mathbf{x}} = \begin{bmatrix} \tilde{x}_1 \\ \vdots \\ \tilde{x}_t \end{bmatrix} \qquad\qquad (\text{Eq. } 4)$$

by the power allocation given by a water filling algorithm. The power allocation to the i-th channel may be $P\_i$, $i$ = 1, ... , $t$ where the $P\_i$ may be obtained from the singular value decomposition of the channel matrix **H.** Therefore, the information used at gNB (e.g., the full information required at the gNB) may be both the right singular value matrix **V** and the singular values themselves. Thus, in some embodiments, a CSI matrix may be formulated (e.g., defined) as any one or more of the following: (a) a CSI matrix may be formulated as the channel matrix **H;** (b) a CSI matrix may be formulated as the concatenation of **V** and the singular values; and/or (c) a CSI matrix may be formulated as the matrix **U.**

In some embodiments, a UE may be configured to report any of the CSI matrices described above via RRC (re)-configuration, MAC-CE command or dynamically via DCI. In an embodiment in which a CSI matrix is formulated according to (b) (e.g., the concatenation of **V** and the singular values) a UE may also be configured to only report the singular values.

For purposes of model training, when a UE is configured to report a specific CSI matrix the training set and/or loss function may be formulated based on the applicable CSI matrix. For example, when a UE is configured to report **V,** the training set may include the V matrices obtained from the estimated channel matrices, and the loss may be formulated based on a **V** matrix input to the encoder and the reconstructed **V** matrix at the output of the decoder.

Node Capabilities

Implementation of any of the frameworks disclosed herein may involve the use of resources such as memory, processing, and/or communication resources, for example, to store new training data, share models between nodes, and train and/or apply a specific type of neural network architecture, e.g., CNN or RNN for a model. Different nodes such as UEs may have different capabilities for implementing the neural networks. For example, a UE may or may be capable of supporting a CNN but not an RNN. In some embodiments, a UE may report its capability for supporting a specific type of neural network architecture, e.g., a network type such as CNN, RNN, etc., and/or any other aspects reflecting its restrictions and capability for applying an encoder model.

In some embodiments, a node (e.g., a UE) may report its capabilities and/or restrictions using a list that may include any number of the following: (a) one or more network types, e.g., CNN, RNN, specific types of RNN, gated recurrent units (GRUs), long short-term memory (LSTM), transformer, and/or the like; (b) one or more aspects related to the size of a model, e.g., a number of layers, a number of input and/or output channels of a CNN, a number of hidden states of an RNN, and/or the like; and/or (c) any other type of structural restriction.

Depending on its reported capabilities, a node (e.g., a UE) may not be expected to train or test an encoder model that violates any of the node's reported constraints and/or requires capabilities beyond the node's declared capabilities. In some embodiments, this may be ensured regardless of the applicable framework and/or location of training/inference of the model. For example, if a framework is implemented such that a gNB may pre-train an encoder and decoder and shares the encoder and/or decoder with the UE, the UE may not expect the encoder model to violate its capabilities. As another example, if one or multiple pairs of encoders and decoders are trained offline and specified in an applicable specification (e.g., an NR specification), a UE may not expect the applicable model to violate its capabilities. In some embodiments, a UE may report a capability to activate one or more models through signaling and may declare which specific encoder/-decoder pairs, or individual encoders or decoders it may support. A gNB may then indicate to the UE which encoder/decoder pair may be applicable to the UE. The indication may be provided, for example, by system information, RRC configuration, dynamic signaling in the DCI, etc.

Tuning Via Online training

In some frameworks a node such as a UE may be expected to train its encoder model or both an encoder model and a decoder model online, for example, by collecting new training data (e.g., samples) on the fly or based on offline provisioning and updating of one or more model. If a node only updates an encoder model, since a loss function may also depend on decoder weights, encoder model tuning and/or optimization may also depend on the decoder weights and/or model. In such an implementation a node may also declare capabilities to handle the restriction of the decoder model, even though the encoder may be used on the gNB side. One or more such restrictions may be applied as follows: (1) one or more online training features and/or fine-tuning may be declared by a node as a capability; (2) a node that reports a capability to support online training may further report restrictions on the supported structures for the encoder model which may be, for example, any restrictions as mentioned above as (a) through (c); (3) a node that reports a capability to support online training may further report restrictions on the supported structures for the decoder model which may be, for example, any restrictions as mentioned above as (a) through (c); and/or (4) if multiple models including encoder and decoding pairs are specified in a specification, a node may declare a capability indicating which pairs of encoder and decoder, or which individual encoders and/or decoder the node may support.

Multiple Pairs of Models

In some embodiments, multiple pairs of models (e.g., encoder/decoder pairs) may be trained and/or deployed for operation (e.g., simultaneous operation) on two nodes (e.g., a UE and a gNB). Pairs may differ from each other in a) both encoder and decoder, b) only encoder, or c) only decoder. In some embodiments, multiple pairs of models can be configured (e.g., optimized) to handle different cases that may be specified to handle different channel environments which may in turn result in different distributions of the training and/or testing data sets.

Multiple pairs of models may be used, for example, to accommodate different dimensionality in training data. For instance, the dimensions of a CSI matrix may be determined according to the number of CSI-RS ports. In some embodiments, if a UE is to report a first CSI matrix $H\_1$ and a second matrix $H\_2$ with different dimensions, a single encoder and decoder pair may be used to handle matrices with different sizes. In such an embodiment the encoder and decoder may be trained as follows. The matrices input to the encoder may be reshaped to have a fixed size by appending zeros in a configuration that may be commonly understood between a UE and a gNB. Thus, a training set may originally include matrices of different sizes which may be modified by appending zeros as described above to convert the matrices to one fixed matrix size. A communication mechanism may be implemented to enable a gNB and a UE to share the same understanding on the size of the CSI matrix that is requested, for example in a report by a UE. Depending on the implementation details, a matrix re-dimensioning technique may work for any matrix size.

Alternatively, or additionally, multiple pairs of models (e.g., encoder/decoder pairs) may be trained, wherein different pairs of models may be configured to handle different CSI matrix sizes.

In some embodiments, and depending on the implementation details, multiple pairs of models may be implemented without increasing complexity. For example, with multiple pairs of models, if CSI reports include CSI matrices corresponding to a specific number of CSI-RS ports, then the inference time for calculating the CSI report may be smaller with multiple pairs than with a single pair. Moreover, if each RRC configuration or MAC-CE activation includes CSI reporting for a certain case corresponding to a certain pair, then UE may load the applicable model into a modem while keeping one or more of the other models in a UE controller. Depending on the implementation details, this may reduce modem internal memory usage. In embodiments with multiple pairs, different pairs may be categorized according to any of the following configurations. (a) Each pair of models may be configured to handle a specific CSI matrix size. For example, a pair of models may receive CSI matrices estimated based on CSI-RS with a certain number of ports and also associated with a certain number of receive antennas by a UE. The UE may report its number of receive antennas to the gNB in one report, or separately for different numbers of CSI-RS ports. (b) Each pair of models may be configured to handle a different distribution for training and/or test data sets. (c) Each pair of models may be configured to handle a different channel environment for training and/or test data sets.

Training Set Association and Model Pair Configuration

In embodiments in which pairs of models may be configured to handle different cases, a node (e.g., a UE or base station) may be configured with different training data sets, for example, different training data sets for a specific case or pair of models (e.g., encoder/decoder pair). Thus, a UE and/or base station may be in possession of different training data sets, e.g., each data set for a different pair. Once triggering takes place for a node (e.g., a UE or a gNB), the node may also be signalled as to which pair of models should be trained. For example, with online training, a gNB may indicate to a UE to start training of specific pair models. If online training is performed on the fly by collecting new data set, an association may be provided, for example, between a CSI-RS and an encoder/decoder pair, e.g., via the number of CSI-RS ports.

Once multiple pairs of models have been trained and are ready for deployment in an inference phase, a node (e.g., a UE) may need to know which pair to use to encode a channel matrix. For example, each pair may be associated with a certain dimension for a CSI matrix to encode. The dimension may be referred to as the input dimension to the encoder model. In some embodiments, a UE may determine the pair of models to use for encoding a CSI matrix as follows. A CSI-RS may be implicitly or explicitly associated with a pair of models. The UE encodes a CSI matrix using the pair of models associated with the CSI-RS. With an implicit association, the CSI-RS may be mapped to a certain pair based on the number of CSI-RS ports and/or the number of receive antennas at the UE. Thus, the CSI-RS may be mapped to a pair if the dimension of the CSI matrix obtained from the CSI RS is equal to the input dimension of the pair. If multiple pairs have the same eligible input dimensions, a reference pair may be chosen, for example, based on a rule that may be established between a UE and a gNB. With an explicit association, the CSI-RS for which the CSI matrix is reported may be configured via RRC or dynamically indicated in DCI, for example, with a pair index.

In any of the implementations described above, if UE is signaled to report a CSI matrix via a pair of models that have a different input dimension, the UE may append zeros to match the size of the matrix to the input dimension. However, a UE may not expect to be signaled to report a CSI matrix using a pair of models with an input dimension that is smaller than that of the CSI matrix.

Compression with Reduced Model Size

In some embodiments, a pair of models may be configured as an auto-encoder to compress a CSI matrix, and/or exploit a redundancy and/or correlation between CSI matrix elements. If the CSI matrix is reported per RE, then the correlation may only be a spatial correlation between different paths between different pairs of transmit antennas (e.g., CSI-RS ports) and receive antenna. Depending on the implementation details, the amount of such correlation may be limited and thus an auto-encoder may not be able to compress the CSI matrix sufficiently.

In some embodiments, the compression capability of an auto-encoder may be related to the amount of redundancy and/or correlation between the elements of the CSI matrix, which may be referred to as spatial correlation. Since a wireless channel may also be correlated in time and/or frequency domains, time and/or frequency correlations may also exist. Therefore, an estimated channel for a number of OFDM symbols and/or a number of resource elements (REs), resource blocks (RBs) or subbands may be input as a single training sample. For example, channel matrices corresponding to multiple REs may be specified as an input to an auto-encoder. In one such method according to the disclosure, a UE may be configured via RRC with such a configuration that may specify time and/or frequency resource bundling for forming a training data set.

Depending on the implementation details, the compression performance of an auto-encoder may be improved by compressing CSI for multiple REs across different frequency and/or time resources. Thus, combined CSI matrices of multiple REs may be input in a time and frequency window. The combined CSI matrix may then be obtained by concatenating the individual CSI matrices of the REs in the window. Depending on the implementation details, a combined CSI matrix may be more likely to have significant correlation between its elements due to time and frequency flatness of the channel. Therefore if a model takes the combined CSI matrix as the input, it may be able to compress it to a higher degree than multiple models working on individual per-RE matrices. In some embodiments, a UE may be configured with a time and/or frequency window and one or more configurations that may indicate which REs a UE may employ to determine the combined CSI matrix. Such a configuration may be used in both training and/or testing phases to obtain the combined matrix.

Input Size Reduction Via Subsets of CSI Matrix

In some embodiments, an auto-encoder may encode CSI matrices of different REs in certain time and frequency windows. If the channel is such that correlation between the elements of the channel matrices do not exist or are not strong in certain domains (e.g., time or frequency), then the set of elements in the union of the CSI matrices may be divided into subsets with relatively strong intra-subset element correlation and relatively weaker inter-subset element correlation. For example, if an auto-encoder is to compress four CSI matrices of four REs on the same OFDM symbol, the matrices may be denoted as follows:

$$H_1 = \begin{bmatrix} a_1 & a_2 \\ a_3 & a_4 \end{bmatrix}, H_2 = \begin{bmatrix} b_1 & b_2 \\ b_3 & b_4 \end{bmatrix}, H_3 = \begin{bmatrix} c_1 & c_2 \\ c_3 & c_4 \end{bmatrix}, H_4 = \begin{bmatrix} d_1 & d_2 \\ d_3 & d_4 \end{bmatrix}. \qquad (\text{Eq. 5})$$

If the correlation in the frequency domain is strong, and there is little or no correlation in the spatial domain (i.e. among the elements of one matrix), then an auto-encoder may be configured to compress a vector of length 4, and the auto-encoder may be applied four times on the following subsets: Subset 1 ($a\_1$, $b\_1$, $c\_1$, $d\_1$); Subset 2 ($a\_2$, $b\_2$, $c\_2$, $d\_2$); Subset 3 ($a\_3$, $b\_3$, $c\_3$, $d\_3$ ); and Subset 4 ($a\_4$, $b\_4$, $c\_4$, $d\_4$ ).

The CSI matrix may then be reconstructed at the decoder by reconstructing the four vectors, for example, using the same decoder. As mentioned above, the subsets may be chosen such that they may exploit one or more correlations in one or more domains. To further illustrate, in the example above, if there is a correlation between elements in a spatial domain, then the subset choices set forth above may prevent the network from exploiting the correlation to further compress the CSI matrix. In contrast, the following subset selections may allow for exploiting correlations in both the frequency and spatial domains: Subset 1 ($a\_1$, $a\_2$, $b\_1$, $b\_2$ ); Subset 2 ($c\_1$, $c\_2$, $d\_1$, $d\_2$ ); Subset 3 ($a\_3$, $a\_4$, $b\_3$, $b\_4$ ); and Subset 4 ($c\_3$, $c\_4$, $d\_3$, $d\_4$ ).

In some embodiments, the following framework may be used for reduced model size with *N_features* input dimensions based on this approach. (1) A UE may be configured to report CSI matrices of *M* REs which may be on the same or different OFDM symbols and may be within a time and/or frequency window. Each CSI matrix may have *N* elements. (2) A UE may divide the $M \times N$ elements into $(M \times N)/N\_features$ subsets. A common rule may be established between UE and gNB for the subset selection. (3) An auto-encoder (e.g., a single auto-encoder) may be used to compress and recover the $N\_feature$ elements in each subset. In the example subsets described above, $M = N = 4$, and $N\_features = 4$.

Input Size Reduction Via Resource Element Selection

The size of an encoder network may be reduced by reducing the size of a combined input matrix. In some embodiments, the size of a combined matrix may be reduced by (a) removing certain elements of individual per-RE matrices, for example, if there are two REs in a window with CSI matrices $H\_1$ and $H\_2$ of the same dimension. The combined matrix can be constructed to have the same dimension as $H\_1$ or $H\_2$, but by selectively picking the $(i, j)$ elements from either $H\_1$ or $H\_2$. Alternatively, or additionally, the size of a combined matrix may be reduced by (b) constructing a matrix that may exclude the CSI matrices for certain REs in the window.

These examples are illustrated in Table 1 in which a window with two REs and two CSI matrices is illustrated. With approach (a) the combined matrix may be constructed as shown in Table 1, while with approach (b) the combined matrix may be constructed by choosing one of the two matrices.

Table 1

$$H_1 = \begin{bmatrix} a_{1,1} & a_{1,2} & a_{1,3} & a_{1,4} \\ a_{2,1} & a_{2,2} & a_{2,3} & a_{2,4} \\ a_{3,1} & a_{3,2} & a_{3,3} & a_{3,4} \\ a_{4,1} & a_{4,2} & a_{4,3} & a_{4,4} \end{bmatrix}$$

$$H_2 = \begin{bmatrix} b_{1,1} & b_{1,2} & b_{1,3} & b_{1,4} \\ b_{2,1} & b_{2,2} & b_{2,3} & b_{2,4} \\ b_{3,1} & b_{3,2} & b_{3,3} & b_{3,4} \\ b_{4,1} & b_{4,2} & b_{4,3} & b_{4,4} \end{bmatrix}$$

$$H_{combined} = \begin{bmatrix} a_{1,1} & b_{1,2} & a_{1,3} & b_{1,4} \\ a_{2,1} & b_{2,2} & a_{2,3} & b_{2,4} \\ a_{3,1} & b_{3,2} & a_{3,3} & b_{3,4} \\ a_{4,1} & b_{4,2} & a_{4,3} & b_{4,4} \end{bmatrix}$$

Number of CSI-RS Ports and Training Set

A channel matrix estimated from a CSI-RS with $N\_port$ ports and reception via $N\_r$ receive antennas at a UE, may have a dimension of $N\_r \times M\_port$. An auto-encoder may be used to remove redundancy from the matrices. In some embodiments, identifying the redundancy pattern and/or removing it may be more difficult if the training set includes matrices of different dimensions, e.g., corresponding to CSI-RS with different numbers of ports. Therefore in some embodiments, a training set for any of the methods disclosed herein may only or mostly include matrices of the same dimensions, and/or associated with the same number of CSI-RS ports. Thus, a UE may not be expected to be configured with a training set, or CSI report and measurement config that results in a training set with dimensions that are different from dimensions of the training data set matrices.

UCI Format

With any of the frameworks disclosed herein, an output of a generation model (e.g., an ML encoder) may be considered a type of UCI (which may be referred to, for example, as artificial intelligence, machine learning (AIML) CSI). In some embodiments, AIML CSI may be obtained from a CSI report and measurement configurations with associated CSI-RS resources and report settings. In some embodiments, AIML CSI may be transmitted to a gNB via PUCCH or PUSCH (for example, following Rel-15 behavior). Thus, a format for a representation of feedback information for physical layer information may be established as a type of uplink UCI. A format may involve one or more types of coding (e.g., polar coding, low density parity check (LDPC) coding, and/or the like) which may depend, for example, on a type of physical channel used to transmit the UCI. In some embodiments, transmitting the type of uplink UCI (e.g., AIML CSI) with PUCCH may use polar coding, while transmitting with PUSCH may use LDPC coding. Moreover, before coding, the CSI may be quantized. Thus AIML CSI may be quantized to a bitstream (0s and 1s) and input to a polar coder or LDPC coder.

Adaptability To Different Network Vendors

When a UE connects to a network, it may not know which network vendor created the network to which it is connected. Since different vendors may employ different training techniques and/or network architectures for machine learning models, the availability of this information may impact the training model at the UE side. Thus, in some embodiments, a network indication or an AI/ML index may be provided to a UE via system information (e.g., via one of the SIBs). The UE may then use this information to adapt its training to the specific network vendor configuration.

ML Model Lifecycle Management

In some ML applications, the performance of an ML model may deteriorate over time, and may not perform adequately over the duration of an application it was trained for. Thus, an ML model may be updated frequently to adapt to temporal changes that may occur in its operating environment, e.g., statistical changes in the wireless channel in the case of CSI compression.

Some embodiments according to the disclosure may provide a management framework to enable efficient and/or timely updates of one or more ML models with acceptable overhead. To facilitate such a framework, one embodiment may implement model monitoring in which the node may keep track of the performance of the ML model. In some embodiments, this may involve model monitoring in which a node may track the performance of an ML model. Model monitoring may be based on one or more performance metrics as follows. (1) Task-based metrics may be used to assess (e.g., directly) the performance of a task being performed by an ML model. For example, these metrics can include accuracy, mean squared error (MSE) performance, and/or the like. (1) System-based metrics may be used to track the overall performance of the system, e.g., correct decoding of transmissions, or other system-level key performance indicators (KPIs) which may provide a less direct measure of the performance of an ML model used by a node in the system.

When the performance of an ML model is deemed unacceptable according to an agreed and/or configured metric, the management framework may initiate an ML model update procedure. Performance may be deemed unacceptable, for example, (1) when the ML model performance is not acceptable according to one or more agreed and/or configured metrics; and/or (2) if the performance of the ML model is not acceptable for a particular duration which is larger than a threshold time.

A threshold for determining unacceptable performance may be implemented as a configured and/ or specified parameter. A time duration may be measured i) accumulatively, e.g., any duration of unacceptable performance may be added to a global counter, and the global counter value is compared to the threshold, or ii) contiguously, e.g., only a contiguous duration of unacceptable performance larger than a threshold may be considered.

When the performance of the ML model is deemed to be unacceptable, a management framework may trigger an update procedure that may be implemented in one of the following manners. (1) The management framework can require a full training procedure as described, for example, with respect to Fig. 8. In this case, the ML model may be re-trained from scratch, or it can be re-trained starting from the current ML model. Training in this case may use the entire training data set, with or without additional data samples that may have been acquired recently. (2) The management framework may require partial training in which the ML model may be re-trained starting from the current ML model and possibly using new data samples that have been acquired recently.

Performance Metrics in Training and Testing

To evaluate the performance of different models for a CSI compression task, some embodiments according to the disclosure may focus on the aspect of CSI compression. In such an embodiment, different models may be compared based on their respective capability of compressing the CSI matrix and recovering the CSI matrix such that the recovered matrix is as close as possible to the true CSI matrix. A determination of closeness may be related to the operation of a gNB with the CSI matrix. For instance if a gNB calculates the SVD of the channel matrix as $\mathbf{H}\_(r \times t) = \mathbf{U\Sigma V}^H$ and uses the right singular vectors $\mathbf{V}$ to determine the pre-coder, closeness may be determined between the $\mathbf{V}$ at in the input of the encoder and the recovered $\mathbf{V}$ at the output of the decoder.

In some embodiments, a closeness metric between two matrices may be implemented on an element-wise basis, and the average may be taken over some or all elements to provide a single loss value. Alternatively, or additionally, having one or a few erroneous elements in the matrix may be as harmful as having many erroneous elements. In this case, the loss function may be determined on a matrix-wise basis, e.g., the maximum of element-wise errors over all the elements of the matrix.

In some embodiments, the performance of a CSI encoder and decoder model may also be evaluated in conjunction with other blocks of the system. For example, if a block error rate (BLER) is used as a system performance metric, the comparison between different CSI models may be based on their resulting BLER. Other system KPIs, such as throughput, resource utilization, etc., may also be used for this purpose.

In embodiments in which BLER is a metric of interest, configuring gNB to use the information provided by the CSI matrix may affect the system performance. For example, assuming a CSI model is perfect in the sense that a channel matrix sent by a UE is fully recovered at a gNB, and the channel matrix indicates a rank-1 channel, if the gNB schedules a rank-2 PDSCH, decoding may be likely to fail. Therefore, to establish a connection between a compression-capability of the CSI model and system performance, an assumption may be used regarding the gNB operation. In some embodiments, a gNB processing a function *f_gNB* may be defined to take the output of the decoder, e.g., **H^**, and provide an estimate of the resulting BLER as *BLER = f_gNB* (**H^**) (or *BLER = f_gNB* (**H, H^**) ). The loss function during the training may then be defined considering both CSI compression and gNB operations aspects. For example, the loss may be defined as a weighted sum of the two terms as follows:

$$loss(\mathbf{H}, \mathbf{H^{\check{}}}) = \alpha . loss\_CSI\,(\mathbf{H}, \mathbf{H^{\check{}}}) + \beta . BLER \qquad (Eq.\ 6)$$

where $\alpha$ and $\beta$ are hyper-parameters for training.

Reliability Aspects of Uplink Channel

In some embodiments, an output of the encoder, which may also be referred to as a CSI codeword, may be assumed to be available at the decoder side without error. Thus, the CSI codeword may be transmitted via PUCCH or PUSCH on an uplink channel with infinite reliability such that the PUCCH and/or PUSCH decoding does not fail. However, in some instances, in the inference phase, the CSI codeword may be delivered to the gNB (the decoder) with one or more errors, for example, when the PUSCH/PUCCH decoding fails. In such as case, a noisy version of the CSI codeword may be available at the decoder. The effects of imperfection in the uplink channel during the training phase may be modelled as follows.

For each training example input to the encoder, the CSI codeword at the output of the encoder may be denoted as **x.** Considering the imperfection of the uplink channel, the input to the decoder **y** may be modelled as

$$\mathbf{y} = \mathrm{x} + \boldsymbol{\omega} \qquad (Eq.\ 7)$$

where ω is the additive noise that may model the residual error after the decoding of the uplink channel. The additive noise may be generated as follows in the training phase.

In Method 1, ω may be modelled as a Gaussian random vector with zero mean and variance $\sigma$^2. The variance may be indicated to the UE via RRC configuration or left to the UE implementation. In Method 2, the channel between **x** and **y** may be modelled by performing the PUCCH and/or PUSCH decoding for each training example, obtaining the residual error vector ω, and then assuming that the vector is added to **x** to obtain **y**.

Federated Learning Aspects

With federated learning (FL), a global model at a server may learned by individual learnings at multiple nodes connected to the server and sharing the learned models with the server. The server then may perform one or more operations on the received models to obtain a final model. Such an arrangement may be motivated, for example, privacy aspects and/or requirements of the nodes to not share their data with the server.

With a CSI compression use case, the server may be considered to be the gNB and different UEs connected to the gNB may be considered as model updating nodes. Different UEs may have different training sets having the same or different distributions. If the distributions are the same, each UE may update the model with its own training set and share the model with the gNB. The gNB may then perform one or more operations, for example, averaging the models to obtain a final model. The gNB may share the obtained final model with the UEs which shared their models. The final model may be expected to outperform the individual received models as it is trained based on the union of all the training sets over all the participant UEs. Therefore, FL may be used to improve the CSI compression performance. In case of different distributions available at different UEs, FL may help to capture the distributions which have not yet been seen by specific UE through the models shared by UEs that have seen the distribution. In any case, FL can be used to obtain a model considering different environments observed by the UEs.

With an FL framework according to the disclosure, a gNB may configure a group of UEs to be in an FL group. The UEs in the same FL group may be configured to have the same encoder and/or decoder (e.g., auto-encoder or AE) architecture. Thus, their encoders and decoders may only be different in the actually trained weights but have the same configurations in terms of a number of layers, number of units, activation functions, and other parameters defining the network structure.

The size of the input to the encoder and the decoder models may be the same or similar for the UEs in the group. The input to the encoder may also have the same or similar meaning for the UEs. For example, the input to the encoders of the UEs (e.g., all the UEs) may be the channel matrix or the singular value matrix V. The gNB may indicate to the UEs via RRC, DCI or a MAC CE command to update their models and share the updates with the gNB. in some embodiments, not all the UEs in the group participate in the update procedure at the same time. The gNB may send information regarding training, hyperparameters and/or other aspects of the FL via a group-common (GC) DCI, where the UEs in the same FL group may have their specific portion of the DCI configured via RRC.

Additional Embodiments

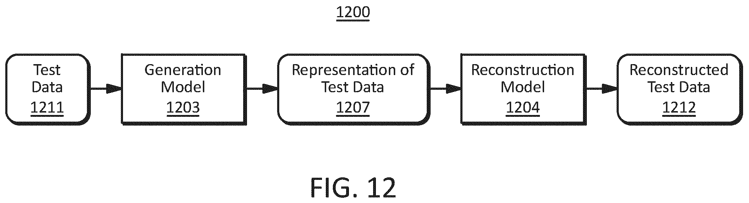

Fig. 12 illustrates an embodiment of a system for using a two-model scheme according to the disclosure. The embodiment illustrated in Fig. 12 may be described in the context of testing one or more of the models, but the same or similar embodiments may also be used for validation, inference, and/or the like, with any of the models disclosed herein, for example, with the generation model 303 and/or the reconstruction model 304 illustrated in Fig. 3 after training.

Referring to Fig. 12, the system 1200 may include a first node (Node A) having a generation model 1203 and second node (Node B) having a reconstruction model 1204. Test data 1211 may be applied to the generation model 1203 which may generate a representation 1207 of the test data. The reconstruction model 1204 may generate a reconstruction 1212 of the test data based on the representation 1207 of the test data. In some embodiments, the generation model 1203 may include a quantizer to convert the representation 1207 to a quantized form (e.g., a bit stream) that may be transmitted through a communication channel. Similarly, in some embodiments, the reconstruction model 1204 may include a dequantizer that may convert a quantized representation 1207 (e.g., a bit stream) to a form that may be used to generate the reconstructed test data 1212.

The generation model 1203 and reconstruction model 1204 may be obtained in any manner including using any of the frameworks described herein. For example, using a joint training framework, the generation model 1203 and reconstruction model 1204 may be trained as a pair at Node A, which may transmit the reconstruction model 304 to Node B. Other embodiments may use a training framework with reference models, a training framework with latest shared values, or any other framework and/or technique to obtain and/or train the generation model 1203 and reconstruction model 1204.

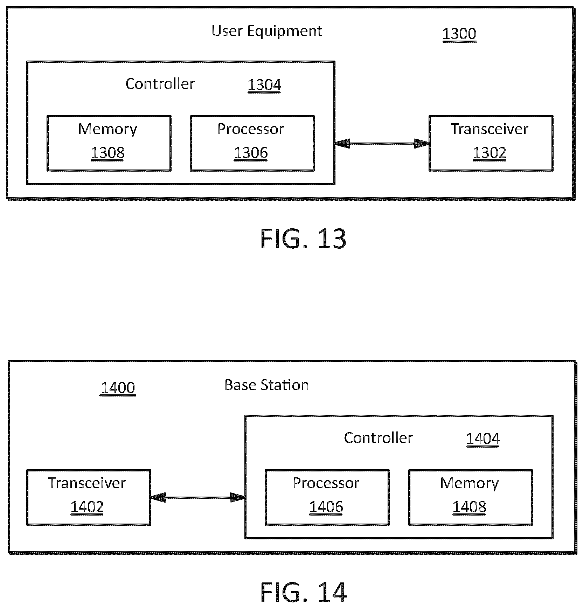

Fig. 13 illustrates an example embodiment of a user equipment (UE) in accordance with the disclosure. The embodiment 1300 illustrated in Fig. 13 may include a radio transceiver 1302 and a controller 1304 which may control the operation of the transceiver 1302 and/or any other components in the UE 1300. The UE 1300 may be used, for example, to implement any of the functionality described in this disclosure including determining channel information based on one or more reference signals from a base station, generating a representation of the channel information based on the condition of the channel using a machine learning model, sending the representation of the channel information, collecting training data, e.g., during a window, performing pre- and/or post-processing, e.g., for a CSI matrix, deploying and/or activating one or more pairs of ML models, and/or the like.

The transceiver 1302 may transmit/receive one or more signals to/from a base station, and may include an interface unit for such transmissions/receptions. For example, the transceiver 1302 may receive one or more signals from a base station and/or may transmit a representation of channel information to a base station on a UL channel.

The controller 1304 may include, for example, one or more processors 1306 and a memory 1308 which may store instructions for the one or more processors 1306 to execute code to implement any of the functionality described in this disclosure. For example, the controller 1304 may be configured to implement one or more machine learning models as disclosed herein, as well as determining channel information based on one or more reference signals from a base station, generating a representation of the channel information based on the condition of the channel using a machine learning model, sending the representation of the channel information, collecting training data, e.g., during a window, performing pre- and/or post-processing, e.g., for a CSI matrix, deploying and/or activating one or more pairs of ML models, and/or the like.

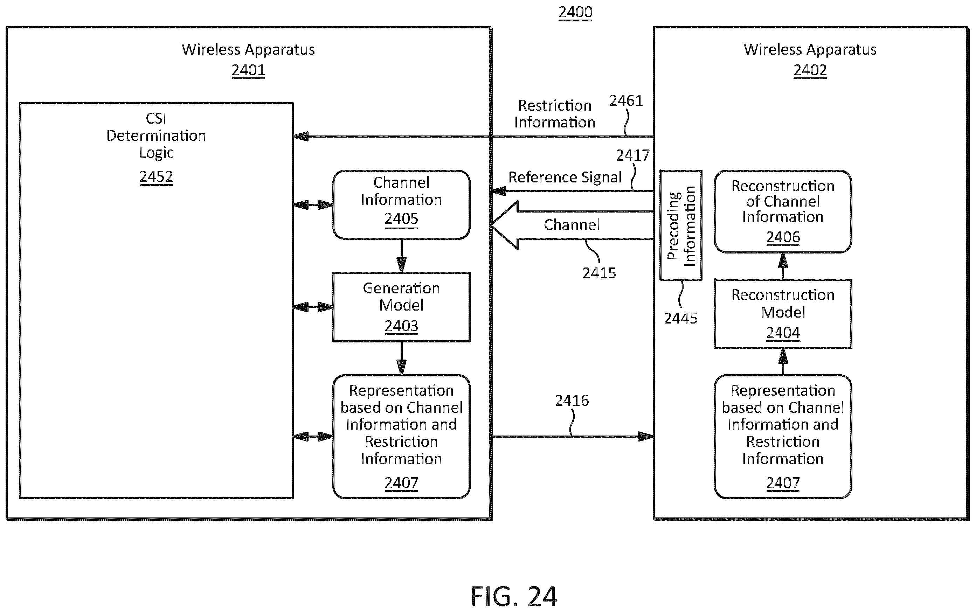

Additionally, or alternatively, the controller 1304 may be configured to implement any functionality disclosed herein relating to the use of restriction information for a channel including, for example, providing a UE with a restricted sub-space for the channel and/or enabling a UE to ensure that a precoder determined using a reconstruction model is orthogonal to the restricted sub-space. The controller 1304 may be configured, for example, to implement some or all of the CSI determination logic 2452, precoding determination logic 2552, and/or precoding determination logic 2652 illustrated in, and/or described with respect to, Fig. 24, Fig. 25, and/or Fig. 26, respectively.

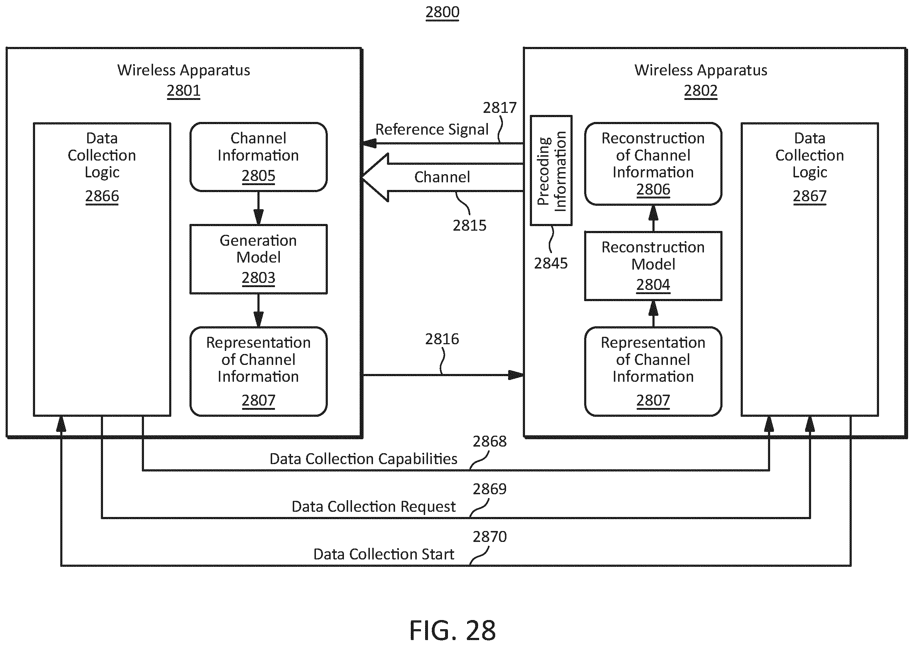

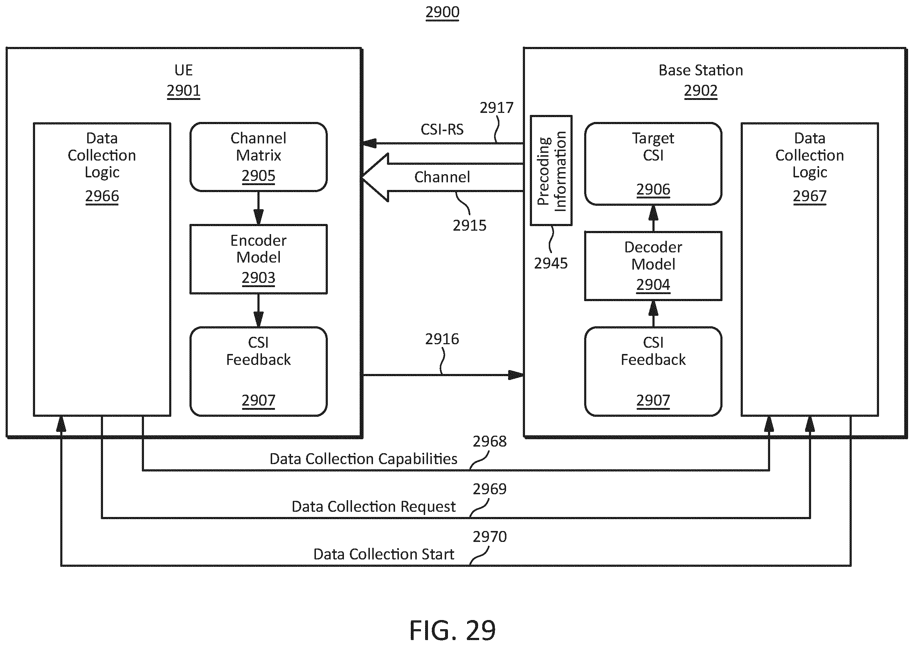

Additionally, or alternatively, the controller 1304 may be configured to implement any functionality disclosed herein relating to data collection for use with artificial intelligence and/or machine learning models including, for example, establishing a data collection session and/or declaring data collection capabilities. The controller 1304 may be configured, for example, to implement some or all of the data collection logic 2866 and/or data collection logic 2867 illustrated in, and/or described with respect, to Fig. 28 and/or the data collection logic 2966 and/or data collection logic 2967 illustrated in, and/or described with respect to, Fig. 29.

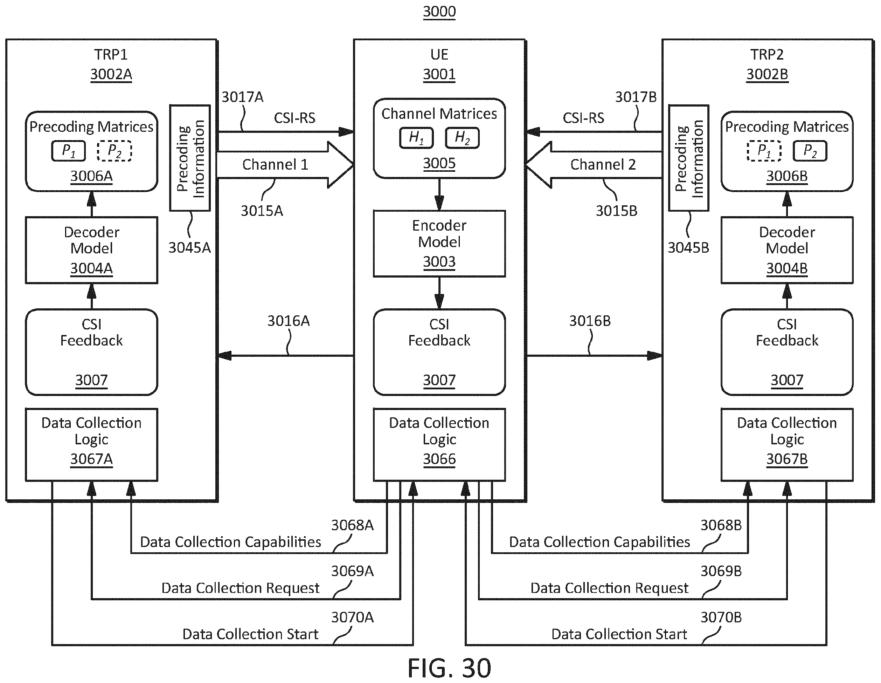

Additionally, or alternatively, the controller 1304 may be configured to implement any functionality disclosed herein relating to data collection for non-coherent joint transmission including, for example, reporting data collection capabilities and/or data set description. The controller 1304 may be configured, for example, to implement some or all of the data collection logic 3066, 3067A, and/or 3067B illustrated in, and/or described with respect to, Fig. 30.

Fig. 14 illustrates an example embodiment of a base station in accordance with the disclosure. The embodiment 1400 illustrated in Fig. 14 may include a radio transceiver 1402 and a controller 1404 which may control the operation of the transceiver 1402 and/or any other components in the base station 1400. The base station 1400 may be used, for example, to implement any of the functionality described in this disclosure including transmitting one or more reference signals to a UE on a DL channel, reconstructing a representation of channel information, performing pre- and/or post-processing, e.g., for a CSI matrix, deploying and/or activating one or more pairs of ML models, and/or the like.

The transceiver 1402 may transmit/receive one or more signals to/from a user equipment, and may include an interface unit for such transmissions/receptions. For example, the transceiver 1402 may transmit one or more reference signals to a UE on a DL channel and/or receive receiving precoding information from a UE on a UL channel.

The controller 1404 may include, for example, one or more processors 1406 and a memory 1408 which may store instructions for the one or more processors 1406 to execute code to implement any of the base station functionality described in this disclosure. For example, the controller 1404 may be used to implement to implement one or more machine learning models as disclosed herein, as well as transmitting one or more reference signals to a UE on a DL channel, reconstructing a representation of channel information, performing pre- and/or post-processing, e.g., for a CSI matrix, deploying and/or activating one or more pairs of ML models, and/or the like.

Additionally, or alternatively, the controller 1404 may be configured to implement any functionality disclosed herein relating to the use of restriction information for a channel including, for example, providing a UE with a restricted sub-space for the channel and/or enabling a UE to ensure that a precoder determined using a reconstruction model is orthogonal to the restricted sub-space.

Additionally, or alternatively, the controller 1404 may be configured to implement any functionality disclosed herein relating to data collection for use with artificial intelligence and/or machine learning models including, for example, establishing a data collection session and/or declaring data collection capabilities.

Additionally, or alternatively, the controller 1404 may be configured to implement any functionality disclosed herein relating to data collection for non-coherent joint transmission including, for example, reporting data collection capabilities and/or data set description.

In the embodiments illustrated in Figs. 13 and 14, the transceivers 1302 and 1402 may be implemented with various components to receive and/or transmit RF signals such as amplifiers, filters, modulators and/or demodulators, A/D and/or DA converters, antennas, switches, phase shifters, detectors, couplers, conductors, transmission lines, and/or the like. The controllers 1304 and/or 1404 may be implemented with hardware, software, and/or any combination thereof. For example, full or partial hardware implementations may include combinational logic, sequential logic, timers, counters, registers, gate arrays, amplifiers, synthesizers, multiplexers, modulators, demodulators, filters, vector processors, complex programmable logic devices (CPLDs), field programmable gate arrays (FPGAs), application specific integrated circuits (ASICs), systems on chip (SOCs), systems in package (SIPs), multi-chip modules, state machines, data converters such as ADCs and DACs, and/or the like. Full or partial software implementations may include one or more processor cores, memories, program and/ or data storage, and/or the like, which may be located locally and/or remotely, and which may be programmed to execute instructions to perform one or more functions of the controllers. Some embodiments may include one or more processors such as microcontrollers, CPUs such as complex instruction set computer (CISC) processors such as x86 processors and/or reduced instruction set computer (RISC) processors such as ARM processors, and/or the like, executing instructions stored in any type of memory, graphics processing units (GPUs), neural processing units (NPUs), tensor processing units (TPUs), and/or the like.

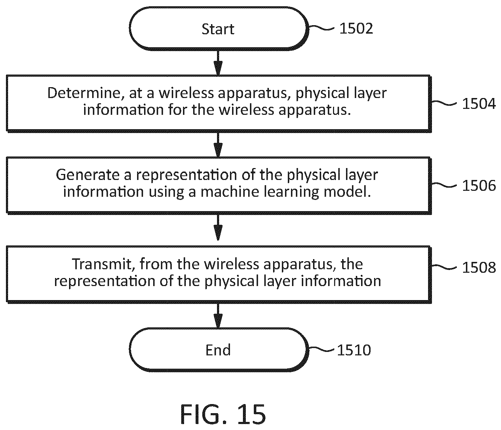

Fig. 15 illustrates an embodiment of a method for providing physical layer information feedback in accordance with the disclosure. The method may begin at operation 1502. At operation 1504, the method may determine, at a wireless apparatus, physical layer information for the wireless apparatus. At operation 1506, the method may generate a representation of the physical layer information using a machine learning model. At operation 1508, the method may transmit, from a user equipment, from the wireless apparatus, the representation of the physical layer information. The method may end at operation 1510.

In the embodiment illustrated in Fig. 15, and any of the embodiments disclosed herein, the illustrated components and/or operations are exemplary only. Some embodiments may involve various additional components and/or operations not illustrated, and some embodiments may omit some components and/or operations. Moreover, in some embodiments, the arrangement of components and/or temporal order of the operations may be varied. Although some components may be illustrated as individual components, in some embodiments, some components shown separately may be integrated into single components, and/or some components shown as single components may be implemented with multiple components.

Precoding and Channel Information Mismatch

In an NR system, a UE may measure downlink channel conditions based on a reference signal (e.g., CSI-RS or DMRS) transmitted by a gNB. The UE may use the channel measurements to determine (e.g., calculate) channel information such as a precoding matrix and/or channel quality indicator (CQI) which the UE may report to the gNB. The UE may calculate a precoding matrix that may result in a good (e.g., the best available) equivalent channel for downlink transmissions if the gNB applies the reported precoding matrix to subsequent transmissions. The CQI, which the UE may calculate based on the precoding matrix, may indicate a channel quality that may be expected if the gNB uses the reported precoding matrix. The reported CQI may be used, for example, to select a modulation order, code rate, and/or the like, for subsequent transmissions by the gNB using the reported precoding matrix.

As described above, a CQI may be calculated based on a precoding matrix. Thus, accurately determining channel quality information (e.g., CQI) may involve or require knowledge or an assumption by a UE of precoding information (e.g., a precoding matrix) applied by the gNB. In an NR system in which a codebook may be used to determine a precoding matrix (e.g., using an RI and/or PMI reported by a UE), a UE may have knowledge of the precoding matrix applied by the gNB to the CSI-RS.

However, in a system that uses a machine learning framework to report channel information, a UE may not have knowledge or an assumption of a precoding information applied by the gNB. For example, in some embodiments, a pair of models (e.g., an encoder at a UE and a decoder at a gNB) may be trained such that, when a channel matrix is applied as an input to an encoder at the UE, the decoder at the gNB may directly output a precoding matrix. Such an embodiment may be implemented, for example, using the configuration illustrated in Fig. 7 in which the channel state information 718 may be implemented as a channel matrix determined by measuring the reference signal 717 and applied to the machine learning encoder 703 at the UE 701. In such an embodiment, the reconstruction of the channel state information 722 may be implemented as a precoding matrix that may be obtained (e.g., directly) as the output of the machine learning decoder 704 at the gNB 702.

Such an embodiment may be trained, for example, using the configuration illustrated in Fig. 3 in which the training data 311 may include pairs of data in which each pair may include a channel matrix and a corresponding precoding matrix calculated by a UE based on the channel matrix. During training, the channel matrices may be applied as inputs to the generation model 303, and the corresponding precoding matrices may be used as training targets (e.g., for the loss function 313), thereby causing the reconstruction model 304 to generate the output data 312 as a precoding matrix.

In such an embodiment, however, the UE may not have access to the trained decoder used by the gNB. For example, referring to Fig. 7, the encoder 703 and decoder 704 may be trained by a network that may transfer only the encoder 703 to the UE 701 and only the decoder 702 to the gNB 702. As another example, the gNB 702 may train the encoder 703 and decoder 704 and transfer only the encoder 703 to the UE 701. Thus, the UE may not be able to determine the precoding matrix that the UE may report to the gNB (e.g., in the form the output of the encoder 703), and which the gNB 702 may reconstruct using the decoder 704. (Although the gNB 702 may reconstruct the precoding matrix, in some systems, it may not be required to use the reconstructed precoding matrix or any precoding matrix previously reported by the UE 701.) Thus, the UE 701 may not have access to the precoding matrix to use to calculate channel quality information. Depending on the implementation details, this may result in a mismatch between precoding information and channel quality information reported by the UE to the gNB. In some embodiments, as used in this context, mismatch may refer to a situation in which channel quality information reported to a wireless apparatus may not be adequately based on corresponding precoding information reported to the wireless apparatus.

In some embodiments according to the disclosure, a first wireless apparatus (e.g., a UE) may determine precoding information (e.g., a precoding matrix) used by a second wireless apparatus (e.g., a gNB) to enable the first wireless apparatus to determine channel quality information (e.g., CQI) based on the precoding information. Depending on the implementation details, this may reduce or eliminate mismatch between precoding information and channel quality information reported by the first wireless apparatus to the second wireless apparatus.

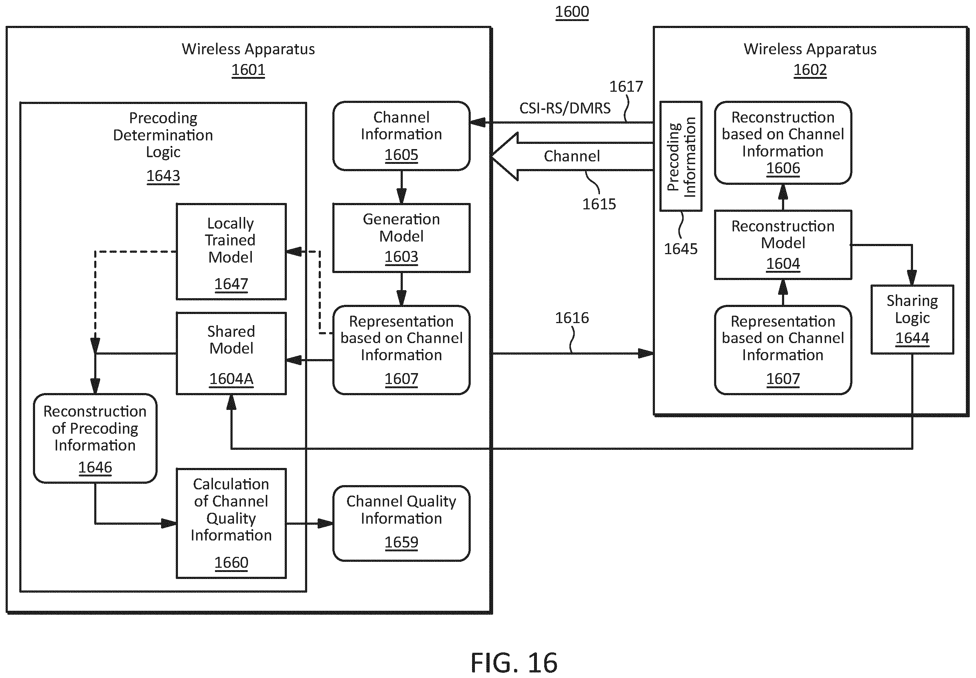

Fig. 16 illustrates an embodiment of a system having a pair of models to provide channel information feedback according to the disclosure. The system 1600 illustrated in Fig. 16 may be used to implement, or may be implemented with, any of the apparatus, models, training schemes, and/or the like disclosed herein. The system 1600 may include one or more elements (e.g., components, operations, and/or the like) that may be similar to those in the embodiments illustrated in Fig. 4 and/or Fig. 7 in which similar elements may be indicated by reference numbers ending in, and/or containing, the same digits, letters, and/or the like.

In the system 1600 illustrated in Fig. 16, a first wireless apparatus (e.g., a UE) 1601 may receive a signal (e.g., a reference signal) 1617 from a second wireless apparatus (e.g., a base station) 1602 through a channel 1615, for example, to enable the first wireless apparatus 1601 to determine channel conditions of the channel 1615. The second wireless apparatus 1602 may apply precoding information (e.g., a precoding matrix) 1645 to subsequent transmissions (e.g., PDCCH, PDSCH, and/or the like).

The first wireless apparatus 1601 may include precoding determination logic 1643. Additionally, or alternatively, the second wireless apparatus 1602 may include sharing logic 1644. The precoding determination logic 1643 and/or sharing logic 1644 may implement, individually and/or cooperatively, one or more schemes to enable the first wireless apparatus 1601 to determine (e.g., calculate) the precoding information 1645 (or a reconstruction thereof) which, in turn, may enable the first wireless apparatus 1601 to determine channel quality information 1659. Depending on the implementation details, enabling the first wireless apparatus 1601 to determine the precoding information 1645 applied by the second wireless apparatus 1602 may help reduce or eliminate mismatch between the precoding information 1645 (or a reconstruction thereof) and the channel quality information 1659 reported by the first wireless apparatus 1601 to the second wireless apparatus 1602.

In some example embodiments, the first wireless apparatus 1601 may generate a reconstruction 1646 of the precoding information 1645 using a reconstruction model (e.g., a decoder model). For example, the sharing logic 1644 at the second wireless apparatus 1602 may transfer a reconstruction model 1604 (e.g., information on model size, dimensions, weights, and/or the like) to the first wireless apparatus 1601 where the transferred model may be indicated as shared model 1604A.

Such an embodiment may be implemented, for example, with a generation model 1603 implemented with an encoder and a reconstruction model 1604 implemented with a decoder. The second wireless apparatus 1602 that may train the encoder 1603 and decoder 1604 (e.g., in an auto-encoder configuration). The sharing logic 1644 at the second wireless apparatus 1602 may transfer both the encoder 1603 and the decoder 1604A to the first wireless apparatus 1601, for example, using an over-the-air (OTA) transfer. The first wireless apparatus 1601 may use the encoder 1603 to generate a representation 1607 based on the channel information 1605 which may include, for example, channel measurements (e.g., a channel matrix). The second wireless apparatus 1602 may use the decoder 1604 to generate the precoding information (e.g., a precoding matrix) 1645 from the representation 1607. However, because the first wireless apparatus 1601 may also receive the decoder 1604A, it may use the decoder 1604A to generate reconstructed precoding information (e.g., a precoding matrix) 1646 that may be the same as, or similar to, the precoding information 1645. The first wireless apparatus 1601 may then use the reconstructed precoding information 1646 to perform a calculation 1660 to determine the channel quality information 1659.

The first wireless apparatus 1601 may transmit the channel quality information 1659 to the second wireless apparatus 1602 in any suitable manner. For example, the first wireless apparatus 1601 may combine the channel quality information 1659 with the representation 1607 generated by the generation model 1603 (e.g., by appending the channel quality information 1659 to the representation 1607) and transmit the combined channel quality information 1659 and representation 1607 to the second wireless apparatus 1602 using another channel (e.g., an uplink channel), signal, and/or the like 1616. In some embodiments, the second wireless apparatus 1602 may remove the channel quality information 1659 from the combined information prior to applying the representation 1607 to the reconstruction model 1604.

As another example, the first wireless apparatus 1601 may receive the reconstruction model 1604A from a server (e.g., using an OTA transfer) on a wireless network on which the first and second wireless apparatuses 1601 and 1602 may operate. In such embodiments, the reconstruction model 1604A may be identified and/or registered to the network, and the network may activate the reconstruction model 1604A using a model identifier. If the reconstruction model 1604A is shared by the second wireless apparatus 1602 with the first wireless apparatus 1601, the second wireless apparatus 1602 may share the reconstruction model 1604A corresponding to the activated generation model 1603.

In some additional example embodiments, the first wireless apparatus 1601 may generate the reconstruction 1646 of the precoding information 1645 using a locally trained reconstruction model 1647. For example, the first wireless apparatus 1601 may train a reference model (e.g., a reference decoder) 1647 that may match the reconstruction model 1604 used by the second wireless apparatus 1602. The first wireless apparatus 1601 may then use the locally trained model 1647 to generate (e.g., reconstruct) the precoding information 1646 which it may then use to determine (e.g., calculate) the channel quality information (e.g., CQI) 1659. One or more of these operations may be controlled, supported, and/or the like, individually and/or cooperatively, by the precoding determination logic 1643.

In some embodiments, the first wireless apparatus 1601 may implement a reference model as a reference decoder model (that may be the same as, or different from, a decoder model used by the second wireless apparatus 1602) that the first wireless apparatus 1601 may refine, for example, by fine-tuning. Alternatively, or additionally, the first wireless apparatus 1601 may implement a reference model using its own encoder model that the first wireless apparatus 1601 may use to train a decoder model that may be different from a decoder model used by the second wireless apparatus 1602, but which the first wireless apparatus 1601 may still use to determine a precoding matrix which, in turn, it may use to determine channel quality information to report to the second wireless apparatus 1602.

In some further example embodiments in which the first wireless apparatus 1601 (e.g., a UE) may report channel information 1605 (e.g., a channel matrix) to the second wireless apparatus 1602, a training data set including precoding information (e.g., one or more precoding matrices) 1646 calculated by the first wireless apparatus 1601 may be used. Thus, the first wireless apparatus 1601 may be aware of the corresponding precoding information 1645 obtained at the second wireless apparatus 1602. However, since the number of columns of a precoding matrix may correspond to a rank reported using an RI, the second wireless apparatus 1602 may not be aware of the size of precoding matrix, and in turn, a corresponding UCI payload size. In such an embodiment, the first wireless apparatus 1601 may report enough of a matrix (e.g., a full $N\_T \times N\_T$ matrix) to enable the second wireless apparatus 1602 to determine the precoding information (e.g., a precoding matrix) 1646. For example, the second wireless apparatus 1602 may then take a number of first columns of the matrix as a precoding matrix, wherein the number of first columns may be determined by (e.g., equal to) the rank as reported by the RI. In some embodiments in which the first wireless apparatus 1601 is implemented with a UE, the UE may use an existing algorithm to calculate a precoding matrix and then calculate CQI based on the precoding matrix. One or more of these operations may be controlled, supported, and/or the like, individually and/or cooperatively, by the precoding determination logic 1643.

Some additional embodiments according to the disclosure may reduce or eliminate mismatch between precoding information and channel quality information by jointly processing (e.g., compressing) channel information (e.g., a channel information matrix such as a channel matrix **(H)**, a precoding matrix **(P),** and/or the like) and channel quality information (e.g., CQI) that may be determined based on the channel information. For example, in some embodiments, a generation model and a reconstruction model may be trained (e.g., in an auto-encoder configuration) to jointly compress and/or decompress channel information and channel quality information that may be determined based on the channel information.

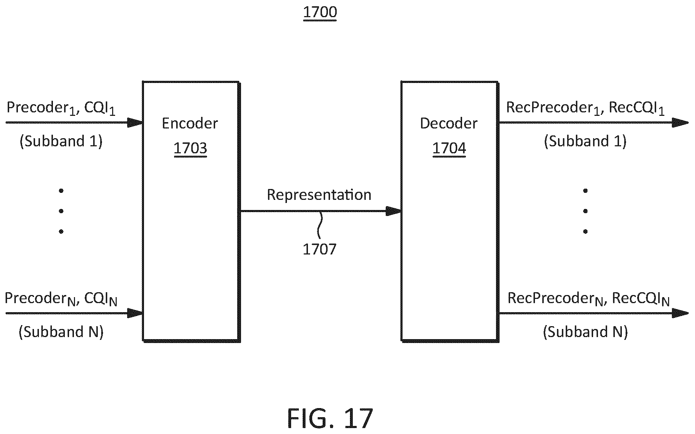

Fig. 17 illustrates an example embodiment of a pair of models that may be used for joint compression of channel information and channel quality information in accordance with the disclosure. The embodiment illustrated in Fig. 17 may be used, for example, to implement the generation model 403 and/or reconstruction model 404 illustrated in Fig. 4, as well as the encoder 703 and/or decoder 704 illustrated in Fig. 7.

Referring to Fig. 17, a generation model may be implemented with a machine learning encoder 1703, and a reconstruction model may be implemented with a machine learning decoder 1704. A precoding matrix and CQI for each subband $i$ (indicated as $Precoder_i$ and $CQI_i$, respectively, for $i$ = 1, ..., $N$, where $N$ may indicate the number of subbands) may be applied as inputs to the encoder 1703 which may generate a joint representation 1707 of the inputs. A reconstructed precoding matrix and CQI for each subband $i$ (indicated as $RecPrecoder_i$ and $RecCQI_i$, respectively, for $i$ = 1, ..., $N$), may be generated as outputs of the decoder 1704 based on the joint representation 1707.

The encoder 1703 and decoder 1704 may be trained using training data that may include, for one or more (e.g., each) subband i, target channel information (e.g., target CQI) that may be, or may be based on, a precoding matrix for the subband and the CQI calculated by the UE based on the corresponding precoding matrix. The UE may calculate the precoding matrix and/or corresponding CQI for a subband using one or more existing algorithms for precoding matrix and/or CQI calculations. Once the pair of models is trained (e.g., when used for inference) a reconstructed precoding output $RecPrecoder_i$ may match a corresponding reconstructed CQI output $RecCQI_i$, for example, because the precoding information and corresponding CQI may match in the training data used to train the pair of models 1703 and 1704. Alternatively, or additionally, the training data used to train the pair of models 1703 and 1704 may be generated by any other source (e.g., a network, a base station, and/or the like) that may provide training data that may include adequate matching between precoding information (e.g., a precoding matrix) and channel quality information (e.g., CQI). One or more of these operations may be controlled, supported, and/or the like, individually and/or cooperatively, by joint processing logic that may be located at a UE, a gNB, a network, or at any other location or combination thereof.

The training of the encoder 1703 and decoder 1704 may be performed at the UE, at a base station, at a network (e.g., a server) or any other location, and the trained encoder 1703 and decoder 1704 may be transferred to a location at which it will be used for inference. For example, the encoder 1703 may be transferred to a UE (if it was not trained at the UE), and the decoder 1704 may be transferred to a base station (if it was not trained at the base station).

Although the embodiment illustrated in Fig. 17 may be described in the context of one or more precoding matrices and/or CQI as inputs and/or outputs, any type of channel information, precoding information, and/or the like may be used as inputs and/or outputs. For example, in some embodiments, for each subband, a channel matrix may be applied as an input to the encoder 1703 in addition to, or as an alternative to, the precoding matrix. In such an embodiment, for each subband, a reconstruction of the channel matrix may be reconstructed by the decoder 1704 as an output in addition to, or as an alternative to, the reconstructed precoding matrix. In some embodiments in which a channel matrix may be applied an input to the encoder 1703 as an alternative to a precoding matrix, for each subband, a UE may calculate a precoding matrix as an intermediate result from which to calculate a corresponding CQI that may be applied to the encoder 1703.

Moreover, although the embodiment illustrated in Fig. 17 may be described in the context of multiple subbands, the principles may be applied to training a pair of models to jointly compress channel information and precoding information for multiple and/or single bands, subbands, and/or the like.

In some embodiments, in addition to potentially providing matching between channel information components such as CQI and precoding information, joint compression (e.g., for joint reporting) may provide one or more other potential benefits, depending on the implementation details. For example, employing different ML models (e.g., encoders and/or decoders) for reporting of each channel information quantity (e.g., RI, CQI, PMI, and/or the like) may increase the time, complexity, and/or the like, involved with training and/or inference for different models. However, embodiments in accordance with the disclosure may use joint compression (and/or joint reporting) for values such as RI, CQI, PMI, channel matrices, precoding matrices, and/or the like, which may, depending on the implementation details, reduce the time, complexity, and/or the like, involved with training and/or inference. Some embodiments may increase the size of a model used for joint compression and/or reporting based, for example, on different distributions of the channel information quantities, to improve compression performance. In some embodiments, a wireless apparatus (e.g., a UE) may be configured with different encoders and/or decoders wherein each encoder, decoder, pair of models, and/or the like, may be associated with an identifier (e.g., a model ID) and mapped to a certain combination of channel information quantities. In some embodiments, more than one model may be mapped to the same set of quantities wherein different encoders, decoders, pairs of models, and/or the like, (identified by different model IDs) may be used to address different channel environments, configurations, and/or the like.

CQI Compression Across Subbands

In an NR system, a UE may report CQI using compression with a differential scheme which may be based on the CQI of different subbands deviating around a wide-band value. For example, instead of reporting CQI using $4*N\_sb$ bits (where $N\_sb$ may indicate a number of subbands), a UE may report a wideband CQI value along with a differential value of CQI using 2 bits per subband. However, such a reporting scheme may not provide adequate compression in some implementations, especially, for example, in systems that may use frequency division duplexing (FDD) and/or increased antenna sizes which may have relatively large feedback reporting quantities.

Schemes for compressing and/or reporting channel information using machine learning in accordance with the disclosure may compress a combination of channel information for a set of subbands. Such an embodiment may be beneficial, for example, for compressing and/or reporting quantities such as CQI for which a UE may be configured to report subband CQI for one or more (e.g., each or a subset of) subbands for a channel information report. Depending on the implementation details, a scheme for compressing and/or reporting channel information on a subband basis using machine learning in accordance with the disclosure may exploit one or more correlations (e.g., in time, frequency, and/or spatial domains) to improve performance and/or flexibility, reduced complexity, and/or the like.

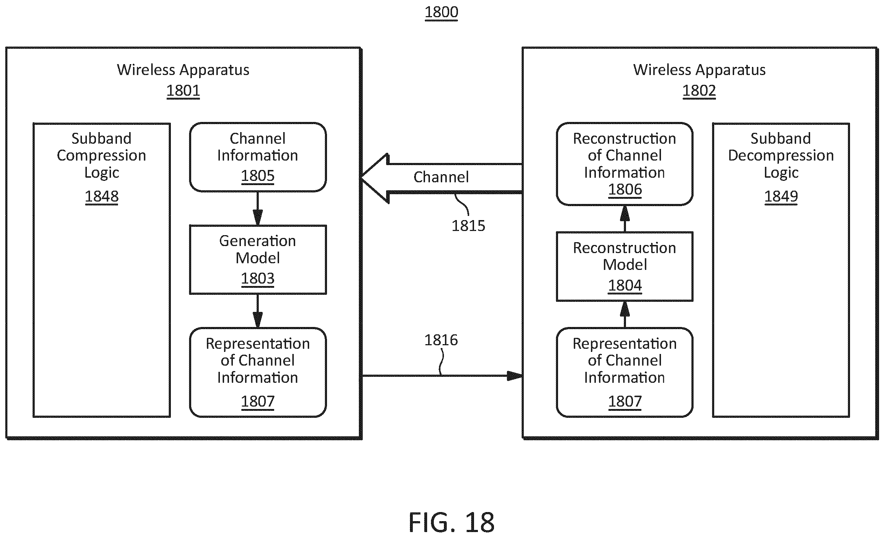

Fig. 18 illustrates an embodiment of a system having a pair of models to channel information based on one or more subbands according to the disclosure. The system 1800 illustrated in Fig. 18 may be used to implement, or may be implemented with, any of the apparatus, models, training schemes, and/or the like disclosed herein.

The system 1800 may include one or more elements (e.g., components, operations, and/or the like) that may be similar to those in the embodiments illustrated in Fig. 4 and/or Fig. 16 in which similar elements may be indicated by reference numbers ending in, and/or containing, the same digits, letters, and/or the like. However, in the system 1800 illustrated in Fig. 18, the first wireless apparatus 1801 may include subband compression logic 1848. Additionally, or alternatively, the second wireless apparatus 1802 may include subband decompression logic 1849. The subband compression logic 1848 and/or subband decompression logic 1849 may implement, individually and/or cooperatively, one or more schemes to enable the first wireless apparatus 1801 to compress a combination of channel information for a set of (e.g., one or more) subbands.

For example, at the first wireless apparatus 1801 (e.g., a UE) the subband compression logic 1848 may concatenate values of channel information 1805 for multiple subbands into a vector which may be compressed by generation model 1803 to generate a representation 1807 of the values of channel information 1805 for multiple subbands. At the second wireless apparatus 1802 (e.g., a base station), the reconstruction model 1804 may recover the vector, or an approximation of the vector, which the subband decompression logic 1849 may divide into individual subbands to generate the reconstructed channel information 1806, or an approximation thereof, for multiple subbands.

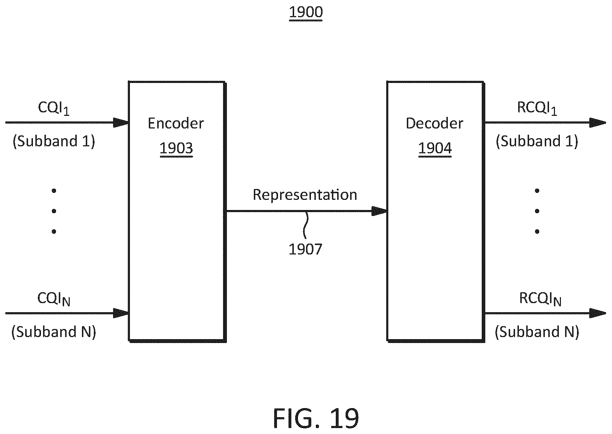

Fig. 19 illustrates an embodiment of a pair of models that may be used for CQI compression across subbands in accordance with the disclosure. The embodiment illustrated in Fig. 19 may be used, for example, to implement the generation model 1803 and/or reconstruction model 1804 illustrated in Fig. 18. For purposes of illustration, the first wireless apparatus 1801 and second wireless apparatus 1802 may be implemented as a UE and gNB, respectively, when used with the system 1900.

Referring to Fig. 19, a generation model may be implemented with a machine learning encoder 1903, and a reconstruction model may be implemented with a machine learning decoder 1904. A CQI vector ($CQI_1$, $CQI_2$, ..., $CQI_N$) may include a CQI value for one or more (e.g., each) of subbands 1, 2, ..., $N$ (where $N$ may indicate a number of subbands). The CQI vector ($CQI_1$, $CQI_2$, ..., $CQI_N$), may be formed, for example, by concatenating the individual CQI values $CQI_1$, $CQI_2$, ..., $CQI_N$ for the subbands. The CQI vector may be applied to the encoder 1903 such that each value $CQI_1$, $CQI_2$, ..., $CQI_N$ may be a separate input to the encoder 1903 as illustrated in Fig. 19. Alternatively, or additionally, the entire CQI vector may be applied to the encoder 1903 as a single input. The encoder 1903 may use the CQI vector and/or individual CQI values to generate a representation 1907 of the values of channel information for multiple subbands.

The decoder 1904 may receive the representation 1907 and generate reconstructed CQI values $RCQI_1$, $RCQI_2$, ..., $RCQI_N$ for subbands 1, 2, ..., $N$ as separate individual outputs and/or as a reconstructed vector ($RCQI_1$, $RCQI_2$, ..., $RCQI_N$) which may be divided (e.g., by subband decompression logic ) to provide individual outputs for one or more subbands.

In some embodiments, one or more of the CQI values $CQI_1$, $CQI_2$, ..., $CQI_N$ may be provided in the form of an input (e.g., a discrete input) to a CQI table (e.g., a CQI index which may be, for example, a scalar value between 0 and 15). For example, a CQI value $CQI_i$ (where $i = 1, 2, ..., N$) may be a 4-bit value if the CQI table has sixteen rows. Alternatively, or additionally, one or more of the CQI values $CQI_1$, $CQI_2$, ..., $CQI_N$ may be provided in the form of a continuous value (e.g., an arbitrary real number value) of a coding rate and/or a modulation order. In an embodiment using one or more continuous values as CQI values, a modulation and coding scheme (MCS) table with a relatively higher resolution may be used, for example, to accommodate a finer granularity indication by a gNB.

Depending on the implementation details, a scheme for compressing and/or reporting channel information (e.g., CQI) on a subband basis as described above with respect to Fig. 18 and Fig. 19 may exploit one or more correlations in the input data (e.g., between elements of a CQI vector) to improve performance and/or flexibility, reduced complexity, and/or the like. For example, an encoder 1903 may be able to compress a CQI vector having multiple elements with the same or similar value to a greater extent that a CQI vector having diverse values.

In some embodiments, one or more of the encoder 1903, decoder 1904, generation model 1803, and/or reconstruction model 1804 may be implemented with a machine learning model that may be adapted to work with inputs having different correlation properties. Thus, for example, a model used to compress CQI values across subbands may be specialized (e.g., a dedicated model as opposed to a general ML model) to improve or optimize compression performance based, for example, on ranges of input values, vector and/or matrix dimensions, weights, and/or the like.

Compression for Channel Information

In an NR system, a UE may use a codebook to compress a precoding matrix in spatial and/or frequency domains. For example, a UE may report (e.g., to a gNB) an RI and a PMI associated with the RI. The rank indicated by the RI and PMI may together be used to determine a precoding matrix. For example, a PMI may be selected from a set of supported matrices which may be referred to as codebooks. In some embodiments, a codebook may be implemented as a table of mappings between a set of "i" indices to a precoding matrix. For example, a UE may use the indices ($i\_1,1, i\_1,2, i\_1,3, i\_2$) with a Type-1 single panel codebook which may uniquely define a precoding matrix for a given rank. However, codebook compression schemes may not provide adequate compression in some implementations, especially, for example, in systems that may use frequency division duplexing (FDD) and/or increased antenna sizes which may have relatively large feedback reporting quantities.

Schemes for compressing and/or reporting channel information using machine learning in accordance with the disclosure may use one or more decoder models to generate precoding information and/or other information that may be used, for example, to determine precoding information. In some embodiments, such a scheme may mimic a codebook scheme and/or implement a hierarchical compression mechanism. In some embodiments, such a scheme may implement one or more encoders and/or decodes having specific structures for compression in time, frequency, and/or spatial domains. Depending on the implementation details, such a scheme may improve performance and/or flexibility, reduce complexity, and/or the like.

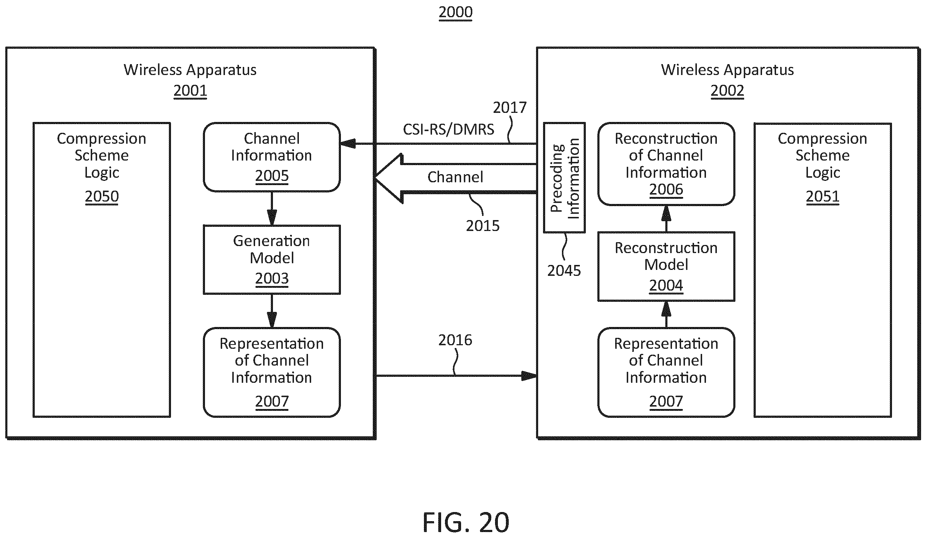

Fig. 20 illustrates an embodiment of a system having a pair of models to provide channel information compression according to the disclosure. The system 2000 illustrated in Fig. 20 may be used to implement, or may be implemented with, any of the apparatus, models, training schemes, and/or the like disclosed herein. The system 2000 may include one or more elements (e.g., components, operations, and/or the like) that may be similar to those in the embodiments illustrated in Fig. 4, Fig. 16, and/or Fig. 18 in which similar elements may be indicated by reference numbers ending in, and/or containing, the same digits, letters, and/or the like.

In the system 2000 illustrated in Fig. 20, a first wireless apparatus (e.g., a UE) 2001 may receive a signal (e.g., a reference signal) 2017 from a second wireless apparatus (e.g., a base station) 2002 through a channel 2015. The second wireless apparatus 2002 may apply precoding information (e.g., a precoding matrix) 2045 to the signal 2017. The first wireless apparatus 2001 may include compression scheme logic 2050. Additionally, or alternatively, the second wireless apparatus 2002 may include compression scheme logic 2051. The compression scheme logic 2050 and/or 2051 may implement, individually and/or cooperatively, one or more schemes to enable the first wireless apparatus 2001 and the second wireless apparatus 2002 to implement one or more compression schemes for generating a representation 2016 of the channel information 2005.

The embodiment illustrated in Fig. 20 is not limited to any specific forms of channel information 2005 applied to the generation model 2003 and/or any specific forms of reconstructed channel information 2006 generated by the reconstruction model 2004. For example, in some example embodiments, the generation model 2003 and the reconstruction model 2004 may be implemented with an encoder and a decoder, respectively (e.g., configured as an auto-encoder), which may be configured and/or trained to generate, using one or more compression schemes, precoding information from channel information such as a channel matrix. In such an embodiment, the first wireless apparatus 2001, which may be implemented as a UE, may perform one or more CSI-RS measurements to obtain channel information such as one or more channel matrices, eigenvectors, and/or the like. The UE may apply the channel information to an encoder to generate a codeword that the UE may send to the second wireless apparatus 2002 which may be implemented as a base station (e.g., a gNB). The base station may apply the codeword to a decoder to construct a precoding matrix. In such an embodiment, the codeword may mimic one or more codebook indices, and/or the decoder may mimic a codebook, but depending on the implementation details, a scheme with one or more decoders as described above may improve performance and/or flexibility, reduce complexity, and/or the like.

In other embodiments, however, the channel information 2005 and/or the reconstruction of channel information 2006 may be implemented in any other form. For example, rather than generating a precoding matrix as an output of the generation model 2003 based on channel information applied as an input to the generation model 2003, the generation model 2003 and the reconstruction model 2004 may be trained so the reconstruction model 2004 may reconstruct channel information, or an approximation thereof, applied as an input to the generation model 2003. The second wireless apparatus 2002 may then use the reconstructed channel information to determine (e.g., calculate) a precoding matrix. It yet other embodiments, the channel information 2005 and/or the reconstruction of channel information 2006 may be implemented with CQI, RI, and/or any other type of information.

In an embodiment in which an encoder at a UE and a decoder at a base station may be configured and/or trained to generate precoding information such as a precoding matrix from channel information such as a channel matrix, the output of the decoder (and post processing, if any) may be a precoding matrix. In some such embodiments, the UE may also be configured with a decoder that is trained to provide an output that is the precoding matrix. The decoder at the UE may be obtained, for example, from the base station which may share the decoder model including weights, input and/or output dimensions, and/or the like. In some embodiments, the UE and base station may have a common understanding of the decoder output type (e.g., how the precoding information may be constructed from the decoder output).

In embodiments in which a post-processing scheme may be applied after the decoder, the pre-processing scheme may be shared with the UE. The UE may be provided one or more implicit and/or explicit indications of how to construct precoding information (e.g., a precoding matrix) from an output of the decoder (and any post-processing, if any). For example, if the output dimension of the decoder is $N\_t * \nu$ where $\nu$ is a rank indicated by an RI, the precoder may be constructed by reshaping the output vector into an $N\_t \times v$ matrix on a column-wise and/or row-wise basis.

Some embodiments of training and/or testing schemes for the system illustrated in Fig. 20 are described below. For purposes of illustration, the embodiments of training and/or testing schemes may be described in the context of a system in which the first and second wireless apparatus 2001 and 2002 may be implemented with a UE and gNB, respectively, and the generation model 2003 and the reconstruction model 2004 may be implemented with an encoder and a decoder, respectively. The principles, however, are not limited to these or any other implementation details.

In a first embodiment of a training and/or testing scheme, the encoder and decoder may be jointly designed, configured, trained, and/or the like (for example, by a UE vendor and a gNB vendor, respectively), based on a training data set that may include a set $(X, Y)$ where $X$ may refer one or more CSI-RS measurements such as channel matrices of a set of CSI-RSs taken, for example, in a time and frequency window, and $Y$ may refer to precoding matrix that may be calculated, for example, by the UE. The decoder may be shared with (e.g., transferred to) the UE for use during inference, for example, to generate a precoding matrix the UE may use for CSI-RS measurements. During inference, the UE may apply the encoder in a manner similar to that used during training.

In a second embodiment of a training and/or testing scheme, a gNB may train the decoder using a training data set that may or may not be obtained from the UE. The gNB may share the decoder with the UE including the one or more weights, input and/or output dimensions, post processing, and/or the like. In some embodiments, the training of an encoder as well as one or more input type and/or dimension may be determined by the UE, based for example, on the implementation of the UE. When training the encoder, the UE may seek to minimize a loss function between the output of the decoder $P\_dec$ and a desired target precoder $P\_target$ which may be calculated by the UE. In some embodiments, the gNB may configure the UE with one or more time and/or frequency windows and the CSI-RSs used in the windows which may be used as training data to train the encoder. The UE may then use the trained encoder for inference.

In a third embodiment of a training and/or testing scheme, a gNB may train a decoder based on a training data set that may or may not be obtained from the UE may share the decoder with the UE including the one or more weights, input and/or output dimensions, post processing, and/or the like. In some embodiments, the training of an encoder as well as one or more input type and/or dimension may be determined by the UE, based for example, on the implementation of the UE. In this type of embodiment, however, the gNB may also share the training data set for training the encoder, including one or more inputs and/or labels, with the UE. The UE may then use the shared training data set to train the encoder for use during inference.

In any of the three embodiments of training and/or testing schemes described above, because the precoding matrix dominions may depend on the reported rank, the UE may apply one or more different models for one or more different reported ranks. For example, if a UE reports a first rank as the RI, the UE may use a first encoder model trained for a first decoder, while if UE reports a second rank as the RI, the UE may use a second encoder model trained for a second decoder model.

In any of the three embodiments of training and/or testing schemes described above, depending on the implementation details, the decoder may be characterized as performing a role similar to that of an NR codebook, however, with the potential for the machine learning decoder model to improve performance and/or flexibility, reduce complexity, and/or the like, compared to the use of a codebook.

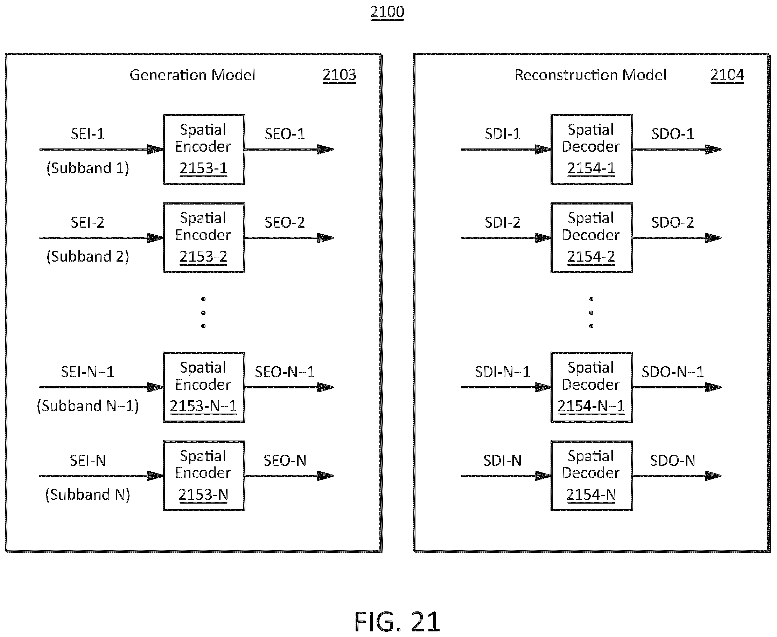

Fig. 21 illustrates a first embodiment of a pair of models that may be used for implementing a compression scheme in accordance with the disclosure. The embodiment 2100 illustrated in Fig. 21 may be used, for example, to implement the generation model 2003 and the reconstruction model 2004 illustrated in Fig. 20.

Referring to Fig. 21, the embodiment 2100 may include a generation model 2103 and a reconstruction model 2104 that may be configured, for example, to operate as an auto-encoder. The generation model 2103 (which may be located, for example, at a UE) may include one or more spatial encoders 2153-1 through 2153-N that may be arranged to receive one or more spatial encoder inputs SEI-1 through SEI-N, respectively, corresponding to channel information for subbands 1, 2, ..., N where N may refer to the number of subbands. The one or more spatial encoders 2153-1 through 2153-N may generate one or more spatially compressed outputs SEO-1 through SEO-N based on the corresponding encoder inputs SEI-1 through SEI-N, respectively.

The compressed outputs SEO-1 through SEO-N may be transferred to the reconstruction model 2104 (which may be located, for example, at a base station) where they may be applied as subband decoder inputs SDI-1 through SDI-N, respectively, to one or more spatial decoders 2154-1 through 2154-N, respectively. The one or more spatial decoders 2154-1 through 2154-N may spatially decompress the decoder inputs SDI-1 through SDI-N, respectively, to generate one or more decompressed outputs SDO-1 through SDO-N, respectively.

Although not limited to any specific implementation details, in some embodiments, the encoder inputs SEI-1 through SEI-N may be implemented as channel matrices $H\_1^i$ (where i=1, 2, ..., N) for the corresponding subbands, and the spatial encoder outputs SEO-1 through SEO-N may be implemented as representations $v\_1^i$ of precoding matrices $P\_1^i$ for the corresponding subbands. The spatial decoders 2154-1 through 2154-N may then generate the decompressed outputs SDO-1 through SDO-N as reconstructed precoding matrices $P^\_1^i$ from the representations $v\_1^i$ . Thus, reporting of precoding information may be performed independently in different subbands.

In some embodiments, the spatial encoders 2153-1 through 2153-N may perform spatial compression operations in parallel, for example, in embodiments in which the spatial encoders 2153-1 through 2153-N may be implemented with more than one set of hardware (e.g., a separate processor, circuit, and/or the like for each encoder). In some other embodiments, one or more of the spatial encoders 2153-1 through 2153-N may perform spatial compression operations sequentially, for example, in embodiments in which the spatial encoders 2153-1 through 2153-N may be implemented with fewer than N instances of hardware (e.g., single separate processor, circuit, and/or the like for all N encoders). Similarly, the spatial decoders 2154-1 through 2154-N may perform spatial decompression operations in parallel or sequentially depending, for example, on the number of hardware sets used to implement the decoders.

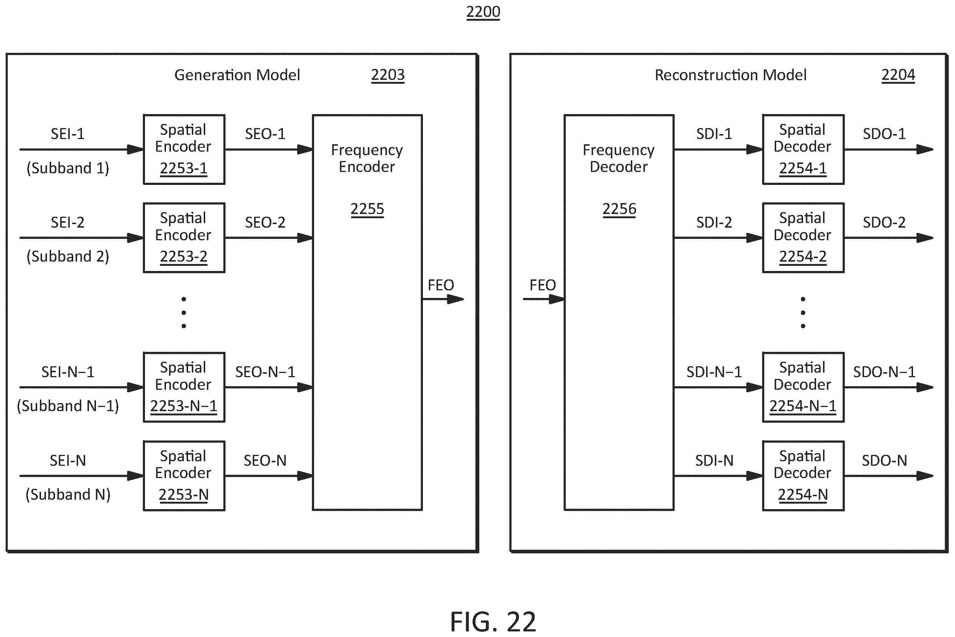

Fig. 22 illustrates a second embodiment of a pair of models that may be used for implementing a compression scheme in accordance with the disclosure. The embodiment 2200 illustrated in Fig. 22 may be used, for example, to implement the generation model 2003 and the reconstruction model 2004 illustrated in Fig. 20. The embodiment 2200 may include one or more elements (e.g., components, operations, and/or the like) that may be similar to those in the embodiment illustrated in Fig. 21 in which similar elements may be indicated by reference numbers ending in, and/or containing, the same digits, letters, and/or the like.

Referring to Fig. 22, the embodiment 2200 may include a generation model 2203 and a reconstruction model 2204 that may be configured, for example, to operate as an auto-encoder. The generation model 2203 (which may be located, for example, at a UE) may include one or more spatial encoders 2253-1 through 2253-N that may be arranged to receive one or more spatial encoder inputs SEI-1 through SEI-N, respectively, corresponding to channel information for subbands 1, 2, ..., N where N may refer to the number of subbands. The one or more spatial encoders 2253-1 through 2253-N may generate one or more spatially compressed outputs SEO-1 through SEO-N based on the corresponding encoder inputs SEI-1 through SEI-N, respectively.

The generation model 2203 may further include a frequency encoder 2254 that may be arranged to receive the one or more spatially compressed outputs SEO-1 through SEO-N and generate a spatially and frequency compressed representation FEO of the subband encoder inputs SEI-1 through SEI-N.

The compressed representation FEO may be transferred to the reconstruction model 2204 (which may be located, for example, at a base station) where it may be applied as an input to a frequency decoder 2256 that may generate one or more spatially decompressed outputs SDI-1 through SDI-N, corresponding to subbands 1, 2, ..., N, respectively, that may be decompressed in the frequency domain but still compressed in the spatial domain. The N outputs of the frequency decoder 2256 may be applied as inputs SDI-1 through SDI-N to one or more spatial decoders 2254-1 through 2254-N, respectively. The one or more spatial decoders 2254-1 through 2254-N may spatially decompress the decoder inputs SDI-1 through SDI-N, respectively, to generate one or more decompressed outputs SDO-1 through SDO-N, respectively, which may be decompressed in both the frequency and spatial domains. Thus, spatial compression and decompression of precoding information may be performed independently in different subbands, whereas frequency compression and decompression may be performed simultaneously across subbands.

Although not limited to any specific implementation details, in some embodiments, the inputs SEI-1 through SEI-N of the spatial encoders 2253-1 through 2253-N may be implemented as channel matrices $H\_1^i$ (where i=1, 2, ..., N) for corresponding subbands, and the spatial encoder outputs SEO-1 through SEO-N may be implemented as spatially compressed representations $v\_1^i$ of precoding matrices $P\_1^i$ for the corresponding subbands. The frequency encoder 2255 may compress the representations $v\_1^i$ in the frequency domain to generate the output FEO as a representation vector **v,** which may be compressed in both the frequency and spatial domains. The frequency decoder 2256 may decompress the representation vector **v,** in the frequency domain to reconstruct the spatially compressed representations $v\_1^i$ which may be applied as one or more inputs SDI-1 through SDI-N to the one or more spatial decoders 2154-1 through 2154-N which may then generate the decompressed outputs SDO-1 through SDO-N as reconstructed precoding matrices $P^\_1^i$ from the representations $v\_1^i$.

Thus, in the embodiment illustrated in Fig. 22, the generation model 2203 may operate in two stages. In a first stage, precoding information may be compressed at each subband independently via spatial domain compression. At this stage, N encoder models may be used, e.g., one encoder model for each subband. The models may be the same or different depending, for example, on various parameters relating to different subbands within a channel. In the second stage, one encoding model may be used to jointly compress, in the frequency domain, the spatially compressed precoding information of the subbands. In some embodiments, the outputs SEO-1 through SEO-N of the one or more spatial encoders 2253-1 through 2253-N may represent the precoding matrices of each subband without using inter-subband correlation. The frequency decoder 2256 may then frequency compress the per-subband, spatially compressed precoding matrices and compress them into a vector **v,** which may include information to represent all of the precoding matrices. Thus, the embodiment illustrated in Fig. 22 may provide frequency domain decompression and a per-subband decoder model which may reconstruct the precoding matrix for each subband.

In some embodiments, the spatial encoders 2253-1 through 2253-N and/or the frequency encoder 2255 may perform compression operations in parallel, for example, in embodiments in which the spatial encoders 2253-1 through 2253-N and the frequency encoder 2255 may be implemented with more than one set of hardware (e.g., a separate processor, circuit, and/or the like for each encoder). In some other embodiments, one or more of the spatial encoders 2253-1 through 2253-N and/or the frequency encoder 2255 may perform compression operations sequentially, for example, in embodiments in which the spatial encoders 2253-1 through 2253-N and/or the frequency encoder 2255 may be implemented with fewer than N+1 instances of hardware (e.g., single separate processor, circuit, and/or the like for all N+1 encoders). Similarly, the spatial decoders 2254-1 through 2254-N and/or the frequency decoder 2256 may perform spatial decompression operations in parallel or sequentially depending, for example, on the number of hardware sets used to implement the decoders.

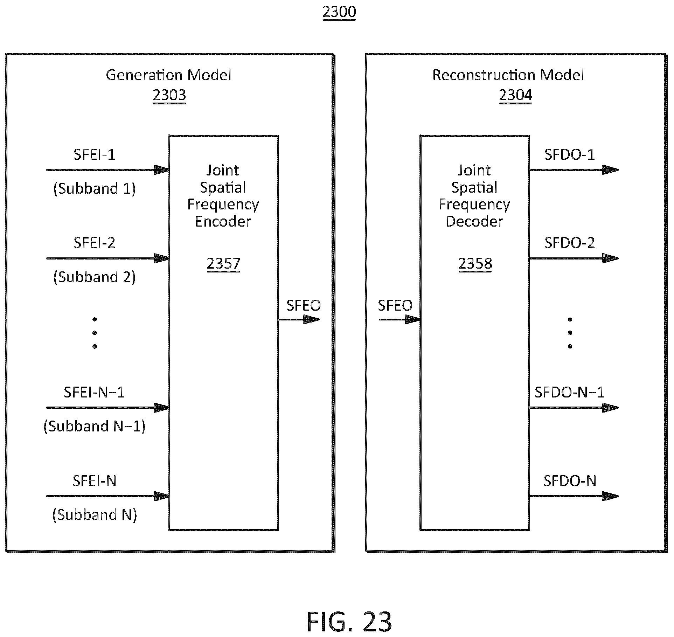

Fig. 23 illustrates a third embodiment of a pair of models that may be used for implementing a compression scheme in accordance with the disclosure. The embodiment 2300 illustrated in Fig. 23 may be used, for example, to implement the generation model 2003 and the reconstruction model 2004 illustrated in Fig. 20. The embodiment 2300 may include one or more elements (e.g., components, operations, and/or the like) that may be similar to those in the embodiments illustrated in Fig. 21 and/or Fig. 22 in which similar elements may be indicated by reference numbers ending in, and/or containing, the same digits, letters, and/or the like.

Referring to Fig. 23, the embodiment 2300 may include a generation model 2303 and a reconstruction model 2304 that may be configured, for example, to operate as an auto-encoder. The generation model 2303 (which may be located, for example, at a UE) may include a joint spatial and frequency encoder 2357 that may receive one or more encoder inputs SFEI-1 through SFEI-N, respectively, corresponding to channel information for subbands 1, 2, ..., N where N may refer to the number of subbands. The joint spatial and frequency encoder 2357 may generate an output SFEO that may be a spatially and frequency compressed representation of the encoder inputs SFEI-1 through SFEI-N.

The spatially and frequency compressed representation SFEO may be transferred to the reconstruction model 2304 (which may be located, for example, at a base station) where it may be applied as an input to a joint spatial and frequency decoder 2358 that may generate one or more decoder outputs SFDO-1 through SFDO-N, corresponding to subbands 1, 2, ..., N, respectively, that may be decompressed in the both the spatial and frequency domains. Thus, spatial and frequency compression may be performed simultaneously across subbands, and spatial and frequency decompression may be performed simultaneously across subbands.

Although not limited to any specific implementation details, in some embodiments, the inputs SFEI-1 through SFEI-N may be implemented as channel matrices $H\_1^i$ (where i=1, 2, ..., N) for corresponding subbands, and the output SFEO may be implemented as a representation vector v that may be a spatially and frequency compressed representation of N precoding matrices corresponding to the N subbands. The joint spatial and frequency decoder 2358 may decompress the representation vector v, in the spatial and frequency domains to recover the reconstructed precoding matrices $P^\_1^i$. Thus, in some implementations, in the embodiment 2300 illustrated in Fig. 23, the joint spatial and frequency encoder 2357 may be characterized as calculating the precoding matrices $P\_1^N$ jointly and compressing them into a vector v, and the joint spatial and frequency decoder 2358 may be characterized as recovering the matrices as $P^\_1^N$.

In some embodiments, spatial correlation may refer to correlation across one or more transmit (Tx) antenna ports. Any of the embodiments disclosed above may implement spatial compression individually (e.g., on a per-layer basis), or jointly across multiple (e.g., all) layers of a channel. For example, in some embodiments, a precoding matrix may be applied as an input to an encoder. For instance, a 4x3 precoding matrix may have three layers (e.g., columns) with each layer having a precoding vector of length four (e.g., four rows). In some embodiments, spatial compression may be implemented jointly across multiple layers (e.g., all layers) by applying the entire matrix to the encoder. Alternatively, or additionally, spatial compression may be implemented on a per-layer basis, for example, by applying layers (e.g., columns) of the matrix to the encoder one layer at a time (e.g., one vector (column) with four elements (rows) at a time). The number of layers may be indicated, for example, by RI.

In an NR system, one or more of the following constraints may be implemented on channel information reporting. A UE may calculate CSI parameters (if reported) assuming the following dependencies between CQI parameters (if reported): LI may be calculated conditioned on the reported CQI, PMI, RI, and CRI; CQI may be calculated conditioned on the reported PMI, RI, and CRI; PMI may be calculated conditioned on the reported RI and CRI; and/or RI may be calculated conditioned on the reported CRI.

In some embodiments, one or more of the ML-based compression and/or reporting schemes disclosed herein may implement one or more constraints that, depending on the implementation details, may be similar to those described above. Thus, in some embodiments, if a UE reports CQI, then CQI for one or more subbands (e.g., each subband) may be calculated based on the reported precoding information (e.g., precoding matrix) for that subband. For example, with the embodiment described with respect to Fig. 21, CQI for subband may be calculated based on the precoding matrix $\mathbf{P^\wedge}\_i$ which may involve sharing of the decoder with the UE. In an embodiment in which the decoder may not be shared with the UE, the UE may calculate the CQI based on the information for each subband #$i$. As another example, with the embodiments described with respect to Fig. 22 and Fig. 23, the UE may calculate the CQI for subband #$i$ based on the sub-band PMI $i$ or the decoder output $\mathbf{P^\wedge}\_i$ if the decoder is shared with the UE. In some embodiments, for the purpose of specifying this condition, the precoding information (e.g., PMI) of each subband may refer to the subband encoder output (or input) or the corresponding decoder output, which may, depending on the implementation details, assume that they each represent the subband precoding matrix.

In an NR system, the bit width of reported channel information quantities may depend on one or more RRC parameters. In some embodiments, the bit width used to report precoding information (e.g., PMI) may additionally depend on the rank reported by RI. Within a framework for reporting channel information using machine learning in accordance with the disclosure, if RI, CQI, and an encoder codeword (e.g., an output of encoder representing channel information) are all transmitted in the same PUCCH, then one or more mechanisms may be implemented to ensure the same understanding between a UE and a base station about the UCI payload size. Because a bit width for precoding information (e.g., PMI) may depend on the RI, in some embodiments, precoding information may be reported separately in a PUCCH other than the PUCCH carrying the RI. In some other embodiments, the UCI payload may be appended with one or more elements (e.g., zeros) where the number of the elements may depend on the indicated rank. For example, if $N_{max}$ is the maximum UCI payload size over all possible supported ranks, then for a given rank v to report with a payload size of $N(v)$ a UE may append $N_{max-v}$ zeros to the UCI payload.

Processing Time

In some embodiments (e.g., as part of life cycle management (LCM)), a base station may instruct a UE to update a current active model (e.g., to fine tune a new data set), switch to a new model, activate a new model, deactivate a model, and/or the like. When updating a model, if a UE is instructed to update an encoder model based on an online training set (which may be collected via channel estimation, RRC configured, MAC-CE activated, and/or the like) the UE may use (e.g., require) a minimum amount of time to update the model. A UE may use (e.g., require) a minimum amount of time regardless of whether UE will share its updated model with the base station.

In some embodiments, if the online training set is collected by a UE via online channel estimation, the UE may not be expected to update the model before the expiration of an amount of time that may be expressed, for example, as a number of symbols (which may be referred to, for example, as $N\_(AIML, upadte)$ symbols) from the end of the last symbol of the latest CSI-RS used for the online training set. In some embodiments, if the UE is configured to report the updated model to the base station, the UE may not be expected to report the model to the gNB earlier than an amount of time that may be expressed, for example, as a number of symbols (which may be referred to, for example, as $N\_(AIML, report)$ symbols) from the last symbol of the latest CSI-RS used in the training set.

In some embodiments, if a training set is RRC configured to a UE, the UE may not be expected to update, or update and report, an encoder earlier than an amount of time that may be expressed, for example, as a number of symbols (which may be referred to, for example, as $N$ symbols) from the latest symbol at which an update command may have been triggered.

In some embodiments, when a UE is instructed to switch to a new model, the UE may be provided with a processing time similar to that provided for updating a model. For example, if a UE receives a command (e.g., via DCI, MAC CE, RRC, and/or the like) to switch to a new model, the UE may not be expected to switch to the model (which may involve activating the model) before a period of time that may be expressed as a number of symbols (which may be referred to, for example, as $N\_(AIML, switch)$ symbols) from the end of the last symbol at which the switch command may be delivered to the UE (e.g., the last symbol of the PDCCH).

In some embodiments, a similar processing time may be provided to a UE for activating a model. For example, if UE receives a command (e.g., via DCI, MAC CE, RRC, and/or the like) to activate and/or deactivate to a model, the UE may not be expected to activate and/or deactivate the model before a period of time that may be expressed as a number of symbols (which may be referred to, for example, as $N\_(AIML, activate)$ and/or $N\_(AIML, deactivate)$ symbols) from the end of the last symbol at which the switch command may be delivered to the UE (e.g., the last symbol of the PDCCH).

In some embodiments, one or more of the processing times described above may be described in time units based on the subcarrier spacing (SCS) numerologies of the cell delivering the command and/or the cell the model may be tested for (e.g., the cell the corresponding CSI report may be transmitted on). In some embodiments, the SCS of the cell the model is active on may also be considered. For example, a number of symbols used to express an amount of time (such as those mentioned in the methods described above) may be described in terms of the smallest SCS among the SCS values.

In some embodiments, a UE may declare (e.g., based on a query by a base station) one or more capabilities for processing time, for example, PDSCH and/or PUSCH processing time capabilities. Additionally, or alternatively a UE may also declare a capability for any of the processing times disclosed herein. For example, in some embodiments, a UE may declare a minimum amount of time or minimum number of symbols it may support (e.g., may use or require) for $N\_(AIML, upadte)$, $N\_(AIML, switch)$ and
$N\_(AIML, activate)/N\_(AIML, deactivate)$. For instance, a UE may declare to a base station that it has a capability (e.g., minimum processing time) for model switching of 20 symbols which may mean that the UE may not be expected to switch to the new model before 20 symbols after the ending symbol of the switch command.

Reporting with Separate Models

Within an AI/ML channel information reporting framework, if a UE reports a channel matrix, a gNB may infer the channel quality including the rank, eigenvectors, and/or eigenvalues, and hence the SVD precoding matrix. However, since the performance may depend on UE downlink signal processing, including the UE's capability on supported rank, its UE-specific precoding information (e.g., precoding matrix) calculation algorithm, within an AI/ML CSI reporting framework, a UE may also report one or more other values such as RI and/or CQI. For purposes of illustration, some embodiments of reporting schemes based on AI/ML (which may be referred to as ML) may be described in the context of systems performing AI/ML CSI reporting by reporting of a CSI matrix (e.g., a channel matrix, a precoding matrix, and/or the like) via an auto-encoder, however the principles are not limited to use with auto-encoders.

In some embodiments, in addition to the CSI matrix reporting, a UE may also report RI and CQI either via existing reporting or an AI/ML framework. With an AI/ML framework, a UE may be configured with subbands to report the CSI matrix for each or a subset of subbands according to a bitmap. Some examples of reporting of RI, PMI, and/or CQI are described below.

NR CSI reporting, a UE may only report one RI for all of the sub-bands specified in a CSI report configuration. The same approach may also be adopted for some embodiments of an AI/ML CSI reporting framework. In some additional embodiments, one or more RI values corresponding to one or more (e.g., each) sub-band may be reported by concatenating them into a vector and compressing the vector, which , depending on the implementation details, may be similar to CSI matrix compression. Since the correlation properties of the RI vector can be different from that of CSI matrices, an ML model (e.g., network) that may be different from one used for CSI matrix compression may be used to compress the RI vectors. For example, an ML model for RI reporting may have input and/or output dimensions, weights, and/or the like, that may be customized for compression RI vectors.

CSI matrix reporting based on an may be performed in accordance with any of the schemes disclosed herein. In some embodiments, a UE may be configured to report a CSI matrix for each or a subset of subbands according to a CSI report configuration.

CQI reporting based on an AI/ML framework may be performed in accordance with any of the schemes disclosed herein.

In some embodiments, if a UE is configured to report one or more of the three quantities discussed above (e.g., RI, CSI, and/or CQI) separately in different PUCCHs, to reduce the input size of the second model (CSI matrix reporting model), a UE may report the different quantities (e.g., three quantities) in different phases via PUCCHs using time domain multiplexing (TDM). For example, a UE may report an RI in a first PUCCH. The UE may report a CSI matrix having dimensions that may depend on the reported RI in a second PUCCH, for example, because a gNB may only be able to decode the second PUCCH after successfully decoding the first PUCCH. Depending on the implementation details, decoding of the first and the third PUCCH may be performed any time, but the second PUCCH may only be decoder after the first PUCCH decoding. One or more of these aspects may be based on an assumption that PUCCH decoding may involve running the decoder model of an auto-encoder at a gNB.

Model ID-based Life Cycle Management

Some communication systems according to the disclosure may implement an LCM scheme based on model IDs. In some embodiments of model-ID based LCM, one or more UE capabilities may be based on a number of models and/or functionalities. In some model ID-based LCM schemes, models may be identified and/or registered to a network. However, it may be redundant for a UE to identify two different models which are logically the same or similar and correspond to the same or similar physical models. Thus, some embodiments may assume that each logical model identified to a base station has a distinct physical model. Alternatively, one logical model may correspond to multiple different physical models (e.g., a UE may have a low-complexity model and a high complexity model for a given artificial intelligence and/or machine learning feature and/or functionality. Once models are identified, a UE may report which models it supports to the base station. Some embodiments may support a relatively large number of models in a functionality-based LCM system and/or a model-ID based LCM, for example, due to the nature of model identification and capability reporting.

However, one aspect that may potentially be problematic is the possibility of having multiple physical models for one identified logical model. In some embodiments, this type of condition may be handled in a UE capability report because the UE may be aware of the condition and may adjust a capability report to accommodate the condition.

In some embodiments, a UE capability report may include one or more details that may enable a UE to report to a base station which models among the identified models UE may support. In a reporting (e.g., signaling) scheme for such details one portion (e.g., a first part) of the reporting may include a UE vendor ID. Additionally, or alternatively, another portion (e.g., a second part) of the reporting may include one or more indices of the supported models identified by the UE vendor. For example, a bitmap of length N may be used (e.g., by a vendor) to identify $N$ models to a base station such that each of the $N$ elements of the bitmap may correspond to one identified model (e.g., in ascending or descending order of the model ID). From the perspective of a UE and/or a base station, once the vendor is identified, the identified models may be assigned local logical IDs from 0 to $N$ - 1. The UE may then declare support for the identified models using the bitmap.

In addition to indicating one or more supported model IDS to a base station, a UE may also declare (e.g., as a capability report) the maximum number (e.g., $N_{active,max}$) of simultaneously activated models it may support. The UE may then expect that the base station will not activate more than $N_{active,max}$ models simultaneously.

In some embodiments, to accommodate additional complexity that may be caused by running multiple physical models for the same identified logical model, a UE may also report a scalar value $\alpha_i > 1$, for each supported model ID $i$ where $\alpha$ may be identified to the network during model identification. The UE may not expect that the base station may activate more than $N_{active,max}$ models simultaneously, where the number of activated models may be calculated considering the scaling value $\alpha_i$. Thus, if a base station activates models with IDs in a set $S \subset \{0, ... , N$ - $1\}$, the number of activated models may be calculated as

$$\text{Number of activated models} = \sum_{i \in S} \alpha_i \qquad \text{(Eq. 8)}$$

which the UE may expect to be not greater than $N_{active,max}$.

Some additional aspects of the disclosure relate to meta information and/or coexistence with other RRC configurations. A type of information referred to as meta information may be revealed to a network when a model is identified. In different embodiments, meta information may include different types of information. For example, in some embodiments, meta information may include some (e.g., all) information that may be used by a model for inference operations. In such embodiments, a base station may activate a specific model that may be similar or equivalent to perform some (e.g., all) RRC configuration that may be used by a model for inference operations. When a base station activates a model ID, it may have the effect of activating a specific CSI report configuration. In some NR implementations, a CSI report configuration may include information on sub-band configuration, codebook type, and/or the like, and all of this information may be included in the meta information. Such a method may reduce RRC overhead, but may reduce the flexibility of the base station because, for example, (1) some (e.g., each) functionality and/or RRC configuration may be done via model identification, and/or (2) unlike some NR implementations, the base station may not configure the meta information.

Some additional aspects of the disclosure relate to model transfer and/or delivery. In some communication systems, model delivery (e.g., downloading a model from a server) may not be part of a specification. However, a specification may include model transfers (e.g., transferring a model to a UE covered by a specification using signaling provided by the specification. Some embodiments according to the disclosure may implement one or more of the following techniques for model transfer to a UE.

Some embodiments may transfer one or more weights of a known model structure. For example, to transfer a model to a UE, the structure of the model may be established between the UE and a base station (e.g., by specifying a pool of structures such as standard structures) that may each have an ID. A UE may declare its support for certain structures as UE capability signaling. To transfer a model, a base station may indicate to the UE a structure ID specifying the structure and then transmit the NN weights using a downlink channel (e.g., PDSCH). The mapping between the vectorized weights and network structure may be specified in the specification. A base station may also indicate a model ID when it transfers network weights to a UE.

Some embodiments may transfer a model as a model ID. For example, UE and base station vendors may develop multiple models offline and store them on a server and/or in a registry. The base station may then indicate to the UE the applicable model ID. The UE may then retrieve the model from the server using the model ID.

Some embodiments may implement a model transfer with an indication of data set ID and/or an additional ID (e.g., an additional condition ID). For example, a base station may indicate a data set ID or an additional condition ID to the UE. The UE may know which model to use based on a mapping between trained models and the data set ID in the training phase. Thus, in some embodiments, one or more IDs intended for a different purpose may be used as a model ID.

Any of the techniques discussed above relating to model-ID based LCM may be applied in the context of CSI compression, CSI prediction, and/or the like.

Some additional aspects of the disclosure relate to model identification schemes for CSI feedback in systems using noncoherent joint transmission (NCJT). For example, with NCJT CSI reporting for a UE receiving transmissions from multiple transmission reception points (TRPs), the UE may report CSI for different TRP (e.g., base station) transmission hypotheses. The UE may be configured to report $X$ CSIs associated with single-TRP measurement hypotheses (where $X = 0, 1, 2$) and one CSI associated with an NCJT measurement hypothesis. These different hypotheses may result in different precoding matrices to be reported. Since the UE may report different precoder matrices for different transmission schemes, the AIML encoder/decoder pairs (e.g., auto-encoders) may be different for different hypothesis. Some embodiments according to the disclosure may implement one or more of the following techniques for NCJT CSI reporting.

Regarding a model ID, if the NCJT CSI reporting corresponds to $M$ different hypothesis, the corresponding model ID may include $M$ individual model IDs (e.g., pairing IDs) for $M$ different auto-encoders. Therefore, model IDs may be expressed in the form of an M-tupple (ID#1,..., ID#$M$). Additionally, or alternatively, it may be assumed that UE may use the same model for any sTRP CSI. For example, if a UE reports CSI for three hypotheses: sTRP #1, sTRP#2, and an NCJT transmission, the ID may take the form of a pair (ID for a model used for sTRP, ID a model used for NCJT).

In some embodiments, LCM for a model used for NCJT CSI feedback may be implemented in a manner similar to that used for single TRP report with the following differences: (1) for model activation, switching, deactivation, and/or other model ID based LCM, a base station may indicate the model in the form of NCJT (e.g., a tuple); and/or (2) A CSI report configuration for NCJT may include IEs that indicate the model ID in the form of a tuple.

CSI Payload Size Based on Number of Models and/or Features

The use of a relatively low number of encoder models (e.g., a single model or just a few models) to report different numbers of sub-bands and/or different CSI payload sizes (e.g., outputs of the encoder(s)) may help maintain relatively low hardware complexity at a UE. Thus a single CSI generation model may be implemented with a relatively large number $N$ of output features to accommodate the largest number of anticipated features that may be used. However, in some cases, a relatively small number a sub-bands may be reported, and thus, the actual number $M$ of transmitted features may be less than $N$, thereby resulting in a compression rate that may be unnecessarily low.

In such a case, an embodiment in accordance with the disclosure may provide the UE and a base station with a common understanding of which $M$ features are transmitted and which $N - M$ features are punctured. This may enable the base station to apply the received features correctly to the $N$ corresponding input features of the CSI reconstruction model. The generation model at the UE and the reconstruction model at the base station may be trained such that the punctured features are set to fixed values (e.g. zero) at the reconstruction model.

During an inference operation, the base station may indicate to the UE (e.g., statically and/or dynamically, via RRC, DCI, MAC CE signaling and/or the like) which set of features the UE may transmit. In one example implementation (which may be relatively efficient), an order may be established among the set of features (e.g., $M$ features), and the base station and/or UE may indicate a number (e.g., $N$) of features that are transmitted.

In some embodiments, once a model pair is activated, a base station may provide to a UE (e.g., via RRC, DCI, MAC CE signaling and/or the like) information about the CSI payload. The payload information may be provided, for example, using an index.

One type of CSI payload information may include a CSI payload size expressed, for example, in terms of the number of features. For example, if a generation mode (e.g., an encoder) generates a CSI output codeword having a length $N$, a base station may indicate an actual CSI payload having a size $M$ which may be smaller than, equal to, or greater than $N$. In such an embodiment, the UE may only transmit $M$ features from the encoder output (e.g., after proper quantization).

Another type of CSI payload information may include a set of transmitted features. For example, an index may determine which subset of $M$ features from within the set of $N$ features the UE may transmit. In some embodiments, an index may correspond to a bitmap of length $N$, where a first binary value (e.g., 1 or 0) may indicate that the feature is transmitted and a second binary value (e.g., 0 or 1) may indicate that the feature is not transmitted. In some embodiments, a UE may transmit $M$ features in ascending order of their index. Additionally, or alternatively, a set of transmitted features may be indicated using a starting index and the length (number) of the transmitted features. Depending on the implementation details, this may simplify the implementation. The CSI payload information may indicate, for example, a starting index of 10 and a length of 20 from among a CSI codeword having $N = 30$ features. In this case, in which a CSI codeword may include a set of features $(x\_1, x\_2, ..., x\_10, x\_11, ..., x\_29, x\_30)$, the UE may transmit $(x\_10, ..., x\_29)$ after quantizing the transmitted features.

Another type of CSI payload information may include one or more of a quantization method, granularity, and/or the like, which may indicate to the UE how to quantize the $M$ transmitted CSI codeword features.

Codebook Subset Restriction

As mentioned above, a UE may provide CSI feedback to a base station using a codebook to indicate a PMI selected by the UE based on DL channel conditions measured in response to a reference signal. The base station may then use the PMI for beamforming in the DL channel. However, in some situations, the use of specific PMIs may result in beamforming that may cause interference (e.g., with a neighboring cell). Thus, some communication systems may implement a codebook subset restriction (CBSR) feature which may restrict a UE from using specific portions of a codebook for channel estimation and/or feedback. For example, a base station may restrict a UE from reporting specific PMIs by setting specific basis vector coefficients to zero (e.g., using a bitmap). Thus, the UE may select beams and/or coefficients among the non-restricted set thereby ensuring that the UE may only report PMIs that are orthogonal to (e.g., do not interfere with) a restricted PMI. However, in a system that uses artificial intelligence and/or machine learning to generate and/or compress CSI, there may be no basis vector for a reported precoder. Thus, a UE may not be able to determine restricted PMIs.

Restricted Sub-Space Information for CSI Feedback Using AI/ML

In a wireless communication system in accordance with the disclosure, a UE may be provided with restriction information relating to a channel. This may enable the UE to ensure that a precoder or other CSI feedback determined using artificial intelligence and/or machine learning may result in beamforming that is orthogonal to (e.g., does not interfere with) a restricted sub-space for the channel.

For example, in a system that uses a linear transform such as an angular delay transform to determine a precoder from the output of a decoder model, a base station may configure a UE with a restricted sub-space and/or decoder output values (e.g., coefficients that may be zero at specific indices). In embodiments that share a decoder model with the UE, the UE may generate CSI that causes the decoder outputs to be zero at specified indices. In embodiments that do not share a decoder model with the UE, the UE may be provided with information to ensure that the encoder input is the same type and/or format as the decoder output. The UE may then apply the sub-space restriction (e.g., specific indices corresponding to zero coefficients) to the encoder input which may result in the decoder output having coefficients of zero at the corresponding indices.

As another example, in a system that uses an output of a decoder model as CSI (e.g., a decoder model generates a precoder matrix as an output), a base station may configure a UE with a restricted sub-space. In embodiments in which a decoder model is shared with the UE, the UE may ensure that the decoder output is orthogonal to the restricted sub-space. In embodiments in which a decoder model is not shared with the UE, the UE may ensure that the encoder input is orthogonal to the restricted sub-space which, in turn, may ensure that the decoder output is adequately orthogonal to the restricted sub-space.

As a further example, a system may use information about a restricted sub-space as an input (e.g., an explicit input) to an encoder model. For example, an encoder model may be trained using a restricted sub-space as an input to the model in a manner that may cause an output of a corresponding decoder model to be within a sub-space that may be orthogonal to the restricted sub-space.

For convenience, precoders, PMIs, coefficients, indexes (indices), matrixes (matrices), vectors, sub-carriers, subbands, sub-spaces, subchannels, and/or any other elements may be referred to, and/or characterized as, orthogonal if they contribute, directly or indirectly, to transmissions that are orthogonal. Orthogonality may be determined, for example, in a time domain, space domain, frequency domain, and/or code domain.

Fig. 24 illustrates an embodiment of a communication system using channel restriction information and artificial intelligence and/or machine learning to provide channel information feedback according to the disclosure. The system 2400 illustrated in Fig. 24 may be used to implement, or may be implemented with, any of the apparatus, models, training schemes, and/or the like disclosed herein. The system 2400 may include one or more elements (e.g., components, operations, and/or the like) that may be similar to those in the embodiments illustrated in Fig. 4, Fig. 7, and/or other drawings in which similar elements may be indicated by reference numbers ending in, and/or containing, the same digits, letters, and/or the like.

In the system 2400 illustrated in Fig. 24, a first wireless apparatus (e.g., a UE) 2401 may receive a reference signal 2417 from a second wireless apparatus (e.g., a base station) 2402 through a channel 2415, for example, to enable the first wireless apparatus 2401 to determine channel conditions of the channel 2415. The second wireless apparatus 2402 may apply precoding information (e.g., a precoding matrix) 2445 to some transmissions such as PDCCH, PDSCH, and/or the like, as well as some reference signals such as CSI-RS.

The first wireless apparatus 2401 may perform channel measurements based on the reference signal 2417 and channel conditions to generate channel information (e.g., a channel estimation, a channel matrix, precoding information, and/or the like) 2405 that it may send to the second wireless apparatus 2402, for example, in the form of a representation 2407 that it may generate using a generation model 2403. The first wireless apparatus 2401 may send the representation 2407 to the second wireless apparatus 2402, for example, using another channel (e.g., an uplink channel), signal, and/or the like 2416.

The first wireless apparatus 2401 may also receive restriction information 2461 relating to the channel 2415 from the second wireless apparatus 2402. The restriction information 2461 may enable the first wireless apparatus 2401 to ensure that the channel information 2405 it generates may comply with one or more channel restriction requirements indicated by the restriction information 2461. For example, the restriction information 2461 may include information about a restricted sub-space for precoding information. CSI determination logic 2443 at the first wireless apparatus 2401 may implement one or more schemes as described in more detail below to ensure that precoding information generated by the first wireless apparatus 2401 is orthogonal to the restricted sub-space. Thus, the CSI determination logic 2452 may use the restriction information 2461 to interact with the channel information 2405, generation model 2403, and/or representation 2407 to ensure that the representation 2407, after being applied to a reconstruction model 2404 at the second wireless apparatus 2402, results in a reconstruction 2406 (e.g., precoding information 2445 such as a precoding matrix) that the second wireless apparatus 2402 may use to send transmissions through the channel 2415 that are orthogonal to a restricted sub-space indicated by the restriction information 2461.

In some embodiments, the generation model 2403 and the reconstruction model 2404 may be trained (e.g., in an auto-encoder configuration) to jointly compress and/or decompress the channel information using any training scheme, including one or more joint training and/or deployment frameworks disclosed herein.

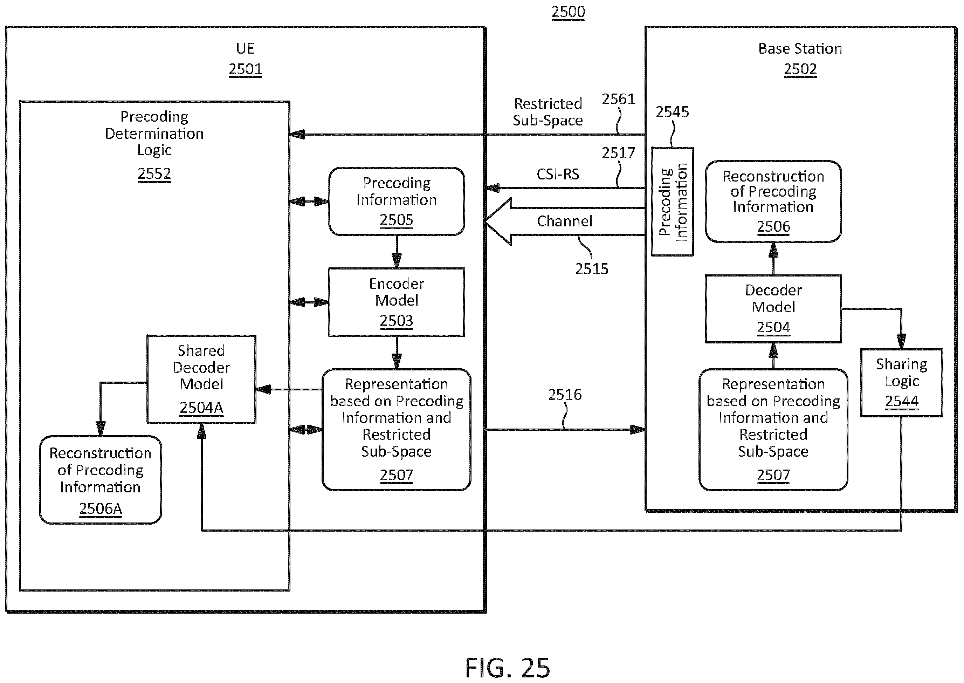

Fig. 25 illustrates an example embodiment of a communication system in which a decoder model is shared with a UE that is configured with a restricted sub-space according to the disclosure. The system 2500 illustrated in Fig. 25 may be used, for example, to implement the system 2400 illustrated in Fig. 24 in which similar elements may be indicated by reference numbers ending in, and/or containing, the same digits, letters, and/or the like. For example, referring to Fig. 25, for purposes of illustration, the first communication apparatus may be implemented with a UE 2501, the second communication apparatus may be implemented with a base station 2502, the restriction information may be implemented with a restricted sub-space 2561, the CSI determination logic may be implemented with precoding determination logic 2552, the channel information may be implemented with precoding information 2505, the generation model may be implemented with an encoder model 2503 (which may also be referred to as an encoder), and/or the reconstruction model may be implemented with a decoder model 2504 (which may also be referred to as a decoder).

In various embodiments, the restricted sub-space 2561 may be expressed, for example, with one or more of a matrix, a column space of a matrix, a vector, an indication (e.g., using one or more indices) of one or more decoder outputs that may be set to a specific value (e.g., zero), and/or the like, and/or multiples and/or combinations thereof.

In various embodiments, the precoding information 2505 may be expressed, for example, with one or more of a precoder (e.g., precoding matrix, vector, and/or the like), set of coefficients from which the final (e.g., reconstructed) precoding information 2506 may be calculated (e.g., based on an angular delay transform and/or any other linear transform), and/or the like, and/or multiples and/or combinations thereof.

The UE 2501 may be configured with the restricted sub-space 2561, for example, via RRC, DCI, MAC CE signaling and/or the like.

The encoder model 2503 and the decoder model 2504 may be trained (e.g., in an auto-encoder configuration) to jointly compress and/or decompress the precoding information 2505 using any training scheme, including one or more joint training and/or deployment frameworks disclosed herein.

Sharing logic 2544 at the base station 2502 may share the decoder model 2504 by transferring information about the model size, dimensions, weights, and/or the like, to the UE 2501 which may use the transferred information to implement a shared model 2504A. The sharing logic 2544 may transfer information about the decoder model 2504, for example, using an over-the-air transfer.

Because the UE 2501 has access to a shared version 2504A of the decoder model 2504 used by the base station 2502, the UE 2501 may observe a version 2506A of reconstructed precoding information 2506 that may be generated at the base station 2502. In such an embodiment, and depending on the implementation details, few, if any, restrictions may be placed on the inputs that the UE 2501 may apply to the encoder model 2503. For example, in some embodiments, as long as the inputs applied to the encoder model 2503 cause the reconstructed precoding information 2506A generated at the shared decoder model 2504A to be orthogonal to the restricted sub-space 2561, the reconstructed precoding information 2506 generated by the decoder model 2504 at the base station 2502 should also be orthogonal to the restricted sub-space 2561.

Thus, in some embodiments, the precoding determination logic 2552 may be free to implement any scheme for determining the precoding information 2505, and the resulting representation 2507 generated by the encoder model 2503 and sent to the base station 2502 (e.g., using an uplink channel, signal, and/or the like 2516) should cause the reconstructed precoding information 2546 at the base station 2502 to be orthogonal to the restricted sub-space 2561.

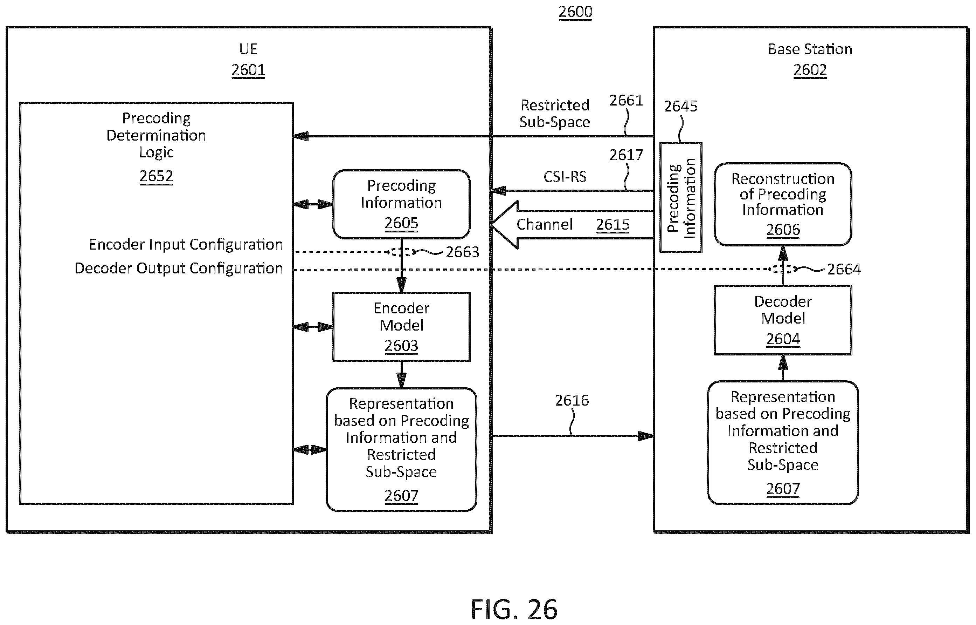

Fig. 26 illustrates an example embodiment of a communication system in which a decoder model is not shared with a UE that is configured with a restricted sub-space according to the disclosure. The system 2600 illustrated in Fig. 26 may be used, for example, to implement the system 2400 illustrated in Fig. 24 in which similar elements may be indicated by reference numbers ending in, and/or containing, the same digits, letters, and/or the like. For example, for purposes of illustration, the UE 2601, base station 2602, restricted sub-space 2661, precoding determination logic 2652, precoding information 2605, encoder model 2603 and/or decoder model 2604 may be implemented in a manner similar to those in the embodiment illustrated in Fig. 25. Additionally, the encoder model 2603 and decoder model 2604 may be trained (e.g., in an auto-encoder configuration) to jointly compress and/or decompress the precoding information 2605 using any training scheme, including one or more joint training and/or deployment frameworks disclosed herein.

However, in the system 2600 illustrated in Fig. 26, because the decoder model 2604 may not be shared with the UE 2601, the precoding determination logic 2652 may not be able to determine (e.g., directly using a shared model) what reconstructed precoding information 2606 may be generated by the decoder model 2604 at the base station 2602 in response to one or more specific inputs applied to the encoder model 2603.

The system 2600 illustrated in Fig. 26 may implement a sub-space restriction scheme in which one or more inputs 2663 of the encoder model 2603 may be coordinated with one or more outputs 2664 of the decoder model 2604. The scheme may then exploit joint training of the encoder model 2603 and decoder model 2604 (e.g., in an auto-encoder configuration) to ensure that outputs 2664 of the decoder model 2604 are orthogonal to the restricted sub-space 2661.

For example, the base station 2602 may send the UE 2601 information about a configuration of the outputs 2664 of the decoder 2604. The precoding determination logic 2652 at the UE 2601 may use this information to apply inputs 2663 to the encoder 2603 having the same or similar configuration as the outputs 2664 of the decoder 2604. If the precoding determination logic 2652 selects inputs 2663 to the encoder 2603 that are orthogonal to the restricted sub-space 2661, the exploit joint training of the encoder model 2603 and decoder model 2604 may ensure that outputs 2664 of the decoder 2604 are also orthogonal to the restricted sub-space 2661. Depending on the implementation details, this may help overcome the absence of a shared decoder at the UE 2601.

In some embodiments, outputs 2664 of the decoder 2604 may be considered orthogonal to the restricted sub-space 2661 if they are within an acceptable amount of error of the restricted sub-space 2661, within an acceptable amount of error of the inputs 2663 to the encoder 2603 that are orthogonal to the restricted sub-space 2661, and/or the like.

In some embodiments, information about a configuration of the outputs 2664 of the decoder 2604 may be sent to the UE 2601 via RRC, DCI, MAC CE signaling and/or the like.

In some example embodiments described below, a type of CSI may refer to the nature (e.g., one or more characteristics) of CSI information used as input to a generation model (e.g., an encoder) and/or output from a reconstruction model (e.g., a decoder). For example, a CSI may be implemented as a precoder type of CSI, a channel matrix type of CSI, and/or the like. Furthermore, a format may refer to a dimensionality, order of the elements, and/or the like in a vector and/or matrix. For example, if input to an encoder and output from a corresponding decoder have the same format, it may indicate that they are matrices of the same dimensions where element $(i,j)$ may represent the same entity, e.g., both are the second feature of the latent space, or both are the second element of the precoder matrix of the same sub-band.

Reporting CSI in Angular Delay Domain or Using Linear Transform

In some embodiments, the output of a decoder may be denoted by $\hat{\mathbf{H}}$, a target CSI precoder (which may be calculated based on the output $\hat{\mathbf{H}}$ of the decoder) may be denoted by $\hat{\mathbf{P}}$, and a restricted sub-space may be denoted by a matrix $\mathbf{S}$. The precoder $\hat{\mathbf{P}}$ may be orthogonal to the restricted sub-space $\mathbf{S}$ if $\mathbf{S}^T\hat{\mathbf{P}} = \mathbf{0}$. Thus, generating a target CSI precoder $\hat{\mathbf{P}}$ that is orthogonal to a restricted sub-space $\mathbf{S}$ may involve determining one or more inputs to apply to an encoder-decoder pair (e.g., an auto-encoder) that may cause the decoder to generate an output $\hat{\mathbf{H}}$ that results in a precoder $\hat{\mathbf{P}}$ that is orthogonal to a restricted sub-space $\mathbf{S}$ (e.g., $\mathbf{S}^T\hat{\mathbf{P}} = \mathbf{0}$). Moreover, as shown below, in some embodiments, to generate a precoder $\hat{\mathbf{P}}$ such that $\mathbf{S}^T\hat{\mathbf{P}} = \mathbf{0}$, specific coefficients of the decoder output $\hat{\mathbf{H}}$ must be zero.

In some embodiments, an output of a decoder may be expressed as one or more coefficients of a set of basis vectors (e.g., as opposed to a decoder that may generate target CSI directly in the form of a precoder or channel matrix). The following analysis may be applied to such embodiments to generate an output $\hat{\mathbf{H}}$ that results in a precoder $\hat{\mathbf{P}}$ that is orthogonal to a restricted sub-space $\mathbf{S}$ (e.g., $\mathbf{S}^T\hat{\mathbf{P}} = \mathbf{0}$).

For each layer, an angular-delay transform $\mathbf{H}_{N_{tx} \times N_{sb}}$ on a spatial-frequency domain CSI matrix, channel, or precoder, matrix $\mathbf{H}_{a, N_{tx} \times N_{sb}}$ may be defined as

$$\mathbf{H} = \mathbf{F}_c \mathbf{H}_a \mathbf{F}_d \qquad\qquad \text{(Eq. 9)}$$

where $\mathbf{F}_c$ is an $N_{tx} \times N_{tx}$ DFT matrix, and $\mathbf{F}_d$ is an $N_{sb} \times N_{sb}$ DFT matrix. This may alternatively be written with $\mathbf{H}_{M \times N}$ where $\mathbf{F}_c$ is an $M \times N_{tx}$ DFT submatrix, and $\mathbf{F}_d$ is an $N_{sb} \times N$ DFT submatrix with $M < N_{tx}$ and $N < N_{sb}$ by removing appropriate zero rows and columns of $\mathbf{H}_{N_{tx} \times N_{sb}}$. The following analysis may assume $\mathbf{H}_{N_{tx} \times N_{sb}}$ without loss of generality.

As mentioned above, a decoder output may be denoted by $\hat{\mathbf{H}}$. Thus, $\hat{\mathbf{H}}$ may represent a set of coefficients from which the final output CSI may be calculated (e.g., target CSI such as a precoder matrix $\hat{\mathbf{P}}$, channel matrix, and/or the like, may be calculated from $\hat{\mathbf{H}}$). The calculation may be based, for example, on a linear transform with specific basis vectors.

The CSI matrix may be a precoder matrix $\hat{\mathbf{P}}$ which may be obtained from the output of a decoder, for example, via angular-delay transform $\hat{\mathbf{H}}_{N_{tx} \times N_{sb}}$ as

$$\hat{\mathbf{P}} = \mathbf{F}_c \hat{\mathbf{H}} \mathbf{F}_d \qquad\qquad \text{(Eq. 10)}$$

or any other linear transform $\hat{\mathbf{P}} = \mathbf{F}_c \hat{\mathbf{H}}$ where $\mathbf{F}_c$ and $\mathbf{F}_d$ may be basis matrices (e.g., DFT matrices). Assuming $\hat{\mathbf{P}}$ is required to be orthogonal to a restricted sub-space given by a matrix $\mathbf{S}_{N_{tx} \times R}$, the restriction may be directly applied to the output of the decoder, for example, by setting specific coefficients to a specific value (e.g., zero).

As mentioned above, the precoder $\hat{\mathbf{P}}$ may be orthogonal to the restricted sub-space if $\mathbf{S}^T \hat{\mathbf{P}} = \mathbf{0}$. Substituting $\hat{\mathbf{P}}$ from Eq. 10 to get $\mathbf{S}^T \mathbf{F_c} \hat{\mathbf{H}} \mathbf{F_d} = 0$, multiplying by $\mathbf{F}_d^T$, and noting that $\mathbf{S}^T \mathbf{F}_c$ may be a binary matrix that may have more columns than rows (which may be referred to as a fat matrix), specific coefficients of the output $\hat{\mathbf{H}}$ may be set (e.g., forced) to zero to satisfy the orthogonality restriction. Thus, a base station may indicate to a UE one or more indices corresponding to coefficients of the output of the decoder that should be zero to ensure orthogonality of the precoder $\hat{\mathbf{P}}$ to the restricted sub-space.

In some example embodiments in which CSI may be reported in an angular delay domain or using a linear transform, the decoder used by a base station may not be available to the UE. Such example embodiments may be implemented using the sub-space restriction scheme illustrated and/or described above with respect to Fig. 26. In such embodiments, the base station 2602 may configure the UE 2601 with a restricted sub-space 2661 implemented with a set of restricted sub-space or precoder vectors (e.g. DFT beams) in the form of a matrix S. Since the base station 2602 may know the relationship between the output $\hat{\mathbf{H}}$ of the decoder 2604 and the precoder matrix $\hat{\mathbf{P}}$, the base station 2602 may also configure the UE 2601 with a set of indices corresponding to coefficients at which the output of the decoder should be zero.

One or more of the following techniques may then be used to implement the zero conditions at the output of the decoder 2604. (1) The UE 2601 may be relied upon to report a CSI codeword (e.g., a representation 2607 output by the encoder 2603) that causes the decoder output to satisfy the zero conditions. Thus, the UE 2601 may choose any input type available with its implementation provided it meets the decoder output requirement. (2) The UE may be provided with information about the configuration of the outputs 2664 of the decoder 2604. The precoding determination logic 2652 at the UE 2601 may use this information to ensure that it uses inputs 2663 to the encoder 2603 having the same configuration (e.g., type, format, and/or the like) as the outputs 2664 of the decoder 2604. Thus, the output of the decoder 2604 may have the same dimensions as the inputs 2663 of the encoder 2603. The UE 2601 may force zero values at the encoder inputs at the indicated/configured indices corresponding to coefficients at which the output of the decoder should be zero. Since the decoder output may be a reconstruction (e.g., the reconstruction 2606) of the encoder input (e.g., the precoding information 2605) with a specific reconstruction error, the zero conditions applied to the input of the encoder 2603 may generally be expected to be replicated at the output of the decoder 2604 up to a specific error.

In some other example embodiments in which CSI may be reported in an angular delay domain or using a linear transform, the decoder used by a base station may be shared with the UE. Such embodiments may be implemented using the sub-space restriction scheme illustrated and/or described above with respect to Fig. 25. In such embodiments, the base station 2502 may configure the UE 2501 with a restricted sub-space 2561 implemented with a set of restricted sub-space or precoder vectors (e.g. DFT beams) in the form of a matrix S. Since the base station 2502 may know the relationship between the output $\hat{\mathbf{H}}$ of the decoder 2504 and the precoder matrix $\hat{\mathbf{P}}$, the base station 2502 may also configure the UE 2501 with a set of indices corresponding to coefficients at which the output of the decoder should be zero.

One or more of the following techniques may then be used to implement the zero conditions at the output of the decoder 2504. (1) The UE 2501 may be relied upon to report a CSI codeword (e.g., a representation 2507 output by the encoder 2503) that causes the decoder output to satisfy the zero conditions. However, because the UE 2501 may have access to the shared decoder model 2504A, there may be no restrictions on the configuration of inputs applied to the encoder 2503. Thus, the UE 2501 may choose any input available with its implementation provided the input causes the output generated at the decoder 2504 (or a reference decoder) to satisfy the zero value conditions at the required indices. (2) The UE 2501 may train its encoder 2503 such that the decoder output has zero values for the coefficients at the indicated indices. In such a training framework, the encoder 2503 at the UE 2501 may be trained using information about the restricted sub-space (e.g., the sub-space itself and/or one or more restricted coefficients, e.g. a binary vector with zeros at the restricted indices of the decoder output and/or the restricted sub-space).

In some alternative embodiments, a UE may not be expected to ensure the orthogonality of CSI it may report to a base station with a restricted sub-space. For example, the UE may report CSI in a normal manner by sending an encoded representation of the reported CSI as a codeword that causes a decoder at the base station to generate a reconstructed output $\hat{H}$. When the base station constructs a precoder matrix $\hat{P}$ from the decoder output $\hat{H}$, the base station may force one or more coefficients of the decoder output to zero to enforce orthogonality with a restricted sub-space. (The original decoder output at those indices may or may not have been zero.) Thus, the UE is not expected to report a CSI codeword that results in the zero values at the required indices at the decoder output. In such an embodiment, the indices may or may not be indicated to the UE by base station.

Reporting CSI in Spatial-Frequency Domain

In some embodiments in which CSI feedback (e.g., a precoder matrix $\hat{P}$) may be reported in the spatial-frequency domain (e.g., reported directly), it may not be possible or convenient to describe an output encoder via a vector space. In such embodiments, the following analysis may enable a scheme for ensuring that a reported precoder matrix is orthogonal to a restricted sub-space $S$ (e.g., $S^T\hat{P} = 0$).

An output of a decoder may be denoted $\hat{w}_{Ntx \times 1} = w + e$, where $e$ may represent an error vector (e.g., of the size). A restricted sub-space may be denoted by a column space of a matrix $S_{Ntx \times Z} = [s_1, ..., s_Z]$.

In some embodiments of an orthogonality scheme, a UE may derive one or more precoder vectors by projecting them to a space orthogonal to the restricted sub-space such that $w^T S = 0$. This property may be confirmed to hold at the output using the following equation:

$$\hat{w}^T s_i = (w^T + e^T)s_i = w^T s_i + e^T s_i = 0 + e^T s_i. \qquad (\text{Eq. 11})$$

In some embodiments, an encoder-decoder pair (e.g., an auto-encoder) may be expected to perform compression and/or decompression with a relatively small mean square error (MSE). Thus the property may also hold at the output, possibly with an error as follows:

$$|\hat{w}^T s_i|^2 \leq |\hat{e}||s_i| \text{ for } i = 1, ..., Z. \qquad (\text{Eq. 12})$$

The MSE may be reduced (e.g., minimized) such that the righthand side may be smaller than a given $\varepsilon$:

$$|\hat{w}^T s_i| < \epsilon. \qquad (\text{Eq. 13})$$

Assuming the output precoder vector is normalized for power (e.g., $|\hat{w}| = 1$ or $N_{tx}$), the inner product may be reduced (e.g., minimized) when the reconstructed precoder vector $\hat{w}$ is orthogonal to the restricted sub-space base vector $s_i$, $i = 1, ..., Z$.

Thus, some embodiments may generate CSI feedback (e.g., a precoder matrix $\hat{P}$) that is orthogonal to a restricted sub-space by ensuring orthogonality at the input of an encoder and allowing for some relatively small error at the output of a corresponding decoder.

In some example embodiments in which CSI may be reported in the spatial-frequency domain (e.g., as a precoder matrix $\hat{P}$), the decoder used by a base station may not be available to the UE. Such embodiments may be implemented using the sub-space restriction scheme illustrated and/or described above with respect to Fig. 26. In such embodiments, the base station 2602 may configure the UE 2601 with a restricted sub-space 2661 implemented with a set of restricted sub-space or precoder vectors (e.g. DFT beams) in the form of a matrix $S$.

One or more of the following techniques may then be used to ensure the orthogonality of a reported precoder matrix $\hat{P}$ with the restricted sub-space 2661. (1) The UE 2601 may be relied upon to report a CSI codeword (e.g., a representation 2607 output by the encoder 2603) that causes the output of the decoder 2604 to satisfy the zero condition (e.g., $S^T\hat{P} = 0$). Thus, the UE 2601 may choose any input type available with its implementation provided it meets the decoder output requirement. (2) The UE may be provided with information indicating that the input of the encoder 2603 and the output of the decoder 2604 are configured as precoder vectors. The UE 2601 may be relied upon to determine an input to the encoder 2603 such that the output of the encoder (e.g., precoder matrix $\hat{P}$) is orthogonal to the restricted sub-space. In some embodiments, the UE 2601 may ensure that a residual orthogonality (or reconstruction) error at the output of the decoder is less than a specific value. For example, the UE may report the CSI feedback such that an orthogonalization error $|S^T\hat{P}| \leq \varepsilon$ for some $\varepsilon$.

In some other example embodiments in which CSI may be reported in the spatial-frequency domain (e.g., as a

precoder matrix $\hat{\mathbf{P}}$), the decoder used by a base station may be shared with the UE. Such embodiments may be implemented using the sub-space restriction scheme illustrated and/or described above with respect to Fig. 25. In such embodiments, the base station 2502 may configure the UE 2501 with a restricted sub-space 2561 implemented with a set of restricted sub-space or precoder vectors (e.g. DFT beams) in the form of a matrix **S**. Because the UE 2501 may have access to the shared decoder model 2504A, there may be no restrictions on the configuration of inputs applied to the encoder 2503. Thus, the UE 2501 may choose any input available with its implementation provided the input causes the output generated at the decoder 2504 (e.g., precoder matrix $\hat{\mathbf{P}}$) to be orthogonal to the restricted sub-space. In some embodiments, the UE 2501 may be relied upon to report the CSI feedback such that an orthogonalization error $|\mathbf{S}^T\hat{\mathbf{P}}| \leq \varepsilon$ for some $\varepsilon$.

In the embodiments described above with respect to Fig. 24, Fig. 25, and/or Fig. 26, one or more models may be trained without using information about a restricted sub-space. Thus, an auto-encoder may be trained without any assumptions regarding a restricted sub-space. In such a framework, one or more models may be trained using examples of training data that may implicitly include different possibilities of subset restrictions, but information about a restricted sub-space may be omitted from explicit training input. Nonetheless, the restriction may be ensured in the inference phase based on consistency between training and inference phases as to how UE determines the encoder input for a given configured sub-set restriction.

Training and Inference with Restricted Sub-Space Information

In some embodiments, restricted sub-space information may be used as input (e.g., explicit training input and/or explicit inference input) to a generation model (e.g., an encoder of an auto-encoder pair of models).

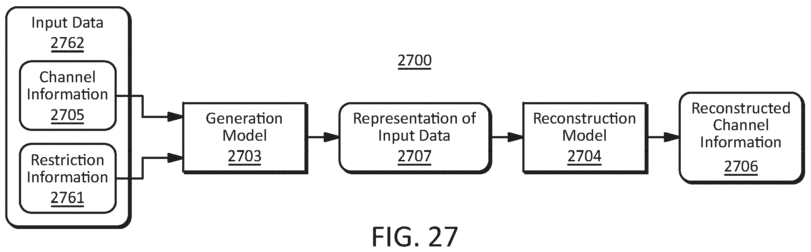

Fig. 27 illustrates an embodiment of a system using restricted sub-space information as input to a model according to the disclosure. The system 2700 illustrated in Fig. 27 may be used to implement, or may be implemented with, any of the embodiments that use artificial intelligence and/or machine learning to generate and/or compress CSI disclosed herein, including those illustrated and/or described with respect to other drawings in which similar elements may be indicated by reference numbers ending in, and/or containing, the same digits, letters, and/or the like.

Referring to Fig. 27, the system 2700 may include a first node (Node A) having a generation model 2703 and a second node (Node B) having a reconstruction model 2704. The system 2700 is illustrated in an Inference phase of operation in which input data 2762 applied to the generation model (e.g., encoder) 2703 may include channel information (e.g., precoding information) 2705 and restriction information (e.g., restricted sub-space information) 2761. In a training phase of operation, however, the input data 2762 may include training data instead of channel information 2705.

The generation model 2703 may generate a representation 2707 of the input data 2762 which the reconstruction model 2704 may use to generate a reconstruction (e.g., precoding information) 2706 of the channel information 2705. Because the generation model 2703 and reconstruction model 2704 may be trained using the restriction information 2761, the reconstruction 2706 of the channel information may lie outside of a restricted sub-space indicated by the restriction information 2761. In some embodiments, the scheme illustrated in Fig. 2700 may be referred to, and/or characterized as, restriction-aware.

The restriction information 2761 may include, for example, the restricted sub-space itself, one or more restrictions on coefficients of a basis vector space (e.g., indices indicating coefficients that should be zero), and/or the like. In some embodiments, the channel information (e.g., precoding information) 2705 and/or the reconstruction 2706 may be similar to those quantities in a system implemented without restriction-aware operation, but with the benefit of the reconstruction 2706 (e.g., a reported precoder) ensured to be outside of a restricted sub-space due to the restriction information 2761 being included in the input data 2762 used for training and/or inference.

In some embodiments, the generation model 2703 may include a quantizer to convert the representation 2707 to a quantized form (e.g., a bit stream) that may be transmitted through a communication channel. Similarly, in some embodiments, the reconstruction model 2704 may include a dequantizer that may convert a quantized representation 2707 (e.g., a bit stream) to a form that may be used to generate the reconstructed training data 2712.

The generation model 2703 and reconstruction model 2704 may be obtained in any manner including using any of the frameworks described herein. For example, using a joint training framework, the generation model 2703 and reconstruction model 2704 may be trained as a pair at Node B, which may transmit the reconstruction model 2704 to Node A. Other embodiments may use a training framework with reference models, a training framework with the latest shared values, or any other framework and/or technique to obtain and/or train the generation model 2703 and reconstruction model 2704.

In some embodiments, a loss may be calculated at the output of the reconstruction model 2704 using a label that may include restriction information. Thus, the label (which may be referred to as a ground-truth label) may be ensured to lie in a restricted subspace.

In some embodiments, the loss function may be implemented with a penalty that may be introduced to the loss function when the output of the reconstruction model 2704 is not orthogonal to a restricted sub-space determined by the restriction information 2761. In such an implementation, the scheme illustrated in Fig. 27 may report an acceptable or best CSI codeword (e.g., output of an encoder and/or PMI index) within an allowed sub-space (e.g., outside of a restricted sub-space) for a given reconstruction model 2704.

Additionally, or alternatively, the loss function may be implemented to with a regular loss function that may ensure closeness of the output of the reconstruction model 2704 to a ground-truth generation model 2703. Since closeness (e.g. in the sense of an MSE) may reduce the norm of the orthogonality error, it may cause the output to lie within the allowed sub-space (e.g., it may satisfy one or more orthogonality conditions (e.g., $\mathbf{S}^T\hat{\mathbf{P}} = \mathbf{0}$).

In some embodiments, during an inference phase, a base station may configure a UE with restriction information (e.g., a restricted sub-space) 2761 which may be used (e.g., directly) as an input to a generation model 2703. The use of restriction information 2761 for training and/or inference operation may then cause the reconstruction (e.g., precoding information) 2706 to be within the allowed sub-space.

In embodiments in which the reconstruction model 2704 is shared with the UE, the base station may configure the UE with a set of restricted sub-space or precoder vectors (e.g. DFT beams) in the form of a matrix S, and the type of the output-CSI may be indicated to be the precoder vectors. In such embodiments, the UE may be relied upon to report a CSI codeword (e.g., the representation 2707 output by the generation model 2703) such that output of the reconstruction model 2704 is orthogonal to the restricted sub-space. In some such embodiments, the UE 2701 may ensure that a residual orthogonality (or reconstruction) error at the output of the decoder is less than a specific value. For example, the UE may report the CSI feedback such that an orthogonalization error $|\mathbf{S}^T\hat{\mathbf{P}}| \leq \varepsilon$ for some $\varepsilon$.

In embodiments in which the reconstruction model 2704 is not shared with the UE, the base station may configure the UE with a set of restricted sub-space or precoder vectors (e.g. DFT beams) in the form of a matrix **S,** and one or more of the following techniques may then be used to ensure that the reported CSI (e.g., a precoder) may be orthogonal to a restricted sub-space. (1) The input configuration of the generation model 2703 and the output configuration of the reconstruction model 2704 may be indicated (or assumed by the UE in the absence of an indication received through the network) to be a precoder. The UE may report a CSI codeword (e.g., the representation 2707 output by the generation model 2703) such that the precoder output by the reconstruction model 2704 is orthogonal to the restricted sub-space. (2) The UE may assume that the input configuration of the generation model 2703 and the output configuration of the reconstruction model 2704 are the same or similar (e.g., a precoder). The UE may determine an input to the generation model 2703 that is orthogonal to the restricted sub-space, and thus, the output of the reconstruction model 2704 will also be orthogonal. (3) The UE may train a reference model to use as the generation model 2703. The UE may then report a CSI codeword such that a corresponding reference used for the reconstruction model 2704 also satisfies the orthogonality condition.

Data Collection for AIML Models for CSI Reporting

In some wireless communication systems that use artificial intelligence and/or machine learning models, a UE may collect data for different purposes (e.g., use cases) such as model training, model inference, model performance monitoring, and/or the like. Examples of types of data collected for one or more of these purposes may include channel information (e.g., a channel matrix that may be input to an encoder at UE), CSI feedback (e.g., an output of an encoder model at a UE which may be sent to a base station and use as an input to a decoder model at the base station), target CSI (e.g., a precoder or a channel matrix that may be output from a decoder model at a base station), one or more gradients (e.g., which may be used for backward propagation with type-2 training), and/or the like.

Data collection at a UE may involve the use of UE processing resources to performing downlink channel measurements (e.g., channel estimation) based on CSI-RS signals transmitted by a base station. In one approach to collecting data, the base station may configure the UE with a CSI report configuration that the UE may normally use to measure, compute, and report CSI to a base station.

However, in different situations, different apparatus (e.g., a UE or a base station) may need to collect different types of data. Thus, when configured with a CSI report configuration, a UE may compute one or more types of CSI that it may not need to collect and/or report to a base station, thereby placing an unnecessary burden on the UE's processing resources. Another potential problem is that the UE may not be capable of, and/or configured to, supporting one or more CSI-RS configurations for data collection. Moreover, a base station may not be able to determine a UE's capabilities and/or configurations for data collection. An additional potential problem is that the UE may waste resources preparing an uplink channel to transmit CSI that it does not need to report. Thus, a UE may need to operate differently when collecting data than when reporting CSI according to a normal CSI report configuration. A further potential problem is that a base station may configure the UE with a CSI report configuration that may not generate one or more types of data that the UE may need to collect for the UE's purpose such as training a local model, performing inference with a local model, and/or the like. Moreover, a UE may not be able to determine if or when a base station expects it to collect data.

To overcome these potential problems, systems and methods according to the disclosure may enable a UE to establish a data collection session between the UE and a base station, to request the collection of one or more specific types of data, and/or to indicate a capability to support one or more data collection configurations.

Fig. 28 illustrates an embodiment of a communication system having data collection functionality for one or more models that may be used to provide channel information feedback according to the disclosure. The system 2800 may include one or more elements (e.g., components, operations, and/or the like) that may be similar to those in the embodiments illustrated in Fig. 4, Fig. 7, and/or other drawings in which similar elements may be indicated by reference numbers ending in, and/or containing, the same digits, letters, and/or the like.

In the system 2800 illustrated in Fig. 28, a first wireless apparatus (e.g., a UE) 2801 may receive a reference signal 2817 from a second wireless apparatus (e.g., a base station) 2802 through a channel 2815, for example, to enable the first wireless apparatus 2801 to determine channel conditions of the channel 2815. The second wireless apparatus 2802 may apply precoding information (e.g., a precoding matrix) 2845 to some transmissions such as PDCCH, PDSCH, and/or the like, as well as some reference signals such as CSI-RS.

The first wireless apparatus 2801 may perform channel measurements based on the reference signal 2817 and the channel conditions to generate channel information (e.g., a channel estimation, a channel matrix, precoding information, and/or the like) 2805 that it may send to the second wireless apparatus 2802, for example, in the form of a representation 2807 that it may generate using a generation model 2803. The first wireless apparatus 2801 may send the representation 2807 to the second wireless apparatus 2802, for example, using another channel (e.g., an uplink channel), signal, and/or the like 2816. The second wireless apparatus 2802 may include a reconstruction model 2804 that it may use to generate a reconstruction 2806 of the channel information 2805.

In some embodiments, the generation model 2803 and the reconstruction model 2804 may be trained (e.g., in an auto-encoder configuration) to jointly compress and/or decompress the channel information 2805 using any training scheme, including one or more joint training and/or deployment frameworks disclosed herein.

The first wireless apparatus 2801 and the second wireless apparatus 2802 may include data collection logic 2866 and 2867, respectively, which, individually and/or collectively, may implement some or all of the data collection functionality disclosed herein. For example, the data collection logic 2866 and/or 2867 may enable the first wireless apparatus 2801 to establish a data collection session between the first wireless apparatus and the second wireless apparatus 2802. For example, the first wireless apparatus 2801 may send a request to start a data collection session to the second wireless apparatus 2802. The request may be accompanied by information indicating one or more types of data to be collected, one or more reference signal configurations to be used for the data collection, and/or the like. The second wireless apparatus 2802 may send the first wireless apparatus 2801 an indication to start a data collection session, either in response to a request from the first wireless apparatus 2801, or at the initiative of the second wireless apparatus 2802.

As another example, the data collection logic 2866 and/or 2867 may enable the first wireless apparatus 2801 to declare one or more data collection capabilities 2868 to the second wireless apparatus 2802. In some embodiments, the first wireless apparatus 2801 may declare a capability to support one or more data collection configurations that may include information about a purpose of the data collection, one or more types of data to be collected, and/or information about corresponding supported reference signal configurations that may be used to collect the data.

Fig. 29 illustrates an example embodiment of a communication system having data collection functionality for one or more models that may be used to provide channel information feedback according to the disclosure. The system 2900 illustrated in Fig. 29 may include one or more elements (e.g., components, operations, and/or the like) that may be similar to those in the embodiments illustrated in Fig. 4, Fig. 7, Fig. 28, and/or other drawings in which similar elements may be indicated by reference numbers ending in, and/or containing, the same digits, letters, and/or the like. The system 2900 illustrated in Fig. 29 may be used, for example, to implement data collection schemes for CSI compression in the spatial-frequency (SF) domain and/or the time-spatial-frequency (TSF) domain as described below, as well as other data collection schemes according to the disclosure.

For purposes of illustrating some example embodiments of data collection for CSI compression, the system 2900 illustrated in Fig. 29 is shown with some example implementation details. Specifically, the first communication apparatus may be implemented with a UE 2901, the second communication apparatus may be implemented with a base station 2902, the reference signal may be implemented with a CSI-RS signal 2917, the channel information may be implemented with a channel matrix 2905, the generation model may be implemented with an encoder model 2903 (which may also be referred to as an encoder), the representation of channel information may be implemented with CSI feedback 2907, the reconstruction model may be implemented with a decoder model 2904 (which may also be referred to as a decoder), and the reconstruction of the channel information may be implemented with target CSI 2906 (e.g., a precoder matrix, one or more coefficients that may be used to determine a precoder matrix by a combination of basis vectors, and/or the like). However, the principles of the system 2900 illustrated in Fig. 29 are not limited to these or any other implementation details.

Some or all of the data collection functionality disclosed herein may be implemented, at least in part, individually and/or collectively, by the data collection logic 2966 and 2967 located at the UE 2901 and base station 2902, respectively. In some embodiments, a UE 2901 may determine target CSI 2906 (e.g., an output of a decoder model 2904 at a base station 2902) by using, for example, a shared copy of the decoder model, locally trained decoder model, reference decoder model, and/or the like.

In some embodiments, the UE 2901 may send a request 2969 to the base station 2902 to initiate a data collection session. The request 2969 may be accompanied by information indicating one or more types of data to be collected, one or more CSI-RS configurations to be used for the data collection, and/or the like. The request 2969 may be sent to the base station 2902, for example, using a dedicated scheduling request (SR).

The base station 2902 may send the UE 2901 an indication (e.g., a command, trigger, signal, activation, and/or the like) 2970 to begin a data collection session, either in response to a request 2969 from the UE 2901 or at the initiative of the base station 2902. The base station 2902 may initiate a data collection session, for example, in situations in which the UE 2901 has previously declared a capability to support one or more specific data collection operations (e.g., a capability to collect one or more specific types of data using one or more specific CSI-RS configurations). The base station 2902 may send an indication 2970 to begin a data collection session to the UE 2901 using, for example, RRC, MAC CE, DCI, and/or the like.

In some embodiments, the base station 2902 may configure the UE 2901 for data collection using a CSI report configuration that may be indicated as being used for data collection. When configured with such a CSI report configuration, the UE 2901 may refrain from reporting some or all of the CSI to the base station 2902. Depending on the implementation details, the UE 2901 may also refrain from performing one or more computations for CSI feedback 2907, target CSI 2906 (e.g., precoding information), and/or the like. The CSI report configuration may be indicated as being used for data collection (e.g., a data collection use case), for example, using an information element (IE). Additionally, or alternatively, the base station 2902 may configure the UE 2901 to use one or more CSI-RS resource sets for the purpose of data collection (e.g., without an expectation of a CSI report by the UE 2901). In such a configuration, the one or more CSI-RS resource sets may be coordinated (e.g., matched) with the purpose of the collected data, types of data to be collected, and/or the like.

In some embodiments, the UE 2901 may declare a capability 2968 to support one or more data collection configurations. For example, a data collection configuration (which may also be referred to as a feature group) may include information about a purpose of the data collection (e.g., CSI compression (for training, inference, and/or monitoring), CSI prediction, and/or the like), one or more types of data to be collected (e.g., a channel matrix 2905, CSI feedback 2907, and/or target CSI 2906), and/or information about corresponding supported CSI-RS configurations (e.g., CSI-RS sub-bands, CSI-RS number of ports, supported SCS, time domain window information for CSI compression, and/or the like) that may be used to collect the data.

In some embodiments, various identifiers (IDs) may be used to indicate types of information to collect, use cases for collected data, and/or the like. For example, each type of collected data (e.g., a channel matrix 2905, CSI feedback 2907, target CSI 2906, and/or the like) may be indicated by a corresponding data type ID number. Thus, a data collection configuration (e.g., sent as part of a declaration of data collection capabilities 2968) may include a set of numbers indicating the types of data the UE 2901 may be capable of collecting. As another example, each use case (e.g., purpose, scenario, and/or the like) for collected data may be indicated by a corresponding use case ID. Examples of use cases that may have corresponding use case IDs may include CSI compression (for training, inference, and/or monitoring), CSI prediction, and/or the like. For instance, when the base station 2902 initiates a data collection session, it may indicate to the UE 2901 which use case the data collection is for by indicating a use case ID. Additional examples of identifiers may include vendor IDs (e.g., to indicate to the UE 2901 a vendor of the base station 2902 which may enable vendor-level agreements relating to data collection configurations), data set IDs (e.g., to enable the implementation of different data sets of collected data based on different models, different distributions of channel matrices across sub-bands and time, different beam codebooks, different antenna configurations, and/or the like), condition IDs (e.g., to indicate one or more additional conditions of data collection such as CSI-RS resources, sets, reports, and/or the like).

Depending on the implementation details, one or more of the features illustrated and/or described with respect to Fig. 28 and/or Fig. 29 may enable efficient initiation and/or configuration of data collection sessions, may reduce or eliminate unnecessary computations and/or transmissions of unneeded information, and/or may ensure that the UE 2901 may collect data that the UE and/or the base station 2902 may need for use with artificial intelligence and/or machine learning models.

Establishing Data Collection Session

Some aspects of the disclosure provide techniques for establishing a data collection session between a UE and a base station that may use artificial intelligence and/or machine learning to report channel information. In some embodiments, a UE may perform data collection at its own initiative (e.g., transparently) to a base station. Such collection may be performed, for example, when the UE receives a CSI-RS transmission from which it may calculate channel information such as a channel matrix, CSI feedback, and/or target CSI. However, such an approach may involve waiting for CSI-RS transmissions and thus may take a relatively long and/or unpredictable amount of time.

In some embodiments, a UE may send a request to a base station to begin transmission of CSI-RS for data collection for a specific purpose (e.g., matching a specific model training and/or inference scenario). Depending on the implementation details, this may reduce the amount of time involved with data collection. Additionally, or alternatively, this may enable the UE to coordinate (e.g., match) the CSI-RS pattern configuration, periodicity, and/or the like, with the type of data to be used for model training, inferencing, monitoring, and/or the like.

For example, to collect data that a UE may use to train a CSI compression model (e.g., encoder) to perform compression in a spatial-frequency (SF) domain with a specific spatial and frequency configuration (e.g., across specific number of sub-bands, number of CSI-RS ports, rank, and/or the like), the UE may send a request accompanied by information about the spatial and frequency configuration, number of sub-bands, number of CSI-RS ports, rank, and/or the like. The base station may use this information to transmit a configuration of CSI-RS with the specified sub-band configuration, number of antenna ports, and/or the like.

To collect data to train a CSI compression model to perform compression in a time-spatial-frequency (TSF) domain with a specific time, spatial and frequency configuration (e.g., across a specific number of sub-bands, specific time instances, specific number of CSI-RS ports, rank, and/or the like), the UE may send a request accompanied by information about the time, spatial and frequency configuration, number of sub-bands, specific time instances, number of CSI-RS ports, rank, and/or the like. The base station may use this information to transmit a configuration of CSI-RS with the specified sub-band configuration, CSI-RS periodicity, number of antenna ports, and/or the like.

In some embodiments, data collection activity (e.g., a data collection session) may be initiated when a base station sends an indication (e.g., a command, trigger, signal, activation, and/or the like) to the UE. For example, in response to receiving a data collection request from a UE, a base station may trigger a data collection session using DCI, MAC CE, RRC configuration of a CSI report configuration, and/or the like. Additionally, or alternatively, a base station may initiate data collection activity at its own initiative (e.g., without receiving a request from a UE). In some embodiments, a base station may initiate data collection activity at its own initiative after receiving information about the data collection capabilities of the UE (e.g., after the UE declares its data collection capabilities.

In some embodiments, one or more specific CSI-RS configurations may be used for data collection. For example, a base station may configure a UE with a CSI report configuration that may be specifically configured for data collection. When configured with such a CSI report configuration, the UE may measure CSI and collect data but may refrain from reporting (e.g., to the base station, a data collection server, and/or the like) some or all CSI that may otherwise be associated with configuration parameters used in the CSI report configuration.

Additionally, or alternatively, a base station may configure (e.g., directly) one or more CSI-RS resource sets that may be used specifically for purposes of data collection, in which case, the UE may measure CSI and collect data but may refrain from reporting CSI (except to the extent the CSI may be part of the collected data). In some embodiments, CSI-RS resources configured by a base station specifically for data collection may be configured to coordinate (e.g., match) with an intended use scenario (e.g., model training, inference, monitoring, and/or the like).

With any of the methods described above, a data collection purpose (e.g., use case) may be indicated by the UE and/or the base station. For example, when a base station initiates a data collection session, it may indicate to the UE a use case that the collected data is to be used for. In some embodiments, a use case may be indicated, for example, using a use case ID.

In some embodiments, a UE may collect one or more types of data that it may use (e.g., need) for use with a model in addition to (e.g., regardless of) one or more types of data a base station may instruct the UE to collect. For example, if the base station trains both an encoder model and a corresponding decoder model, the base station may indicate to the UE one or more data types for the UE to collect for use in tuning and/or online training the encoder model and/or decoder model.

Some embodiments may implement data collection for CSI prediction which, in some example embodiments, may be assigned a specific use case ID.

Any or all of the functionality described above relating to establishing a data collection session may be implemented with data collection logic such as that illustrated and/or described above with respect to Fig. 28 and/or Fig. 29.

Declaring Data Collection Capabilities

Some aspects of the disclosure provide techniques for indicating data collection capabilities between a UE and a base station that may use artificial intelligence and/or machine learning to report channel information. In some embodiments, data collection for models used for CSI compression, CSI prediction, and/or the like, may be performed at least partially by the UE side of a UE and base station pair.

Data collection may involve performing downlink channel measurement including channel estimation which may occupy CSI processing resources. Therefore, it may be beneficial for a base station to consider a UE's data collection capabilities to determine if the UE is capable of, and/or may be configured for, a data collection task (e.g., a data collection session) having a specific complexity. In some embodiments, the complexity of a data collection task may be related, for example, to the periodicity of a downlink measurement.

A scheme for indicating data collection capabilities according to the disclosure may include indications of one or more features that a UE may implement for collecting data for use with CSI compression-based data collection for artificial intelligence and/or machine learning models. For example, a UE's capabilities for data collection for CSI compression in a spatial-frequency domain may include one or more features arranged as feature groups (FGs) along with corresponding components such as a CSI-SR lay-out in a frequency domain (e.g., number and/or configuration of sub-bands), CSI type, supported number of CSI-RS ports, supported SCS, and/or the like.

A UE's capabilities for data collection for CSI compression in a time-spatial-frequency domain may include one or more features arranged as feature groups along with corresponding components such as a CSI-SR lay-out in a frequency domain (e.g., number and/or configuration of sub-bands), CSI type, CSI-RS configuration in a time domain (e.g., how many different time instances and/or slots the CSIs are compressed within, as well as a time gap between CSI measurements), supported number of CSI-RS ports, supported SCS, and/or the like.

Table 2 illustrates an example embodiment of features and corresponding components that may be implemented with a scheme for indicating data collection capabilities in a spatial-frequency domain according to the disclosure.

Table 3 illustrates an example embodiment of features and corresponding components that may be implemented with a scheme for indicating data collection capabilities in a time-spatial-frequency domain according to the disclosure.

The feature groups illustrated in Table 2 and/or Table 3 may include three types of data for use with CSI compression: (a) input to an encoder at a UE (e.g., a channel matrix), (b) CSI feedback (e.g., an output of an encoder at a UE), and/or (c) output of a decoder at a base station (e.g., a precoder or channel matrix). Thus, in these embodiments, there may be at least eight combinations of types of data, some examples of which are illustrated in Table 2 and/or Table 3. Embodiments for use with CSI prediction may use some of the same and/or some different types of data.

For purposes of illustration, the features illustrated in Table 2 and/or Table 3 may be arranged in feature groups (FGs), but in other embodiments, features and/or corresponding components may be arranged in any other manner.

An "X" in a data type indicates that the data may not be collected. Thus, for FG4 in Table 2, the collected data may include a channel matrix (e.g., input to the encoder model) and the corresponding CSI feedback (e.g., output of the encoder model). Other combinations of data types may also be used according to the disclosure. For example, for some feature groups, the collected data may include CSI feedback and the decoder output (e.g., for different types of decoder outputs).

In some embodiments, the precoder matrix (e.g., the decoder output) may be represented directly as a precoder matrix in a spatial frequency domain and/or as a linear combination of basis vectors (e.g., the data type may be a linear coefficient matrix).

Table 2

| Feature Group (FG) | Components |
|---|---|
| FG 1<br>AIML CSI compression data collection<br>Data type:<br>(channel matrix, CSI feedback, channel matrix) | 1) Supported CSI-RS sub-band configuration<br><br>2) Supported CSI-RS number of ports<br>3) Supported SCS for 1) and 2) |
| FG 2<br>AIML CSI compression data collection<br>Data type:<br>(channel matrix, CSI feedback, precoder matrix) | 1) Supported CSI-RS sub-band configuration<br><br>2) Supported CSI-RS number of ports<br>3) Supported SCS for 1) and 2) |
| FG 3<br>AIML CSI compression data collection<br>Data type:<br>(precoder matrix, CSI feedback, channel matrix) | 1) Supported CSI-RS sub-band configuration<br><br>2) Supported CSI-RS number of ports<br>3) Supported SCS for 1) and 2) |
| FG 4<br>AIML CSI compression data collection<br>Data type:<br>(precoder matrix, CSI feedback, precoder matrix) | 1) Supported CSI-RS sub-band configuration<br><br>2) Supported CSI-RS number of ports<br>3) Supported SCS for 1) and 2) |
| FG 5<br>AIML CSI compression data collection<br>Data type:<br>(channel matrix, CSI feedback, X) | 1) Supported CSI-RS sub-band configuration<br><br>2) Supported CSI-RS number of ports<br>3) Supported SCS for 1) and 2) |

Table 3

| Feature Group (FG) | Components |
|---|---|
| FG 1<br>AIML CSI compression data collection<br>Data type:<br>(channel matrix, CSI feedback, channel matrix) | 1) Supported CSI-RS sub-band configuration<br><br>2) Supported CSI-RS number of ports<br>3) Supported time domain window for CSI compression (e.g., $N_4$ slot durations, each duration having d slots, for $N_4$ time instance compression)<br>4) Supported SCS for 1) and 2) |
| FG 2<br>AIML CSI compression data collection<br>Data type:<br>(channel matrix, CSI feedback, precoder matrix) | 1) Supported CSI-RS sub-band configuration<br><br>2) Supported CSI-RS number of ports<br>3) Supported time domain window for CSI compression (e.g., $N_4$ slot durations, each duration having d slots, for $N_4$ time instance compression)<br>4) Supported SCS for 1) and 2) |
| FG 3<br>AIML CSI compression data collection<br>Data type:<br>(precoder matrix, CSI feedback, channel matrix) | 1) Supported CSI-RS sub-band configuration<br><br>2) Supported CSI-RS number of ports<br>3) Supported time domain window for CSI compression (e.g., $N_4$ slot durations, each duration having $d$ slots, for $N_4$ time instance compression)<br>4) Supported SCS for 1) and 2) |
| FG 4<br>AIML CSI compression data collection<br>Data type:<br>(precoder matrix, CSI feedback, precoder matrix) | 1) Supported CSI-RS sub-band configuration<br><br>2) Supported CSI-RS number of ports<br>3) Supported time domain window for CSI compression (e.g., $N_4$ slot durations, each duration having d slots, for $N_4$ time instance compression)<br>4) Supported SCS for 1) and 2) |
| FG 5<br>AIML CSI compression data collection<br>Data type:<br>(channel matrix, CSI feedback, X) | 1) Supported CSI-RS sub-band configuration<br><br>2) Supported CSI-RS number of ports<br>3) Supported time domain window for CSI compression (e.g., $N_4$ slot durations, each duration having d slots, for $N_4$ time instance compression)<br>4) Supported SCS for 1) and 2) |

Indication of Data Type and/or Format

Some embodiments may collect one or more of three different types of data: a) X: input to an encoder (e.g., a channel matrix, b) *Y:* output of the encoder (e.g., CSI feedback), and/or c) *Z*: output of a decoder (e.g., a precoder or channel matrix). In some embodiments, one or more frequency domain properties of data for CSI compression (e.g., a sub-band configuration as discussed above) may also be considered a type of data. Embodiments for use with CSI prediction may use some of the same and/or some different types of data.

In some embodiments, each type of data may be assigned a data type ID which may be used to indicate a data type to a UE, base station, and/or the like. For example, a channel matrix may be assigned an ID of 0, CSI feedback may be assigned an ID of 1, and a precoder matrix (or one or more coefficients or a channel matrix when used as target CSI) may be assigned an ID of 2. A data type ID may be used to indicate a type of data from a UE to a base station, from a base station to a UE, and/or to and/or from any other apparatus.

For example, if a base station initiates a data collection session, it may indicate to a UE one or more types of data to collect as shown in the following examples:

(0,1) may indicate that the collected data includes (channel matrix, CSI feedback);

(1,2) may indicate that the collected data includes (CSI feedback, precoder matrix);

(0,1,2) may indicate that the collected data includes (channel matrix, CSI feedback, precoder matrix) which may be referred to and/or characterized as a 3-tuple;

(0,2) may indicate that the collected data includes (channel matrix, precoder matrix).

In some example embodiments, collected data may be expressed in a format in which each of $(\{X_i\}, \{Y_j\}, \{Z_i\})$ may be quantized with a specific number of bits with specific reshaping of one or more matrices (e.g., reading the columns one column at a time for each matrix and ordering the matrices in ascending order of frequency sub-bands). Some example embodiments may use a different scheme in which the data $(\{X_i\}, \{Y_j\}, \{Z_i\})$ may be compressed using a PMI codebook, for example, with codebook parameters that may allow finer granularity.

Assistance Information and/or Additional Conditions for Data Collection

In some embodiments, data heterogeneity may degrade the performance of some artificial intelligence and/or machine learning models. For example, if a single model is developed for a data set which is mixture of a different distributions, it may perform worse than a model that is trained only for one distribution, when tested on that distribution. Thus, performance may improve if a UE trains a separate model for each distribution of test data.

For CSI compression using artificial intelligence and/or machine learning, a CSI-RS channel measurement (e.g., an estimated channel matrix) may be applied as an input to a model. The distribution of the channel matrices across the sub-bands and time may depend on one or more channel properties, such as delay spread (which may affect frequency domain correlation), Doppler spread (which may affect time domain correlation), and/or other parameters. Some of these parameters may be known by a UE. Thus the UE may classify the data into different classes, train different models using the different data, and use a model that has been trained using the corresponding data during an inference operation.

However, classifying data into different distributions may be difficult for a UE, especially when different distributions are based on different base station implementations. For example, if a base station uses a different downlink beam codebook for different data distributions, even for the same antenna configuration, the channels measured by the UE may fall into different distributions.

To reduce the burden on a UE associated with developing distribution specific models for different base station implementations, scenarios, and/or the like, some embodiments according to the disclosure may implement a scheme in which a base station may indicate to a UE information that may help a UE develop models for different data distributions. Such information may be conveyed, for example, using a data set identifier (data set ID) (which may also be referred to as an additional condition ID and/or scenario ID). In some embodiments, collected data with different data set IDS may fall within different distributions. Thus, a UE may develop different models for different data distributions which may be identified by data set IDs. A base station may provide an identifier to a UE using one or more of the following techniques according to the disclosure.

For example, a base station may provide the UE with a base station vendor ID which may identify a vendor (e.g., manufacturer, distributor, certifier, and/or the like) of the base station. In some embodiments, a pool of base station vendors may each be assigned a unique ID (e.g., offline and/or online). A vendor ID may be indicated to a UE, for example, in system information, a CSI-RS and/or report configuration, via a dedicated RRC parameter, and/or the like.

As another example, a base station may provide the UE with an additional condition ID. For example, a base station may configure one or more CSI-RS resources, sets, reports, and/or the like, with an additional condition ID which may be associated a specific base station implementation. The base station may or may not indicate to the UE one or more aspects of the base station implementation an additional condition ID reflects. For example, if a base station does indicate one or more aspects of the base station implementation reflected in the additional condition ID, the base station may indicate that a unique ID is associated with a specific analog beam codebook.

In some embodiments, the assistance information and/or additional condition IDs described above may be implemented with systems that perform data collection for models used for CSI compression and/or CSI prediction.

Any or all of the functionality described above relating to declaring one or more data collection capabilities may be implemented with data collection logic such as that illustrated and/or described above with respect to Fig. 28 and/or Fig. 29.

Data Collection for AIML Models for CSI Reporting with NCJT

Some communication systems may implement a joint transmission scheme in which data may be transmitted to a single UE from multiple TRPs (e.g., multiple base stations). Each TRP may use a different precoder for beamforming. In coherent joint transmission (CJT), precoding matrices for different TRPs may be coordinated so that multiple transmissions are jointly beamformed to enable data to be coherently combined at the UE. In noncoherent joint transmission (NCJT), each TRP may perform beamforming independently using precoders that may not be coordinated (e.g., based on phase shift between channels for different TRPs). Thus, in NCJT, a UE may not report CSI relating to a phase shift between channels from multiple TRPs which, depending on the implementation details, may reduce overhead associated with CSI feedback.

Some communication systems may implement a CSI reporting scheme for NCJT in which a UE may report CSI for three measurement hypotheses: (1) NCJT, (2) a first single TRP (sTRP) which may be referred to as sTRP1, and (3) a second single TRP which may be referred to as sTRP2. In such a system, a base station may configure a UE with a CSI report type including CSI for NCJT plus CSI for XsTRP, where X = 0,1,2, and the UE may transmit CSI for one of the three hypotheses.

Some aspects of the disclosure relate to data collection in communication systems that may use artificial intelligence and/or machine learning models for CSI reporting with an NCJT scheme. In a CSI reporting scheme for NCJT according to the disclosure, channel information (e.g., channel estimations, channel matrices, and/or the like) for two channels (e.g., a first channel between a UE and a first TRP, and a second channel between the UE and a second TRP) may be applied as inputs to a generation model (e.g., an encoder). The generation model may map the channel information for the two channels to a representation of the channel information (e.g., CSI feedback) in a latent space for the generation model. The representation may be applied as an input to a reconstruction model (e.g., a decoder) which may generate two reconstructions of the channel information (e.g., target CSI such as a precoding matrix, coefficients for a basis vector space, and/or the like). In some embodiments, there may be a mapping between the channel information for the two channels and corresponding ones of the two reconstructions of the channel information. Depending on the implementation details, the mapping may be one-to-one or other mapping that may cause the reconstruction (e.g., target CSI) for each channel to correspond to the channel information (e.g., channel ) for the respective channel.

Fig. 30 illustrates an example embodiment of a communication system having data collection functionality for one or more models that may be used to provide channel information feedback for an NCJT scheme according to the disclosure. The system 3000 illustrated in Fig. 30 may include one or more elements (e.g., components, operations, and/or the like) that may be similar to those in the embodiments illustrated in Fig. 4, Fig. 7, Fig. 28, Fig. 29, and/or other drawings in which similar elements may be indicated by reference numbers ending in, and/or containing, the same digits, letters, and/or the like. The system 3000 illustrated in Fig. 30 may be used, for example, to implement data collection schemes for CSI reporting for systems using NCJT as described below, as well as other data collection schemes according to the disclosure.

For purposes of illustrating some example embodiments of data collection for CSI reporting with NCJT, the system 3000 illustrated in Fig. 30 is shown with some example implementation details. However, the principles of the system 3000 illustrated in Fig. 30 are not limited to these or any other implementation details.

A first channel matrix for a first downlink channel 3015A between a first TRP (TRP1) 3002A and a UE 3001 may be denoted as $H_1$, and a second channel matrix for a second downlink channel 3015B between a second TRP (TRP2) 3002B and the UE 3001 may be denoted as $H_2$. A first precoding matrix used by TRP1 3002A for the first channel 3015A may be denoted as $P_1$, and a second precoding matrix used by TRP2 3002B for the second channel 3015B may be denoted as $P_2$.

The UE 3001 may perform channel measurements based on a first CSI-RS signal 3017A received from TRP1 through the first channel 3015A and a second CSI-RS signal 3017B received from TRP2 through the second channel 3015B. Based on the channel measurements, the UE 3001 may generate channel matrices $H_1$ and $H_2$. The UE 3001 may apply the channel matrices $H_1$ and $H_2$ as inputs to an encoder model 3003 which may generate CSI feedback 3003, for example, by mapping the channel matrices $H_1$ and $H_2$ to a latent space of the of the encoder model 3003.

The UE 3001 may send the CSI feedback 3007 to TRP1 3002A and/or TRP2 3002B using one or more other channels (e.g., uplink channels), signal, and/or the like 3016A and/or 3016B. For example, in some embodiments, the CSI feedback 3003 may be sent to both of TRP1 3002A and TRP2 3002B which may use decoder models 3004A and 3004B, respectively, to generate precoding matrices $P_1$ and $P_2$, respectively at the respective TRPs.

As another example, the UE 3001 may send the CSI feedback 3007 to one of the TRPs which may generate both precoding matrices $P_1$ and $P_2$ and send the precoding matrix for the other TRP to the other TRP. For example, the UE 3001 may send the CSI feedback 3007 to TRP1 3001A which may apply the CSI feedback 3007 to decoder model 3004A to generate both precoding matrices $P_1$ and $P_2$. TRP1 3001A may then transmit the second precoding matrix $P_2$ to TRP2 3002B.

Thus, a data set for the system 3000 may include five elements (e.g., matrices, vectors, words, and/or the like) as follows: ($H_1$, $H_2$, *CSI feedback, $P_1$, $P_2$*). The data set may be used, for example, for training, inference, performance monitoring, and/or the like.

The UE 3001 may include data collection logic 3066, and TRP1 and TRP2 may include data collection logic 3067A and 3067B, respectively. The data collection logic 3066, 3067A, and/or 3067B may implement one or more data collection features in a manner similar to the data collection logic 2966 and/or 2967 illustrated in, and/or described with respect to, Fig. 29 but including additional functionality to declare one or more capabilities for data collection relating to NCJT. For example, data collection logic 3066 may declare a capability to collect data for CSI reporting with NCJT including one or more of the channel matrices $H_1$ and/or $H_2$, CSI feedback 3007, and/or precoding matrices $P_1$ and/or $P_2$. As another example, data collection logic 3066, 3067A, and/or 3067B may implement a data type indication scheme in which one or more data collection features may be expressed as feature groups and corresponding components (e.g., of a reference signal) in a manner similar to the embodiments illustrated in, and/or described with respect to, Table 2 and/or Table 3.

Additionally, or alternatively, the collection logic 3066, 3067A, and/or 3067B may implement an identifier scheme similar to those implemented by collection logic 2966 and/or 2967 including, for example, one or more of a data set ID, TRP vendor ID, condition ID, and/or the like.

In some embodiments, a training data set for one or more of the encoder model 3003, decoder model 3004A and/or decoder model 3004B may be specified in a manner that may cause a one-to-one mapping between one or more inputs of encoder model 3003 and one or more outputs of decoder models 3004A and/or 3004B (e.g., the precoding matrix $P_1$ may correspond to the channel matrix $H_1$, and the precoding matrix $P_2$ may correspond to the channel matrix $H_2$). For example, in some embodiments, a one-to-one mapping may be achieved by using a standardized data set (e.g., a data set based on a standardized specification) for training, inference, and/or the like.

In some embodiments, a UE 3001 may determine one or more of the precoding matrices $P_1$ and $P_2$ (e.g., an output of one or more decoder models 3004A and/or 3004B at one or more of the TRPs 3002A and/or 3002B by using, for example, a shared copy of one or more of the decoder models, one or more locally trained decoder models, one or more reference decoder models, and/or the like.

CSI-Report Configuration

In some embodiments, a UE that is configured with a CSI report may measure a DL channel, compute the CSI for the channel, and report the CSI as a UCI to a base station. If the UE is only configured to collect data, it may not need to report the CSI to the base station. However, the UCI transmission and/or CSI report configuration may require the UE to perform one or more processing operations including channel coding, waveform generation, and/or other operations for a UL channel transmission that may be unnecessary for a data collection operation and may place an unnecessary burden on the UE.

Therefore, some embodiments according to the disclosure may indicate to the UE when it only needs to collect data rather than report CSI. Such an indication may be performed, for example, via RRC and/or dynamically via L1 signaling (e.g., in DCI). In some embodiments according to the disclosure, a data collection session may be indicated to a UE using one or more of the following techniques.

In some embodiments, a CSI-report configuration may include an IE that may indicate whether the report is a regular report or is for data collection (e.g., only for data collection). If the IE indicates the purpose of the CSI-report configuration is for data collection, the UE may collect data but refrain from transmitting an uplink channel for the CSI report. If the CSI report includes an indication of a data type and/or format for data collection, the UE may collect the type based on the indicated type and/or format.

In some embodiments, for a CSI, the DCI may include an indication field may indicate that the CSI is for the purpose of data collection, in which case the UE may refrain from reporting some or all of the CSI, for example, using a PUSCH.

Data Set Specification

Some embodiments according to the disclosure may implement a data set specification that may determine one or more aspects of a data set that may be used for training, inference, and/or the like. A data set specification may be implemented, for example, with a standardized data set that may be created, maintained, and/or the like, by a vendor, an industry standards organization, and/or the like. Depending on the implementation details, the use of a data set specification may alleviate one or more issues related to inter-vendor training collaboration.

For example, in some embodiments, a data set specification (e.g., a standardized data set) may be used to describe a reference decoder model via a data set that may include sets of data such as data pairs (CSI feedback, target CSI) where the CSI feedback may be an output of an encoder and/or an input of a decoder, and the target CSI may be a precoder and/or channel matrix, respectively.

A data set specification for a decoder description may include, for example, $\{X_i, Y_i\}$ for $i = 1, \ldots, N_{train}$. In such an implementation, the type and/or format of the data may also be specified for the decoder output $Y_i$. The following are some possible examples of types and/or formats that may be specified for a decoder output: (1) a specification may specify that the type of data $Y_i$ may be one or more precoders; (2), a specification may specify that the type of data $Y_i$ may be one or more channel matrices; and/or (3) a specification may specify that the type of data $Y_i$ may be one or more coefficients of an angular-delay representation of one or more channel and/or precoder matrices. In case (3), for each layer, an angular-delay transform on a spatial-frequency domain CSI matrix, a channel or precoder matrix $H_{N_{tx} \times N_{sb}}$ may be specified as $H = F_c H_a F_d$ where $F_c$ represents an $N_{tx} \times N_{tx}$ DFT matrix and $F_d$ represents an $N_{sb} \times N_{sb}$ DFT matrix. In this case, the decoder output may provide the matrix $H_a$ which may then be used to determine $H$.

In some embodiments, a specification may also specify a format of a decoder output. For example, if the output of a decoder $Y_i$ is in the form of a matrix, it may be considered a correct form. However, if the output of a decoder $Y_i$ is in the

form of a vector, the specification may specify a technique for transforming the vector to a matrix. For example, in some embodiments, a vector may be transformed to a matrix by writing the vector row-by-row into a matrix, writing the vector column-by-column into a matrix, and/or the like.

Model Interoperability and Collaboration

In some wireless communications systems, a UE and a base station (and/or vendors of a UE and a base station) may collaborate to train a pair of models used to implement compression of feedback for channel information. For example, apparatus and/or vendors may collaborate to train an encoder model at a UE and a corresponding decoder model at a base station.

One type of collaboration may involve PMI mapping between a PMI output of a CSI encoder model, and a precoding matrix that may be output by a decoder model. In such an embodiment, target CSI may be output by a model at the UE side and input to a model at the network (NW) side.

In a network-first training scenario, each network side vendor may develop a different PMI mapping independently, and thus, each UE side vendor may need to collaborate with each network side vendor to obtain the PMI mapping to ensure interoperability of models deployed at the UE side and the network side. Similarly, any network side vendor may need to collaborate with each UE-side vendor to provide the PMI mapping information. Such pairwise collaboration, however, may be difficult to implement, especially as the number of vendors increases.

To address these issues, some methods and apparatus disclosed herein may reduce or eliminate the need for collaboration between vendors and/or enable vendors to collaborate in a specified manner (e.g., based on one or more specifications). The methods and apparatus disclosed herein are not limited to any specific context. However, for purposes of illustration, some embodiments may be described in the context of the following options relating to collaboration between vendors of wireless apparatus for training models used for CSI compression, which may include:

Option 1: Fully standardized reference model (structure + parameters);

Option 2: Standardized dataset;

Option 3: Standardized reference model structure + Parameter exchange between NW-side and UE-side;

Option 4: Standardized data / dataset format + Dataset exchange between NW-side and UE-side; and/or

Option 5: Standardized model format + Reference model exchange between NW-side and UE-side.

In some embodiments, a model may include a structure portion and a parameter (e.g., weight) portion. A structure portion of a model may be specified, for example, using a list of structural aspects of a model such as a model type (e.g., backbone), input and/or output features, number and/or type of layers, activation functions, and/or the like. In some embodiments, a model format may specify a model in terms of the functionality of the model which may be represented, for example, by a computational graph (e.g., using a format such as Open Neural Network Exchange (ONNX)), where nodes may represent operations and edges may represent the flow of data between model inputs, nodes, model outputs, and/or the like.

To implement a reference model under option 1, some embodiments in accordance with the disclosure may specify (e.g., implicitly define) a PMI mapping which may reduce, minimize, or eliminate inter-vendor collaboration. For example, if a reference model implements a reference decoder, each UE vendor may only need to adjust or optimize its own encoder model to work with the reference decoder. In this context, a PMI mapping may map a model input to a model output. This is in contrast to a codebook scheme in which a PMI mapping may map a codebook input to a codebook output (e.g., a mapping in the form of a PMI codebook which a UE may use to find a PMI by running a PMI algorithm).

To implement a specified data set under option 2, some embodiments in accordance with the disclosure may specify (e.g., explicitly) a PMI mapping via a data set which may reduce, minimize, or eliminate inter-vendor collaboration.

To implement option 3, option 4, and/or option 5 in accordance with the disclosure, vendors of network and/or UE apparatus may collaborate in a specified manner. For example, to implement option 3, a network vendor may generate model parameters by training a pair of CSI generation and reconstruction models (e.g., an encoder and decoder pair) and provide the parameters of the CSI generation model to each UE vendor. The network vendor may train a model pair, for example, using a specified reference model structure for the CSI generation model and/or the CSI reconstruction model. A specified reference model structure may be selected by the network vendor, a UE vendor, or in any other manner.

A training entity of each UE vendor may then use the parameters it receives from the network vendor to derive a PMI mapping between the output of the CSI generation model (e.g., a CSI payload) and the input to the CSI generation model (e.g., a precoder corresponding to the CSI payload). Although the parameters of the CSI generation model provided by a network vendor may have been determined in the context of a specified reference model structure, the derived PMI mapping may enable a UE-side training entity to develop its own parameters that are compatible with its own implementation yet still provide results that are the same as, or similar to, results generated by the specified reference model structure using the parameters provided by the network vendor. Additionally, or alternatively, a UE may directly use a specified reference model structure and the parameters provided by the network vendor (e.g., for inference operations).

In some embodiments, parameters for an implementation of option 3 may be exchanged and/or retrieved using a central registry. For example, a network side may register the parameters of a CSI generation model (e.g., an encoder model) to a registry. A UE may establish a connection with the registry to retrieve the parameters of the CSI generation model.

In some embodiments, an implementation of option 3 may only involve a specified (e.g., standardized) reference model structure. Additionally, or alternatively, an implementation of option 3 may involve a specified (e.g., standardized) mapping of model parameters to a physical channel payload.

Implementing option 4 may be similar, in some respects, to option 3 but with a specified (e.g., standardized) data/data set format and a data set exchange instead of a specified model structure and parameter exchange. For example, once a specified data/data set format is selected by the network vendor, a UE vendor, or in any other manner, a UE may retrieve a data set from a network side, for example, using a registry. A data/data set format may include information about target CSI, CSI feedback, and/or the like. A UE may then train a generation model (e.g., an encoder model) using a data set retrieved from the network side. The UE may train the generation model through offline engineering, fine-tuning, and/or the like. In such an embodiment, the generation model at the UE side may be adjusted, optimized, compiled, and/or the like, for inference operations at the UE side.

To implement option 5, a model (e.g., a trained model) may be exchanged between a network side and a UE side using a specified (e.g., standardized) model format (e.g., Open Neural Network Exchange (ONNX) or other format). This model exchange may enable vendors on a network side and/or a UE side to adjust or optimize their models using scenario-specific and/or vendor-specific datasets. Thus, vendors on a network side and/or a UE side may benefit from model deployments using data based on actual operating conditions. Moreover, such model exchanges may enable vendors (on network and/or UE sides) to train models that may be compatible with a specified format to achieve the same or similar functionality while adjusting and/or optimizing models based on proprietary implementations.

Model Training Collaboration

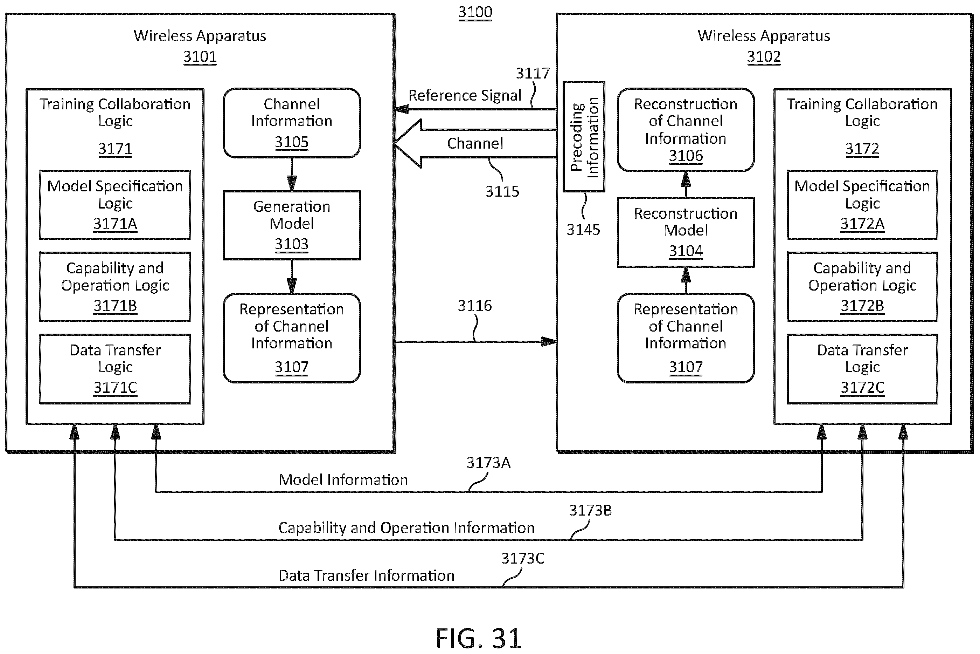

Fig. 31 illustrates an embodiment of a communication system having model training collaboration functionality according to the disclosure. The system 3100 may be used, for example, to implement any aspects of the disclosure relating to model training collaboration including model specification (e.g., model structures, identifiers, parameters, formats, mappings, and/or the like), data exchange (e.g., exchanging training data sets, reference models, and/or the like), apparatus capabilities (e.g., support for specified models, model structures, modifications, and/or the like), and/or other aspects. Any of the models and/or model structures discussed herein may be implemented as reference models and/or reference model structures, respectively.

The system 3100 may include one or more elements (e.g., components, operations, and/or the like) that may be similar to those in the embodiments illustrated in Fig. 4, Fig. 7, and/or other drawings in which similar elements may be indicated by reference numbers ending in, and/or containing, the same digits, letters, and/or the like.

In the system 3100 illustrated in Fig. 31, a first wireless apparatus (e.g., a UE) 3101 may receive a reference signal 3117 from a second wireless apparatus (e.g., a base station) 3102 through a channel 3115, for example, to enable the first wireless apparatus 3101 to determine channel conditions of the channel 3115. The second wireless apparatus 3102 may apply precoding information (e.g., a precoding matrix) 3145 to some transmissions such as PDCCH, PDSCH, and/or the like, as well as some reference signals such as CSI-RS.

The first wireless apparatus 3101 may perform channel measurements based on the reference signal 3117 and the channel conditions to generate channel information (e.g., a channel estimation, a channel matrix, precoding information, and/or the like) 3105 that it may send to the second wireless apparatus 3102, for example, in the form of a representation 3107 that it may generate using a generation model 3103. The first wireless apparatus 3101 may send the representation 3107 to the second wireless apparatus 3102, for example, using another channel (e.g., an uplink channel), signal, and/or the like 3116. The second wireless apparatus 3102 may include a reconstruction model 3104 that it may use to generate a reconstruction 3106 of the channel information 3105.

In some embodiments, the generation model 3103 and the reconstruction model 3104 may be trained (e.g., in an auto-encoder configuration) to jointly compress and/or decompress the channel information 3105 using any training scheme, including one or more joint training and/or deployment frameworks disclosed herein.

The first wireless apparatus 3101 and the second wireless apparatus 3102 may include training collaboration logic 3171 and 3172, respectively, which, individually and/or collectively, may implement some or all of the functionality relating to model training collaboration disclosed herein. Training collaboration logic 3171 may include various combinations of all, some, or none of model specification logic 3171A, capability and operation logic 3171B, and/or data transfer logic 3171C. Similarly, training collaboration logic 3172 may include various combinations of all, some, or none of model specification logic 3172A, capability and operation logic 3172B, and/or data transfer logic 3172C.

Model specification logic 3171A and 3172A may implement, individually and/or collectively, functionality relating to specified (e.g., standardized) models including model structures, identifiers, parameters, input and/or output formats, mappings, and/or the like. To implement such functionality, model specification logic 3171A and 3172A may exchange model information 3173A such as model identifiers, model structure identifiers, parameters, formats, reference models, and/or the like.

Capability and operation logic 3171B and 3172B may implement, individually and/or collectively, functionality relating to declarations and/or implementation by an apparatus of capabilities relating to support for specified models, model structures, and/or associated operations (e.g., inference), model modifications (e.g., training, tuning, engineering), and/or the like. To implement such functionality, model specification logic 3171B and 3172B may exchange capability and operation information 3173B such as identifiers of supported models, model structures, operation modes (e.g., direct and/or modified operations), modification operations such as tuning and/or engineering operations, time amounts involved with performing modification operations, and/or the like.

Data transfer logic 3171C and 3172C may implement, individually and/or collectively, functionality relating to exchanging training data sets, reference models, and/or the like. To implement such functionality, data exchange logic 3171C and 3172C may exchange data transfer information 3173C such as training data (e.g., training data sets), reference models, metadata such as identifiers, data type and/or format, mappings (e.g., to time, frequency, and/or space resources) and/or the like.

Although some functionality disclosed herein may be characterized as, and/or implemented with, model specification logic 3171A and 3172A, capability and operation logic 3171B and 3172B, and/or data transfer logic 3171C and 3171C, there may be overlap and/or interdependency between functionality implemented by these logic elements. Some functionality may be spread between different logic elements, consolidated within fewer logic elements, and/or performed at least partially by other portions of the training collaboration logic 3171 and 3172.

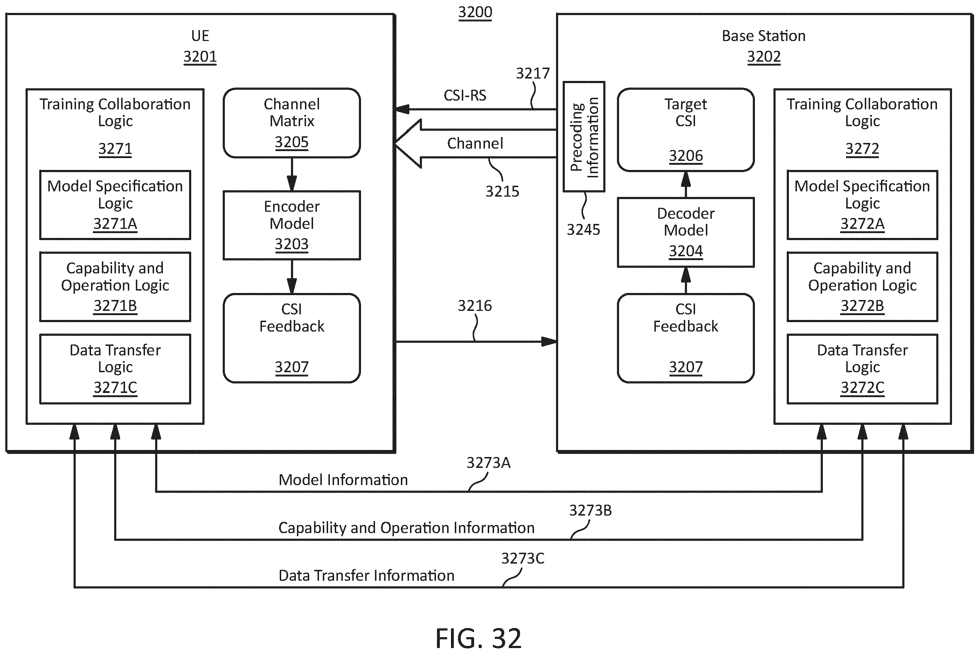

Fig. 32 illustrates an example embodiment of a communication system having model training collaboration functionality according to the disclosure. The system 3200 illustrated in Fig. 32 may include one or more elements (e.g., components, operations, and/or the like) that may be similar to those in the embodiments illustrated in Fig. 4, Fig. 7, Fig. 31, and/or other drawings in which similar elements may be indicated by reference numbers ending in, and/or containing, the same digits, letters, and/or the like. The system 3200 illustrated in Fig. 32 may be used, for example, to implement model training collaboration schemes as described throughout the disclosure.

For purposes of illustrating some example embodiments of training collaboration, the system 3200 illustrated in Fig. 32 is shown with some example implementation details. Specifically, the first communication apparatus may be implemented with a UE 3201, the second communication apparatus may be implemented with a base station 3202, the reference signal may be implemented with a CSI-RS signal 3217, the channel information may be implemented with a channel matrix 3205, the generation model may be implemented with an encoder model 3203 (which may also be referred to as an encoder), the representation of channel information may be implemented with CSI feedback 3207, the reconstruction model may be implemented with a decoder model 3204 (which may also be referred to as a decoder), and the reconstruction of the channel information may be implemented with target CSI 3206 (e.g., a precoder matrix, one or more coefficients that may be used to determine a precoder matrix by a combination of basis vectors, and/or the like). However, the principles of the system 3200 illustrated in Fig. 32 are not limited to these or any other implementation details.

The UE 3201 may include UE-side training collaboration logic 3271 which may include model specification logic 3271A, capability and operation logic 3271B, and/or data transfer logic 3271C which may operate in a manner similar to training collaboration logic 3171 and/or corresponding logic therein illustrated in Fig. 31. The base station 3202 may include base station-side collaboration logic 3272 which may include model specification logic 3272A, capability and operation logic 3272B, and/or data transfer logic 3272C which may operate in a manner similar to training collaboration logic 3172 and/or corresponding logic therein illustrated in Fig. 31.

Model Structure Scheme

In some embodiments, model specification logic 3171A, 3172A, 3271A, and/or 3272A, and/or other portions of training collaboration logic 3171, 3172, 3271, and/or 3272 may implement a model structure scheme that may enable wireless apparatus on network and/or UE sides to exchange specified models and/or specified model structures (with or without exchanging parameters). In such embodiments, information may be exchanged between wireless apparatus in the form of model information 3173A and/or 3273A illustrated in Fig. 31 and/or Fig. 32, respectively.

One or more models and/or model structures may be specified, for example, in a specification (e.g., a standardized specification). As mentioned above, a model (e.g., a complete model) may include a structure portion and a parameter portion. A structure portion of a model may be described in a specification, for example, using a table, list, or other data structure containing structural aspects of a model such as a model type, input and/or output features, number and/or type of layers, activation functions, and/or the like. A parameter portion of a model may be described in a specification, for example, using a table, list, or other data structure containing model parameters such as weights, biases, and/or the like.

Some embodiments may use one or more identifiers (IDs) to identify specified models, model structures, parameters, and/or the like. For example, with option 1, a model may be identified by a model identifier (model ID) that an apparatus (e.g., on a network side or UE side) may use to determine (e.g., from a specification) both the structure portion of the model and the parameter portion (e.g., weights) of the model. As another example, with option 3, the structure portion of a model may be identified by a model structure identifier (model structure ID) that an apparatus may use to determine the structure portion of the model. However, with option 3, the apparatus may receive the parameter portion of the model from another apparatus (e.g., model parameters may be transferred to the apparatus from another apparatus).

In some example embodiments, a description of a model structure in a specification may include one or more of any of the following (some or all of which may be referred to as hyperparameters): model type (e.g., a backbone) such as a CNN, RNN, multi-layer perceptron (MLP), generative adversarial network (GAN), transformer neural network (TNN) (which may also be referred to as a transformer (TF)) such as a vision transformer (ViT), and/or the like; number of input and/or output features; number of layers; number of hidden nodes; activation functions such as rectified linear unit (ReLU), exponential linear unit (ELU), softmax, sigmoid, and/or the like; kernel size and/or dimensions (e.g., for a neural network (NN)); number of input and/or output channels for one or more layers; model input and/or output shape; padding mode, stride, and/or the like (e.g., for a neural network (NN)); and/or the like.

A model input shape may describe how input target channel information (e.g., target CSI) may be related to one or more model input features (e.g., a number M of input features). In some embodiments, a model input shape may describe how one or more inputs to a model may be shaped from the input features. For example, an input to a model may involve expanding (which may be referred to as unsqueezing) one or more dimensions for a one-dimensional (1D) CNN having M features to generate a tensor having a shape (M, 1).

A model output shape may describe how output channel information (e.g., reconstructed target CSI) may be related to one or more model output features (e.g., a number N of output features). In some embodiments, a model output shape may describe how one or more outputs from a model may be shaped from the output features. For example, an output of a model may be related to N output features by compressing (which may be referred to as squeezing) a last dimension of the model output.

Table 4 illustrates some example embodiments of model structure IDs and corresponding model structure that may be used by a specification, wireless apparatus (e.g., on a network side or UE side), and/or the like according to the disclosure.

Table 4

| Model Structure ID | Model Structure |
|---|---|
| 0 | **Type (backbone): CNN**<br>**Input features:** M<br>**Output features:** N<br>**Input shape of the model:** describes how input to the model may be shaped from the input features, e.g., it may expand (e.g., unsqueeze) a dimension for 1D CNN: from the *M* features, a tensor of shape (*M*, 1) may be generated.<br>**Number of CNN layers**<br>**Number of input and/or output channels for each layer**<br>**CNN padding mode, stride, etc.**<br>**Activation function for each layer:** ReLU, ELU, etc.<br>**Output shape of the model:** How the output of the model is related to the *N* features, e.g., compressing (e.g., squeezing) a last dimension of the CNN output. |

(continued)

| Model Structure ID | Model Structure |
|---|---|
| 1 | **Type (backbone):** MLP<br>**Input features:** M<br>**Output features:** N<br>**Input shape of the model:** describes how input CSI to the model may be related to output features<br>**Number of hidden layers**<br>**Activation function for each layer:** ReLU, ELU, etc.<br>**Output shape of the model:** How the output reconstructed CSI may be related to the *N* output features<br>**...** |
| ... | ... |

The embodiments illustrated in Table 4 may be used, for example, to implement, at least partially, a scheme such as option 3.

Embodiments in which a specification may identify a model by a model ID (e.g., option 1) may implement model IDs and descriptions in a manner similar to the model structure IDs and descriptions illustrated in Table 4, but a model structure ID in the left column may be replaced by a model ID, and the description in the right column may also include one or more parameters (e.g., weights, biases, and/or the like) for the model indicated by the model ID.

In some embodiments, a specification may specify a full model or a full structure of a model. Additionally, or alternatively, a wireless apparatus (e.g., on a network or UE side) may obtain a first portion of a model or a model structure from a specification, and a second portion of the model or model structure may be exchanged with the wireless apparatus, for example, by another wireless apparatus.

In some embodiments, one or more quantizations may be specified for model inputs and/or outputs. Additionally, or alternatively, a specification may also specify how target channel information, a representation of target channel information, and/or reconstructed target channel information may be reconstructed by combining model inputs and/or outputs. For example, in some embodiments, a specification may specify how a PMI feedback bit string may be generated from an encoder output via quantizing and concatenating the bits in ascending or descending order of a feature index and/or number.

Model Inputs and/or Outputs

In some embodiments that implement schemes such as options 1, 3, and/or 5, a generation model may be shared with a wireless apparatus. For example, an encoder model with M input features may be transferred to a UE, or a model ID may be sent to a UE indicating the use of a specified (e.g., standardized) encoder model with M input features. In such embodiments, the UE may be provided with information on the type and/or format of the input, and/or information on how it may be mapped to raw channel measurements across frequency, time, space, and/or the like. For example, if an encoder model compresses CSI in a spatial-frequency domain, the UE may be provided with information on how to map the channel measurements from one or more sub-bands to the M input features.

Referring again to Fig. 31 and Fig. 32, in some embodiments, model specification logic 3171A, 3172A, 3271A, and/or 3272A, and/or other portions of training collaboration logic 3171, 3172, 3271, and/or 3272 may implement a specified type, format, and/or the like, for inputs and/or outputs of models, model structures, and/or the like. In such embodiments, information may be exchanged between wireless apparatus in the form of model information 3173A and/or 3273A illustrated in Fig. 31 and/or Fig. 32, respectively.

For example, a specification may specify that one or more inputs to, and/or outputs from, a model or a model structure, may be in the form of a channel matrix (e.g., a raw channel matrix), a precoding matrix, and/or the like.

Some embodiments may implement a specification that may indicate whether input and/or output matrices are specified in a spatial-frequency domain which may be characterized as follows:

$$\widetilde{W} = W_{N_{tx} \times N_{sb}} \qquad (Eq.\ 14)$$

or an angular/delay domain which may be characterized as follows:

$$\widetilde{W} = F_c W F_d \qquad\qquad\qquad (\text{Eq. } 15)$$

where $F_c$ and $F_d$ may be DFT matrices.

Additionally, or alternatively, model specification logic 3171A, 3172A, 3271A, and/or 3272A, and/or other portions of training collaboration logic 3171, 3172, 3271, and/or 3272 may implement a specification that may specify a mapping between subband information and model inputs and/or outputs. For example, in an embodiment in which a UE reports PMI for $N_{sb}$ subbands, the UE may vectorize one or more subband precoder matrices, for example, by reshaping it by reading the columns and/or rows from the first column and/or row, and then concatenating the vectorized matrices of the subbands in a specified order. Examples of orders may be ascending or descending order of subband index, RB indices, and/or the like.

In embodiments in which CSI may be compressed in a time domain, a time domain order may also be specified, for example, in ascending or descending order of time instances such as a target slot index (e.g., a slot for which the CSI is reported).

In embodiments in which CSI may be compressed in both time domain and frequency domains, an order may be defined in time and/or frequency axes. This may be compared with an NR implementation in which CSI matrices, after vectorization, may be concatenated together in a frequency domain first according to a frequency domain and/or subband order for a given time instance/slot and then in ascending order of time instances. For example, with two subbands and two slots, the four CSI matrices $P_{i,j}$ $i = 1,2, j = 1,2$ may be concatenated as $[P_{1,1}, P_{1,2}, P_{2,1}, P_{2,2}]$ where $P_{i,j}$ may be the CSI matrix for subband $j$ and time/slot $i$.

Similarly, if a decoder model with N output features is transferred to a network, or a model ID is sent to the network indicating the use of a specified (e.g., standardized) decoder model with N output features, the network may be provided (e.g., in a specification) information on the type and/or format of the output, and/or information on how it may be mapped across frequency, time, space, and/or the like, in a manner similar to that described above with respect to inputs of an encoder model.

In the example embodiments described above in which an input mapping may be specified for an encoder model shared with a UE, or an output mapping may be specified for a decoder model shared with a network, a typical use case may be that the wireless apparatus that received the model may use the received model (or a locally modified or configured version of the received model) for inference. However, in some embodiments, a wireless apparatus may receive a model other than one the wireless apparatus may use for inference. For example, in an embodiment in which a decoder model may be shared with a UE, a typical use case may be that UE may develop an encoder model for the received decoder model (e.g., the UE may develop a complete auto-encoder based on receiving the decoder portion of the auto-encoder).

In such an embodiment (e.g., a decoder model shared with a UE), a UE may be provided with information on how channel information feedback (e.g., reported PMI output from an encoder and/or input to a decoder) may be mapped (e.g., to one or more precoding matrices) across subband and/or time instances. Additionally, or alternatively, a UE may be provided with a method to reconstruct one or more precoder matrices from a decoder output, for example, an inverse of a proposed vectorization and/or frequency/time order.

In one example implementation of such an embodiment, for a precoding matrix of size $(N_t \times R)$ with $N_{sb}$ subbands and $T$ slots, a UE may first divide the decoder output into $N_{sb} \cdot T$ chunks of length $N_t \cdot R$ and obtain the precoder by converting each chunk vector to a matrix using, for example, the vectorization described above. A precoder matrix for chunk number $i$, where $i = 1, ..., N_{sb} \cdot T$ may correspond to subband $(i - 1)\bmod N_{sb} + 1$ and slot $\left\lfloor \frac{i-1}{N_{sb}} \right\rfloor + 1$.

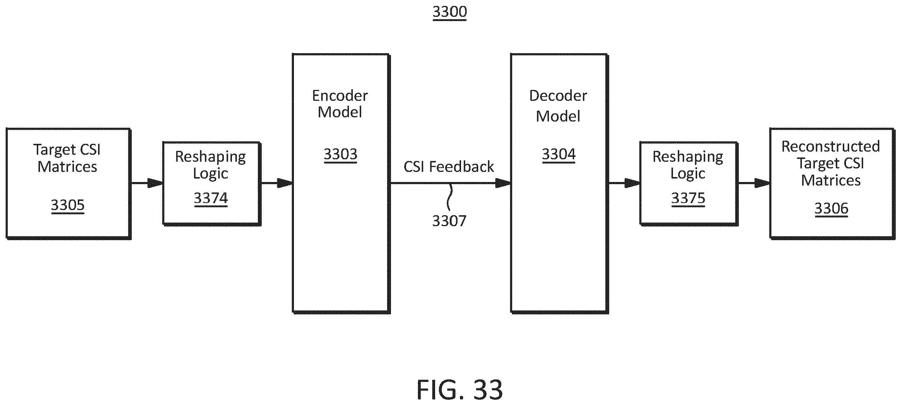

Fig. 33 illustrates an embodiment of a scheme for mapping channel information and/or reconstructed channel information to model inputs and/or outputs according to the disclosure. The mapping scheme 3300 illustrated in Fig. 33 may be used to implement any of the model input/output mapping schemes disclosed herein including, for example, those described above with respect to Fig. 31 and/or Fig. 32. The mapping scheme 3300 illustrated in Fig. 33 may be implemented, for example, with model specification logic 3171A, 3172A, 3271A, and/or 3272A, and/or other portions of training collaboration logic 3171, 3172, 3271, and/or 3272.

Referring to Fig. 33, the mapping scheme 3300 may include a generation model and/or a reconstruction model which, for purposes of illustration may be implemented as an encoder model 3303 and/or a decoder model 3304, respectively, as shown in Fig. 33, but in other embodiments may be implemented with any other types of generation and/or reconstruction models. CSI feedback 3307 output from the encoder model 3303 may be applied as input to the decoder model 3304.

The mapping scheme 3300 may also include target channel information and/or reconstructed channel information which, for purposes of illustration may be implemented as target CSI 3305 and/or reconstructed target CSI 3306, respectively, as shown in Fig. 33, but in other embodiments may be implemented with any other types of channel information and/or reconstructed channel information. Also for purposes of illustration, the target CSI 3305 may be implemented with target CSI matrices of one or more (e.g., all) subbands and/or slots, and the reconstructed target CSI 3306 may be implemented with reconstructed target CSI matrices of one or more (e.g., all) subbands and/or slots.

The mapping scheme 3300 may also include a first reshaping logic 3374 configured to reshape target CSI 3305 (or other target channel information) applied as input to encoder model 3303 (or other generation model) and/or a second reshaping logic 3375 configured to reshape output of decoder model 3304 (or other reconstruction model) as reconstructed target CSI 3306 (or other reconstructed target channel information).

In some embodiments, first reshaping logic 3374 and/or second reshaping logic 3375 may implement, at least in part, one or more mapping schemes that may be specified, for example, as part of one or more specifications (e.g., standardized specifications).

In some embodiments using spatial-frequency (SF) domain compression for target CSI 3305, first reshaping logic 3374 may map target CSI 3305 to one or more inputs of encoder model 3303 as follows. Target CSI, which may be implemented as precoder matrices of size $N_{tx} \times R$, of $N_{sb}$ subbands, may be stacked in ascending order of subband indices, then reshaped into vectors and stacked to obtain a vector of length $N_{sb} \times N_{tx} \times R$. Other reshaping methods may also be used depending on the encoder backbone, for example, reshaping to a matrix for a 2D CNN backbone.

Additionally, in embodiments using SF domain compression, second reshaping logic 3375 may map one or more outputs of decoder model 3304 to reconstructed target CSI 3306 using reshaping that may be similar to, but the inverse, the reshaping used by first reshaping logic 3374 to generate reconstructed target CSI matrices from one or more outputs of the decoder model 3304.

In embodiments using time-spatial-frequency (TSF) domain compression, the first reshaping logic 3374 and/or second reshaping logic 3375 may operate in a manner similar to that described above for SF domain compression, but additionally, target CSI may be sorted in ascending order of slot number after obtaining per-slot SF domain vectors for the encoder model 3303 and decoder model 3304.

Some embodiments may implement an input and/or output dimension matching scheme according to the disclosure. For example, if an encoder model is configured for $N_{f,max}$ features, and the actual number of configured subbands results in a number of features $N_f$ less than $N_{f,max}$, a specification may specify a mapping of the $N_f$ configured features to the $N_{f,max}$ encoder model input features. One example mapping is to input zero to one or more features corresponding to non-configured subbands for CSI reporting. Thus, a subband configuration without CSI reporting may use matrices with effectively all zero values.

Model and Data Set Capability Reporting for Inference and Modification

In some embodiments, capability and operation logic 3171B, 3172B, 3271B, and/or 3272B, and/or other portions of training collaboration logic 3171, 3172, 3271, and/or 3272 (which may be referred to individually and/or collectively as the capability and operation logic) may implement techniques for reporting and/or using capabilities to support specified (e.g., standardized) models, model structures, data sets, and/or the like. In such embodiments, information may be exchanged between wireless apparatus in the form of capability and operation information 3173B and/or 3273B illustrated in Fig. 31 and/or Fig. 32, respectively.

For example, a UE may declare capabilities to support one or more specified (e.g., standardized) reference models or model structures and/or related inference operations. Such capabilities may be declared, for example, using a configuration scheme such as a CSI report configuration. As another example, in some embodiments, a UE may declare and/or implement: capabilities to support one or more types of training collaboration (e.g., inter-vendor collaboration); capabilities to run one or more specified and/or shared models directly; capabilities to modify one or more specified and/or shared models (e.g., using fine-tuning, offline engineering, and/or the like); and/or one or more amounts of time for modifying models.

Capabilities and Inference for Specified Model or Structure

In some embodiments, capability and operation logic 3171B, 3172B, 3271B, and/or 3272B, and/or other portions of training collaboration logic 3171, 3172, 3271, and/or 3272 may implement a scheme for a wireless apparatus (e.g., a UE) to declare capabilities to support one or more specified (e.g., standardized) reference models and/or model structures and/or related inference operations. In such embodiments, information may be exchanged between wireless apparatus in the form of capability and operation information 3173B and/or 3273B illustrated in Fig. 31 and/or Fig. 32, respectively.

For example, in some embodiments, a specification may specify a number $N_{ref}$ of reference models. A UE may declare which reference models, if any, the UE is capable of supporting, for example, by setting a bit corresponding to each supported reference model in a bitmap of length $N_{ref}$. Each reference model may be associated with a reference model ID which a base station may configure (from among the supported reference models declared by the UE), for example in an RRC configuration for a CSI report configuration. The UE may use the reference model (or a modified version of the reference model) indicated by the configured reference model ID for inference.

As another example, in some embodiments, a specification may specify a number $N_{structure}$ of reference model structures (e.g., standardized reference model structures). A UE may declare which reference model structures, if any, the UE is capable of supporting, for example, by setting a bit corresponding to each supported reference model structure in a bitmap of length $N_{structure}$ where each reference model structure may be associated with a reference model structure ID. A base station may assign a reference model structure ID to the UE (from among the supported reference model structures declared by the UE) when the UE connects to a cell with the base station. Once the UE is connected to the cell, the base station may transfer one or more parameters (e.g., weights) for the assigned reference model structure. The UE may then use the model with the assigned reference model structure and received parameters (or a modified version of the model) for inference.

Capabilities for Training Collaboration and Model Modification

In some embodiments, capability and operation logic 3171B, 3172B, 3271B, and/or 3272B, and/or other portions of training collaboration logic 3171, 3172, 3271, and/or 3272 may implement schemes for a wireless apparatus (e.g., a UE) to declare and/or implement: capabilities to support one or more types of training collaboration; capabilities to run one or more specified and/or shared models directly; capabilities to modify one or more specified and/or shared models; and/or one or more amounts of time for modifying models. In such embodiments, information may be exchanged between wireless apparatus in the form of capability and operation information 3173B and/or 3273B illustrated in Fig. 31 and/or Fig. 32, respectively.

For example, in some embodiments, a UE may implement a reference model (e.g., a standardized reference model) in a manner similar to option 1, in which the UE may declare, not only whether the UE supports a specified reference model, but also whether the UE may use the reference model directly for inference and/or whether the UE may modify the reference model, for example, by performing fine-tuning, offline engineering, and/or the like. Whether a UE may benefit from modifying a model may depend on the value of $N_{ref}$ and/or whether the number of specified and/or supported reference models may be sufficient to capture the cell-specific environment, e.g., for a cell-specific field data set distribution. Thus, upon configuration of the CSI report configuration, the UE may modify one or more reference models, for example, by performing a fine-tuning operation. To accommodate a fine-tuning operation the UE may declare a capability in the form of an amount of time (e.g., a minimum required time gap) for a fine-tuning operation (e.g., online training) $T_{finetune}$ from the activation of a CSI report configuration to report the CSI report.

As another example, in some embodiments, a UE may implement a reference model structure (e.g., a standardized reference model structure) in a manner similar to option 3, in which the UE may declare, not only whether the UE supports a specified reference model structure, but also whether the UE may use a model implemented with the specified reference model structure (e.g., after receiving parameters for the model) directly for inference and/or whether the UE may modify the model, for example, by performing fine-tuning, offline engineering, and/or the like. In some embodiments, a UE may receive one or more cell-specific models trained with field data to improve the model performance. However, depending on the UE capability and/or implementation, the UE may perform an offline engineering task to adjust or optimize the model for its implementation. In some embodiments, a UE may declare a capability in the form of an amount of time (e.g., a minimum required time gap) for offline engineering $T_{offline, eng}$ from the activation of the CSI report configuration with a transferred model structure ID to report the CSI report.

Cell Operation and UE Capability Reporting

The methods and apparatus disclosed herein relating to capabilities and inference for specified model or structure and/or capabilities for training collaboration and model modification are not limited to any specific context. However, for purposes of illustration, some embodiments may be described in the context of one or more directions relating to collaboration between vendors of wireless apparatus for training models used for CSI compression, which may include:

Direction A: (UE training own model based on shared model and/or data set) related to sharing a data set or a reference model that may enable UE to train its own encoder model while allowing it to carry out offline engineering.

Direction B: (Direct use of shared model by UE) related to an NW side sharing a UE encoder model for direct use by the UE.

Direction C: (UE training own model based on specified models) related to encoder and/or decoder reference models specified in a specification which a UE may use to train its own encoder against one or more specified reference models.

The following embodiments provide (e.g., from a UE capability perspective) example implementation details for schemes that may implement one or more of these directions and/or options and may include specification impacts for UE capabilities and/or inference phases. In some embodiments, a UE may declare one or more capabilities that may support one or more directions and/or options. For purposes of illustration, some example embodiments may be described in the context of some implementation details such as wireless apparatus implemented with a UE and/or a base station such as a gNB, a generation model implemented with an encoder model, a reconstruction model implemented with a decoder model (e.g., an auto-encoder model pair), and/or the like, but the principles are not limited to these or any other implementation details.

UE Training Own Model Based on Shared Model and/or Data Set

In some embodiments, capability and operation logic 3171B, 3172B, 3271B, and/or 3272B, and/or other portions of training collaboration logic 3171, 3172, 3271, and/or 3272 may implement a collaborative model training scheme (e.g., in a manner similar to direction A) in which a shared model and/or data set may be used by a UE to perform offline engineering which may adjust or optimize an actual model used by the UE device to perform inference. A UE may perform offline engineering, for example, using a knowledge distillation phase in which the UE may use a shared model and/or data set to train its own encoder of interest. In such embodiments, information may be exchanged between wireless apparatus in the form of capability and operation information 3173B and/or 3273B illustrated in Fig. 31 and/or Fig. 32, respectively.

In some example embodiments, a UE may connect to a cell, and a gNB may then share a model and/or data set with the UE. The shared model and/or data set may be assigned an ID (e.g., a model ID, a data set ID, and/or the like) which may be used to specify the model and/or data set. A gNB (or other network side apparatus) may share multiple models specific to the cell with different IDs. The gNB may then configure, e.g., via RRC, one or multiple CSI report configurations for AI/ML CSI compression where a model ID may be included as an information element (IE) in each configuration.

For each report configuration, the UE may use extra processing time to perform offline engineering before the configuration may be considered active. For example, an offline engineering time duration $T_{offline\_eng}$ may be configured for the UE based, for example, on the UE declaring the time duration $T_{offline\_eng}$ for offline engineering as a capability of the UE. Once a model is shared with the UE at time $t_0$ (e.g., at the activation of a CSI report configuration), the gNB may indicate the model in a CSI report configuration, after time $t_0 + T_{offline\_eng}$. Additionally, or alternatively, the gNB may configure the report configuration without a time restriction, but the report may be considered to be active starting from $t_{active} + Toffline_{eng}$ where $t_{active}$ may indicate a time at which the report configuration would have been active had it been a non-AI/ML 5G NR CSI report configuration.

Direct Use of Shared Model by UE

In some embodiments, capability and operation logic 3171B, 3172B, 3271B, and/or 3272B, and/or other portions of training collaboration logic 3171, 3172, 3271, and/or 3272 may implement a collaborative model training scheme (e.g., in a manner similar to direction B) in which a cell-specific encoder model may be transferred to a UE for direct use by the UE. In such embodiments, information may be exchanged between wireless apparatus in the form of capability and operation information 3173B and/or 3273B illustrated in Fig. 31 and/or Fig. 32, respectively.

In some example embodiments, a UE may connect to a cell, and a gNB at the cell may transfer one or more cell-specific encoder models to the UE for direct use by the UE. One or more shared encoder models may be transferred based on one or more supported model structures (e.g., type, backbone, and/or the like) reported by the UE, for example, a model structure with a CNN type model with specific hyper parameters.

In one example framework, a number of encoder model structures $N_{ref,enc,structure}$ may be specified in a specification, each with an assigned model structure ID. A UE may declare its capability to support one or more of the specified model structures indicated by one or more corresponding model structure IDs once the UE is RRC connected to cell. The supported model structures reported by the UE may include the full set of $N_{ref,enc,structure}$ model structures or a subset thereof. A UE may report a subset of model structures, for example, because some cells and/or gNBs may only support a subset of model structures in the cell. A gNB may indicate supported model structures for a cell, for example, as system information such as in a system information block (SIB) and/or by configuring a UE with model structures that may be supported in the cell.

Depending on the implementation details, if a UE declares a capability to support (e.g., directly use without modification such as offline engineering under direction B) a specific transferred model, the configured and/or activated CSI report configurations may be effectively activated without a fine-tuning time. However, in some embodiments, a maximum number of encoder models may be indicated in one or more (e.g., all) of the CSI report configurations. Implementing a maximum number of encoder models may be useful, for example, because a single model may be trained to work for multiple CSI report configurations, and thus, restricting the maximum number of AI/ML CSI report configurations may not ensure such a limit. Therefore, in some embodiments, a dedicated UE capability may a include maximum number of encoder models that may be configured, and thus transferred, to the UE across all CSI report configurations.

UE Training Own Model Based on Specified Models

In some embodiments, capability and operation logic 3171C, 3172C, 3271C, and/or 3272C, and/or other portions of training collaboration logic 3171, 3172, 3271, and/or 3272 may implement a collaborative model training scheme (e.g., in a manner similar to direction C) in which a UE may train its own encoder model against one or more specified reference models. In such embodiments, information may be exchanged between wireless apparatus in the form of capability and operation information 3173B and/or 3273B illustrated in Fig. 31 and/or Fig. 32, respectively.

In some example embodiments, a specification may specify a total number $N_{total,ref}$ of reference models (e.g., generation models such as encoder models and/or reconstruction models such as decoder models). Some embodiments may use a cell-independent capability signaling scheme (e.g., a bitmap of specified models) in which a UE may declare one or more capabilities to support one or more specified (e.g. standardized) reference models. This type of approach may be in contrast to a non-AI/ML 5G NR codebook which may be used to determine CSI feedback (e.g., reported PMI output) rather than a decoder model.

For convenience of reference, some example embodiments may be identified with case numbers. These case numbers are only for purposes of efficiency, and the embodiments identified by the case numbers are not limited to the implementation details associated with the case numbers or any other implementation details.

Case 1: $N$ reference decoders are specified in a specification.

In such embodiments, a UE may declare a capability to support one or more of the reference decoder models specified in the specification. Depending on which cell a UE may connect to, a gNB at the cell may configure the UE with one or multiple reference decoder models among those supported by the UE. The configuration may be performed, for example, in the form of one or more CSI report configurations. For example, a CSI report configuration configured for an AI/ML CSI compression report may include an IE indicating the index of the reference decoder model (e.g., reference decoder model ID). This type of approach may be in contrast to a non-AI/ML 5G NR codebook scheme in which a PMI codebook type may be indicated in a CSI report configuration. For each such CSI report configuration, a UE report the CSI feedback by applying an encoder which corresponds to (e.g., matches) the reference decoder.

Case 1-1 (direct encoder use): A UE may apply an encoder which it may train offline for the reference decoder (e.g., without considering the connected cell) and which may be ready to use in an inference phase (e.g., for an inference operation once the corresponding CSI report is configured). In such a case, in some embodiments, a UE may prepare a matching encoder model without time constraints (e.g., without a specific timeline being established for the UE to prepare the matching encoder model).

Case 1-2 (offline engineering and/or fine-tuning): Depending on the value of $N_{total,ref}$ and/or the type and/or characteristics of the corresponding specified reference models, specified reference models may not be sufficient to capture the cell specific environment, e.g., for a cell-specific field data set distribution. Thus, upon configuration of one or more CSI report configurations, UE may perform one or more model modifications such as fine-tuning operations on an available initialized encoder it may have trained to match the decoder, for example, an encoder model it may use for Case 1-1. Depending on the implementation details, this modification time to prepare the encoder for actual use may involve a certain amount of time starting from the CSI report configuration and/or activation.

A UE may declare a capability in the form of an amount of time (e.g., a minimum required time gap) $T_{finetune}$ for fine-tuning (e.g., online training) in terms of symbols, slots, subframes, and/or the like. In some embodiments, after a time duration $T_{finetune}$ from the configuration or activation of the CSI report, the CSI report configuration may be assumed to be effectively active, and the UE reports the corresponding CSI feedback based on the configuration and by applying its cell-specific fine-tuned encoder model. The UE may perform a fine-tuning operation on a model, for example, using a data set. In some embodiments, a gNB may configure the UE with a data set index which the UE may use to fetch the data set, for example, from a data set server. Additionally, or alternatively, the data set may also be transferred to the UE with signaling (e.g., 3GPP signaling) over the air. Regardless of the method by which the UE obtains the data set, the data set may be explicitly or implicitly linked to the reference decoder model.

In some embodiments, a UE may declare capabilities to support schemes such as Case 1-1 and/or Case 1-2, for example, using a cell-independent capability signaling scheme.

In some embodiments, a data set for modifying (e.g., fine-tuning) a model in the cell for each reference model, may be provided by a UE vendor. For example, for each NR cell global identifier (NCGI), the UE vendor may collect a data set for fine-tuning one or more reference models and store the data sets on a server accessible to the UE.

Case 2: $N$ reference encoders are specified in a specification.

In such embodiments, a UE may declare a capability to support one or more reference encoder models specified in the specification, and a gNB at a cell to which a UE may connect may configure the UE with one or multiple reference encoder models among those supported by the UE. The configuration may be performed, for example, in the form of one or more CSI report configurations. For example, a CSI report configuration configured for an AI/ML CSI compression report may include an IE indicating the index of the reference encoder model (e.g., reference encoder model ID).

Case 2-1 (direct encoder use): A UE may use an encoder corresponding to a reference encoder configured by a gNB. The UE may use the specified reference encoder model or a modified (e.g., an offline-configured) version of the specified reference encoder model. Regardless of the exact form, the UE may directly use the encoder once the corresponding CSI report is configured. In such a case, in some embodiments, a UE may use the specified reference encoder model, or a modified version of it, without time constraints (e.g., without a specific timeline being established for the UE to use the encoder model).

Case 2-2 (offline engineering/fine-tuning): In a manner similar to Case 1-2, a UE may use a processing time $T_{finetune}$ to fine tune the reference encoder model, e.g., to either convert it to its own supported structure (e.g., backbone) or to fine tune the reference encoder model to match a field data set. In some embodiments, $T_{finetune}$ may be established by a UE declaration of a capability in the form of an amount of time (e.g., a minimum required time gap) for a fine-tuning operation (e.g., online training) $T_{finetune}$ from the activation of a CSI report configuration to report the CSI report. Additionally, or alternatively, in a manner similar to Case 2-1, a data set may be shared with the UE to perform fine-tuning or offline engineering. Regardless of the method by which the UE obtains the data set, the data set may be explicitly or implicitly linked to the reference encoder model.

In some embodiments, a UE may declare capabilities to support schemes such as Case 2-1 and/or Case 2-2, for example, using a cell-independent capability signaling scheme.

Case 3: $N$ reference encoder and decoder pairs (e.g. auto-encoder pairs) are specified in a specification. In such embodiments, because an applicable model on the UE side may be a specified encoder model, Case 3 may be implemented in a manner similar to Case 1-1 and/or Case 1-2. In some embodiments, a UE may declare capabilities to support a scheme such as Case 3 for example, using a cell-independent capability signaling scheme.

Data Transfer for Model Training

In some embodiments, data transfer logic 3171C, 3172C, 3271C, and/or 3272C, and/or other portions of training collaboration logic 3171, 3172, 3271, and/or 3272 (which may be referred to individually and/or collectively as the data transfer logic) may implement techniques for transferring data (e.g., training data sets), models (e.g., reference models), and/or the like. In some embodiments, information related to data set transfer between wireless apparatus (e.g., from a gNB to a UE may include data type and/or format, mapping to time, frequency, and/or space resources, and/or data set IDs. In such embodiments, information may be exchanged between wireless apparatus in the form of data transfer information 3173C and/or 3273C illustrated in Fig. 31 and/or Fig. 32, respectively.

Some embodiments may implement a data transfer scheme that may be used, for example, to implement schemes such as option 2, option 4, and/or option 5 in which a training data set may be transferred from a base station to a UE. In such an embodiment, a data set and/or a specification may specify one or more of the following types of information for the data set: (a) a type of each data point (e.g., a precoding matrix, a channel matrix, and/or the like, (b) information describing how a data point may be mapped to one or more subbands when using SF domain compression for CSI, (c) information describing how a data point may be mapped to one or more subbands and time slots when using TSF domain compression for CSI, and/or (d) a data set ID.

In some embodiments, one or more data points of a data set may be mapped to and/or from inputs and/or outputs of models using any mapping schemes disclosed herein including those described above in the context of Fig. 33. For example, in some example embodiments, a data point may have the following form: the first $N_{sb} * N_{tx} * R$ elements may correspond to the first slot; and the elements may be stacked in ascending order of slot indices; for each slot index, the first $N_{tx} * R$ elements may correspond to the first sub-bands, and the elements may be stacked in ascending order of sub-band indices; and for each slot index and sub-band index, the first $N_{tx}$ elements may correspond to the first layer, and the elements may be stacked in ascending order of the layer number.

Physical Channel Transmission for Data Transfer

For purposes of illustration, an embodiment of a physical channel transmission scheme may be described in the context of some specific implementation details. However, the data transmission schemes for training data sets disclosed herein are not limited to any specific implementation details.

In one example embodiment, a physical channel transmission scheme may exchange a data set over-the-air, for example, using 3GPP signaling. To facilitate such a transmission scheme between a UE and gNB (or other wireless apparatus on UE and network sides) a specification may specify one or more of the following aspects.

A data set may include $N$ data points.

Information about the type of data and/or data points may be provided to the UE, for example, in a form (target CSI #$i$, CSI feedback #$i$) for $i$ = 1, ..., N.

A mapping between target CSI (e.g., input to an encoder model) or reconstructed CSI (e.g., output of a decoder mode) for each data point in a data set and a subband/slot grid may be provided to the UE. The mapping can be implemented, for example, in a manner similar to any of the methods described above with respect to option 1, option 3, and/or option 5, and/or with respect to Fig. 33.

A specification may specify how some or all of a data set may be reshaped to a vector, for example, by appending different data points (e.g., to each other). For each data point, the first element may be vectorized and appended to the second element. To vectorize the target CSI and/or reconstructed CSI, one or more matrices for each subband and slot may be separately vectorized and concatenated (e.g., to each other) based on an order in a frequency/time domain, for example, as described above with respect to model inputs and/or outputs.

Because a data set may be transmitted in a physical channel (e.g., PDSCH), a specification may also specify a quantization scheme. For example, a quantization scheme may specify that each element of a vectorized data set may be quantized to m bits. Additionally, or alternatively, a quantization scheme may specify a mapping between each m bit and a corresponding real-valued element.

A binary data set may be transmitted as a payload in a channel with physical layer processing such as channel coding, modulation, and/or the like. A receiving node (e.g., a UE) may decode the channel, and from the binary payload, may reconstruct the data set using the inverse of the encoding procedure described above.

Mismatch between PMI and CQI

As mentioned above, in some embodiments according to the disclosure, a first wireless apparatus (e.g., a UE) may determine precoding information (e.g., a precoding matrix) used by a second wireless apparatus (e.g., a gNB) to enable the first wireless apparatus to determine channel quality information (e.g., CQI) based on the precoding information. Depending on the implementation details, this may reduce or eliminate mismatch between precoding information and channel quality information reported by the first wireless apparatus to the second wireless apparatus. This may be useful because, in some embodiments, the modulation order and code rate should match the equivalent MIMO channel and different precoders may result in different equivalent MIMO channels. The same principle may also be applied in an AI/ML CSI report framework. Depending on the implementation details, if UE reports a CQI and a precoder matrix, the CQI and precoder matrix should match.

As also mentioned above, in some embodiments, a UE may not have access to a trained decoder used by a gNB. For example, referring to Fig. 7, the encoder 703 and decoder 704 may be trained by the gNB which may transfer only the encoder 703 to the UE 701. In such a situation, the UE may not know the precoder assumptions at the gNB because it may not have access to a decoder used by the gNB to perform inference. Thus, in some embodiments with AI/ML CSI reporting according to the disclosure, if UE is configured to report CQI, the decoder may be shared with the UE. Depending on the implementation details, however, this solution may involve overhead and/or proprietary concerns associated with transferring a decoder model to a UE.

In a CQI reporting scheme according to the disclosure, a specification may specify a reference decoder (e.g., in an implementation of option 1). A UE may calculate CQI assuming the specified reference decoder is used at gNB. For example, the UE may assume the reported precoder corresponding to the PMI is obtained by the reference decoder.

In some embodiments, a specification may specify that a UE may calculate CSI parameters (if reported) assuming the following dependencies between CSI parameters (if reported): a layer indicator (LI) may be calculated conditioned on the reported CQI, PMI, RI, and CRI; a CQI may be calculated conditioned on the reported PMI, RI, and CRI; PMI may be calculated conditioned on the reported RI and CRI; and/or RI may be calculated conditioned on the reported CRI.

In embodiments that may implement option 2, a PMI mapping may be specified (e.g., standardized) as a mapping between PMI and the precoder matrix which may result in little or no mismatch.

In embodiments that may implement option 3 or option 5, if the reference model or models shared with the UE include a decoder model, the UE may assume that the decoder model may be used at the gNB and report CQI based on the precoder obtained by the model. If the reference model or models shared with the UE do not include a decoder, the embodiment may implement one or both of the following techniques.

(1) The UE may report the CQI assuming a PMI it would report using a non-AI/ML PMI codebook for the purpose of CQI reporting.

(2) The UE may train a proxy decoder model matching the shared encoder model. The training may be based on a data set shared with the UE including target CSI, PMI, and/or the like. In the inference phase, for a reported PMI, the UE may assume the reported precoder is obtained from the proxy decoder based on the reported PMI and calculate the CQI according to the precoder.

In embodiments that may implement option 4, if the exchanged data set includes data points such as (target CSI, PMI), and if the target CSI is precoder, the UE may report CQI assuming the precoder matrix it inputs to the encoder, e.g., a target precoder. The UE may also train an encoder based on the exchanged data and then train a proxy decoder to reconstruct the target CSI. This trained proxy decoder may then be used to report CQI. For example, the UE may assume the reported precoder is obtained by the proxy decoder when the input is the reported PMI.

In embodiments that may implement option 4, if an exchanged dataset includes data points such as (PMI, reconstructed CSI), the UE may train a decoder model with the dataset and then use this trained decoder model to report CQI. For example, the UE may assume the reported precoder for the reported PMI is obtained as the output of this decoder when its input is the reported PMI. If the dataset enumerates some or all possibilities of PMI in a binary format, there may be no need to train a decoder model for CQI purposes, and the UE may directly determine the reported precoder based on the dataset for a reported PMI (e.g., a binary stream).

Vendor-Specific Training

As mentioned above, a base station may provide the UE with a base station vendor ID which may identify a vendor (e.g., manufacturer, distributor, certifier, and/or the like) of the base station. In some embodiments, a pool of base station vendors may each be assigned a unique ID (e.g., offline and/or online). A vendor ID may be indicated to a UE, for example, in system information, a CSI-RS and/or report configuration, via a dedicated RRC parameter, and/or the like.

When a UE connects to a network, it may not have information about which vendor's network it is connected to. Since different vendors may employ different training techniques or network architectures for model design, the availability of this knowledge may impact the training model at the UE's side. In some alternative embodiment according to the disclosure, a network indication, or an AI/ML index may be provided to the UE, for example, using system information such as an SIB. The UE may then use this information to adapt its training to the specific network vendor's design.

Mapping Data Points to Subbands

In embodiments that use SF domain CSI compression, an input to the encoder and an output of the decoder may be implemented as target CSI and CSI across one or more subbands. To use a collected dataset for LCM purposes (e.g., training), the mapping between the CSI and subband may be provided with the data set. In some embodiments, a mapping between target CSI in a single data point (target CSI, CSI feedback) and subbands may be implemented as described above with respect to options 1-5 and/or Fig. 31, Fig. 32, and/or Fig. 33. For example, target CSI may be formed by concatenating target CSIs of subbands in ascending order of a subband index.

Mapping Data Points to Subbands and Slots

In embodiments that use TSF domain compression, an input to the encoder and an output of the decoder may be implemented as target CSI and CSI across one or more subbands and slots to use the collected dataset for LCM purposes (e.g., training), a mapping between the CSI and subband and slot may be provided with the data set. In some embodiments, a mapping between target CSI in a single data point (target CSI, CSI feedback) and subbands and/or slots may be implemented as described above with respect to options 1-5 and/or Fig. 31, Fig. 32, and/or Fig. 33. For example, target CSI may be formed by concatenating target CSIs of subbands and slots in ascending order of subband index first for a given slot and then in ascending order of slot index.

CSI Processing Timeline

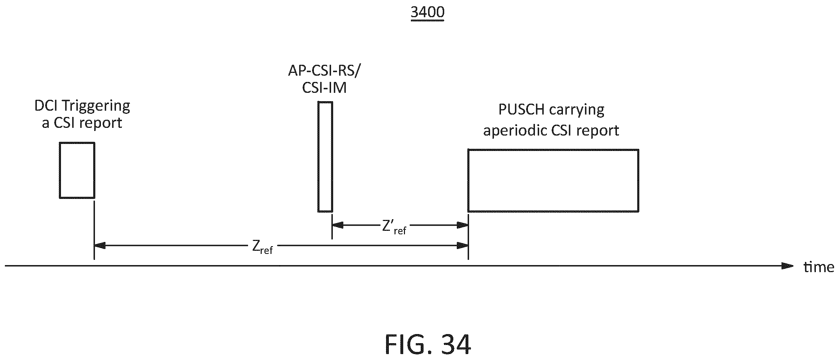

Fig. 34 illustrates an embodiment of channel information processing time constraints for a communication system according to the disclosure. In some embodiments, for an aperiodic CSI report, one or more of the following constraints may be specified to enable a UE to provide a valid report.

A time $Z_{ref}$ illustrated in Fig. 34 may be defined as a minimum gap between the last symbol of a physical downlink control channel (PDCCH) triggering an aperiodic (AP) CSI report and the first symbol of a physical uplink shared channel (PUSCH) carrying the report. This constraint may ensure enough time for PDCCH detection and/or decoding for receiving the CSI reporting triggering downlink control information (DCI), channel estimation, and CSI calculation.

A time $Z'_{ref}$ illustrated in Fig. 34 may be defined as a minimum gap between the last symbol carrying aperiodic-CSI-RS (AP-CSI-RS) for channel measurement (CM), aperiodic channel state information -interference measurement (AP-CSI-IM), AP-CSI-RS for interference measurement (IM) associated with the triggered report and the first symbol of a PUSCH carrying the report. This constraint may be used, for example, when an aperiodic CSI report is associated with AP-CSI-RS/AP-CSI-IM. When an aperiodic CSI report is associated with persistent and/or semi-persistent (P/SP) CSI-RS or CSI-IM, the timeline may be based on a reference resource.

Some specifications (e.g., 3GPP) may define $Z_{ref}$ and $Z'_{ref}$ (or $Z_{ref}(n)$ and $Z'_{ref}(n)$ for the n-th CSI report) using a symbol location rather than a gap. However, depending on the implementation details, defining a time based on a symbol position may be equivalent to a time gap in terms of behavior. For example, a symbol location as defined in a specification may be determined by applying $Z_{ref}$ and $Z'_{ref}$ as described above.

In some embodiments, if a timeline for $Z_{ref}$ is not satisfied, the UE may ignore the scheduling DCI, for example, if no HARQ-ACK or transport block is multiplexed on the corresponding PUSCH.

In some embodiments, if a timeline for $Z'_{ref}$ is not satisfied, the UE may ignore the scheduling DCI, for example, if the number of triggered reports is one, and no HARQ-ACK or transport block is multiplexed on the corresponding PUSCH. Otherwise, the UE may not be required to update the CSI for the n-th triggered CSI report that violates the timeline $Z'_{ref}$.

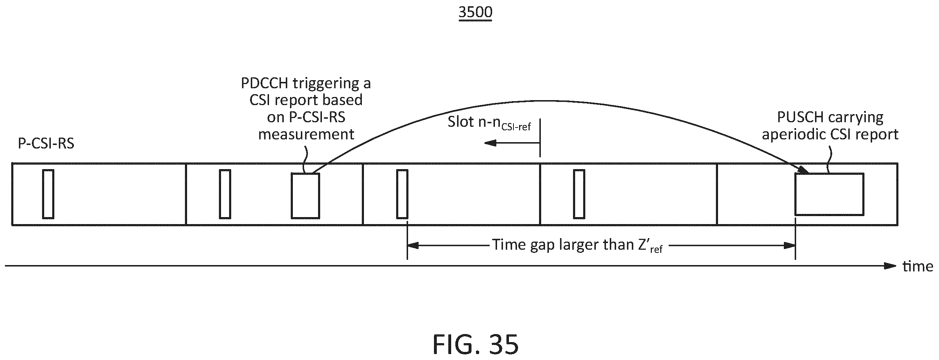

Fig. 35 illustrates an embodiment of a timeline for an aperiodic CSI report based on a periodic reference signal according to the disclosure. The reference signal illustrated in Fig. 35 may be implemented, for example, with periodic CSI-RS.

When a P/SP CSI-RS and/or CSI-IM is used for channel and/or interference measurement, a UE may not be expected to measure channel and/or interference on the CSI-RS and/or CSI-IM whose last orthogonal frequency domain multiplexing (OFDM) symbol is received 0 to $Z'$ symbols before the transmission time of the first OFDM symbol of AP CSI reporting, where $Z'$ may be defined as indicated in Eq. 17.

Additionally, or alternatively, the CSI-RS may occur on or before the CSI reference resource determined by $n_{CSI\_ref}$ which may be the smallest value greater than or equal to $\left\lceil Z'/N_{symb}^{slot} \right\rceil$, such that slot $n - n_{CSI\_ref}$ corresponds to a valid downlink slot. An example embodiment of periodic CSI-RS used for an aperiodic CSI report is illustrated in Fig. 35.

For a P/SP CSI report based on a P/SP CSI-RS, $n_{CSI\_ref}$ may be equal to one or more predefined values provided in Clause 5.2.2.5 of TS 38.214 Rel-15 based a DL numerology and the number of RS configured for channel measurements. For example: N=4 for 15kHz, N=8 for 30kHz, N=16 for 60kHz, N=32 for 120kHz for a CSI report without CRI; and N=5 for 15kHz, N=10 for 30kHz, N=20 for 60kHz, N=40 for 120kHz for a CSI report with CRI.

A slot in a serving cell may be considered to be a valid downlink slot if: (1) it comprises at least one higher layer configured downlink or flexible symbol; and (2) it does not fall within a configured measurement gap for the corresponding UE.

If there is no valid downlink slot for the CSI reference resource corresponding to a CSI Report Setting in a serving cell, CSI reporting may be omitted for the serving cell in uplink slot *n'*.

When a DCI triggers multiple aperiodic CSI reports, the value of *Z* and *Z'* may be as follows:

$$Z = \max_{m=0,...,M-1}(Z(m)) \qquad (Eq.\ 16)$$

and

$$Z' = \max_{m=0,...,M-1}(Z'(m)), \qquad (Eq.\ 17)$$

where *M* may be the number of updated CSI report determined based on the available CPUs, and (*Z(m)*, *Z'(m)*) corresponds to the *m*-th updated CSI report. Multiple tables are provided in Clause 5.4 of TS 38.214 Rel-15 to determine Z and Z' based on the reported quantities.

CSI Processing Criteria

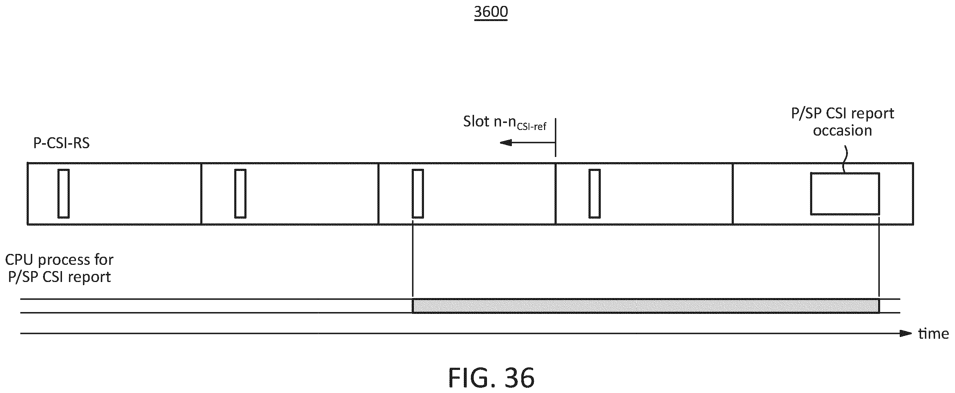

Fig. 36 illustrates an embodiment of a timeline of CPU occupancy for a P/SP CSI report based on a periodic reference signal according to the disclosure. The reference signal illustrated in Fig. 36 may be implemented, for example, with periodic CSI-RS.

In some embodiments, a UE may indicate to a base station the total number of available CPUs ($N_{CPU}$) within a component carrier (CC) and/or across all CCs via capability signaling, for example: *simultaneousCSI-ReportsPerCC* and/or *simultaneousCSI-ReportsAllCC.* For a CSI report with *CSI-ReportConfig* with a higher layer parameter *reportQuantity* not set to "none", one or more CPUs may be occupied for a number of OFDM symbols as follows:

A periodic or semi-persistent CSI report (excluding an initial semi-persistent CSI report on PUSCH after the PDCCH triggering the report) may occupy one or more CPUs from the first symbol of the earliest one of each CSI-RS/CSI-IM/SSB resource for channel or interference measurement, respective latest CSI-RS/CSI-IM/SSB occasion no later than the corresponding CSI reference resource, until the last symbol of the PUSCH/PUCCH carrying the report as illustrated in Fig. 36.

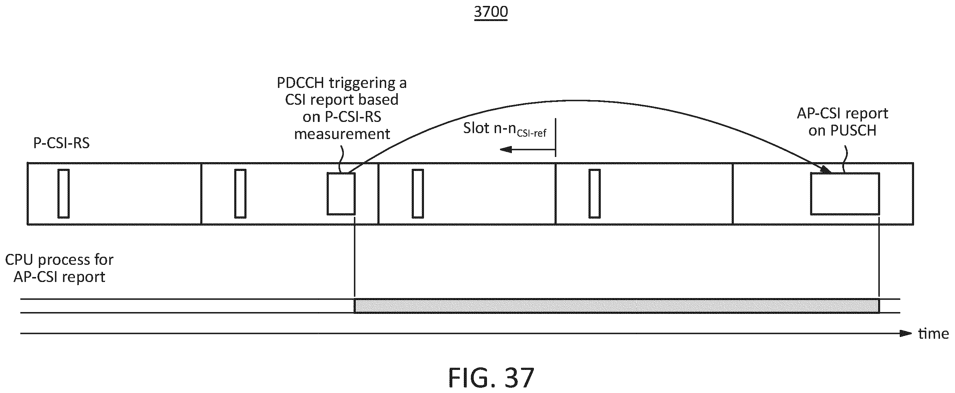

Fig. 37 illustrates an embodiment of a timeline of CPU occupancy for an aperiodic CSI report based on a periodic reference signal according to the disclosure. The reference signal illustrated in Fig. 37 may be implemented, for example, with periodic CSI-RS.

An aperiodic CSI report may occupy one or more CPUs from the first symbol after the PDCCH triggering the CSI report until the last symbol of the PUSCH carrying the report as illustrated in Fig. 37.

An initial SP CSI report may be treated in a manner similar to aperiodic CSI report illustrated in in Fig. 37, but one or more subsequent reports may be treated as illustrated in Fig. 36.

In some embodiments that may implement a P3 procedure for beam management (e.g., receive beam refinement), no report may be used. Therefore, CPU occupancy is determined as follows.

For a CSI report with *CSI-ReportConfig* with a higher layer parameter *reportQuantity* set to "none" and *CSI-RS-ResourceSet* with a higher layer parameter *trs-Info* not configured, the CPU occupancy for a number of OFDM symbols may be determined as follows.

A semi-persistent CSI report (excluding an initial semi-persistent CSI report on PUSCH after the PDCCH triggering the report) may occupy one or more CPUs from the first symbol of the earliest one of each transmission occasion of periodic or semi-persistent CSI-RS/SSB resource for channel measurement for L1-RSRP computation, until $Z_3'$ symbols after the last symbol of the latest one of the CSI-RS/SSB resource for channel measurement for L1-RSRP computation in each transmission occasion.

An aperiodic CSI report may occupy one or more CPUs from the first symbol after the PDCCH triggering the CSI report until the last symbol between $Z_3$ symbols after the first symbol after the PDCCH triggering the CSI report and $Z_3'$ symbols after the last symbol of the latest one of each CSI-RS/SSB resource for channel measurement for L1-RSRP computation. For example, the CPU may be occupied from the first symbol after PDCCH to max ($Z_3$, $Z_3'$).

If a UE has M CPUs available and is triggered with N>M reports, UE may update the M reports with highest priority according to one or more priority rules as described below.

If UE supports X simultaneous CSI calculations, a UE may not be expected to be configured with an aperiodic CSI trigger state containing more than X CSI reports settings across all CCs.

Processing of a CSI report may occupy a number of CPUs for a number of symbols as follows:

(1) $O_{CPU} = 0$ for a CSI report with CSI-ReportConfig with a higher layer parameter *reportQuantity* set to 'none' and *CSI-RS-ResourceSet* with a higher layer parameter *trs-Info* configured to reflect that a tracking reference signal (TRS) does not occupy a CPU.

(2) $O_{CPU}$ = 1 for a CSI report with *CSI-ReportConfig* with a higher layer parameter *reportQuantity* set to 'cri-RSRP', 'ssb-Index-RSRP' or 'none' (and *CSI-RS-ResourceSet* with a higher layer parameter *trs-Info* not configured): for "none", to reflect that P3 in a beam management procedure occupies one CPU process. Also, regardless the number of CSI-RS within the resource set used for beam management, only one CPU may be occupied. This may differ when other CSI reports are configured. In some embodiments, and depending on the implementation details, a CSI report based on Ks CSI-RS resources may be roughly equivalent to computing Ks CSI reports in terms of CSI computation time. For an L1-RSRP report based on Ks CSI-RS/SSB resources, however, the UE may compute the receive power on each CSI-RS or SSB. Hence, it may not necessarily consume Ks CPUs.

(3) For a CSI report with *CSI-ReportConfig* with a higher layer parameter *reportQuantity* set to 'cri-RI-PMI-CQI', 'cri-RI-i1', 'cri-RI-i1-CQI', 'cri-RI-CQI', or 'cri-RI-LI-PMI-CQI': (A) If a CSI report is aperiodically triggered without transmitting a PUSCH with either transport block or HARQ-ACK or both when $L = 0$ CPUs are occupied, where the CSI corresponds to a single CSI with wideband frequency-granularity and to at most 4 CSI-RS ports in a single resource without a CRI report and where *codebookType* is set to 'type1-SinglePanel' or where *reportQuantity* is set to 'cri-RI-CQI', $O_{CPU} = N_{CPU}$, for the low latency CSI report, and no UL-SCH TB, all the CPU may be occupied to enable the UE to prepare the report quickly within a short timeline. (B) Otherwise, $O_{CPU} = K_s$, where $K_s$ may be the number of CSI-RS resources in the CSI-RS resource set for channel measurement. $K_s$ CPUs may be occupied in other cases because, for example, each CSI-RS may be equivalent to compute CSI reports.

Channel Information Compression with Predictive Information

Some wireless apparatus such as UEs may compress channel information (e.g., CSI compression in a TSF domain) in a manner that may include predictive information. For example, measured CSI at time instances, $t_1, \ldots, t_{N_M}$ corresponding to $N_M$ slots (e.g., $N_M$ slots ordered in ascending order of slot index) may be applied as input to an encoder model, and a corresponding decoder model may output the reconstructed CSI at the measured time instances $t_1, \ldots, t_{N_M}$ as well as some $N_P$ predicted CSI at time instances $t_{N_M+1}, \ldots, t_{N_M+N_P}$. Thus, the total number of time instances in the output CSI from the decoder model may be $N_T = N_M + N_P$. Compression schemes with predictive information as set forth above may be implemented with single peak cancelation (SPC), joint peak cancelation (JPC) and/or the like.

For purposes of illustration, some example embodiments of inference operations, training data collection, and/or CPU frameworks are described below in the context of compression schemes with predictive information as set forth above. However, the principles described herein relating to inference operations, training data collection, and/or CPU frameworks are not limited to these or any other contexts.

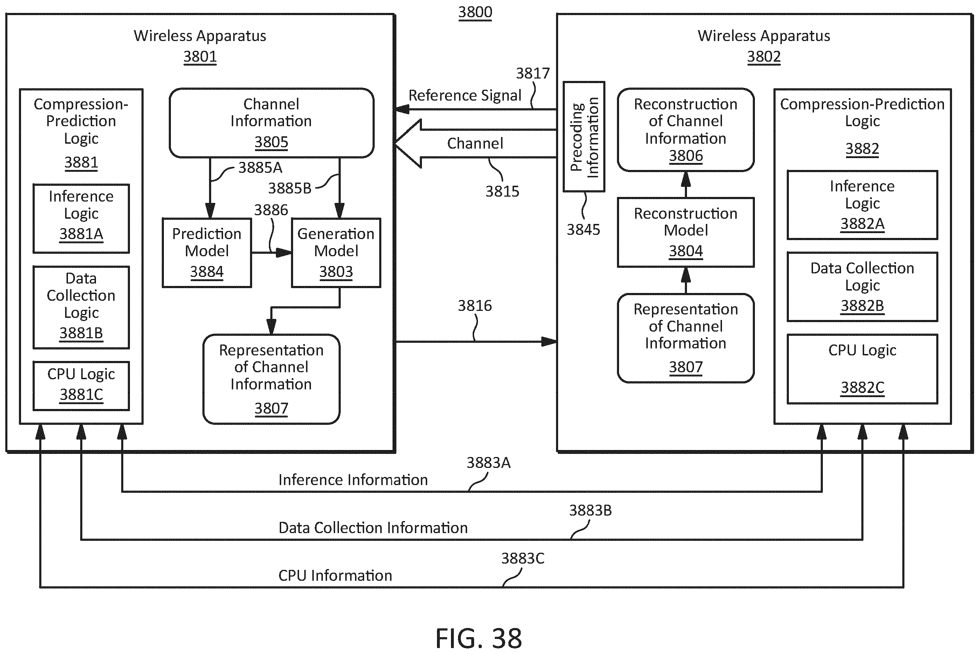

Fig. 38 illustrates an embodiment of a communication system having functionality relating to channel information compression with predictive information according to the disclosure. The system 3100 may be used, for example, to implement any aspects of the disclosure relating to channel information compression with predictive information including inference with prediction models, training data collection, CPU frameworks, and/or the like.

The system 3800 may include one or more elements (e.g., components, operations, and/or the like) that may be similar to those in the embodiments illustrated in Fig. 4, Fig. 7, and/or other drawings in which similar elements may be indicated by reference numbers ending in, and/or containing, the same digits, letters, and/or the like.

In the system 3800 illustrated in Fig. 38, a first wireless apparatus (e.g., a UE) 3801 may receive a reference signal 3817 from a second wireless apparatus (e.g., a base station) 3802 through a channel 3815, for example, to enable the first wireless apparatus 3801 to determine channel conditions of the channel 3815. The second wireless apparatus 3802 may apply precoding information (e.g., a precoding matrix) 3845 to some transmissions such as PDCCH, PDSCH, and/or the like, as well as some reference signals such as CSI-RS.

The first wireless apparatus 3801 may perform channel measurements based on the reference signal 3817 and the channel conditions to generate channel information (e.g., a channel estimation, a channel matrix, precoding information, and/or the like) 3805 that it may send to the second wireless apparatus 3802, for example, in the form of a representation 3807 that it may generate using a generation model 3803. The first wireless apparatus 3801 may send the representation 3807 to the second wireless apparatus 3802, for example, using another channel (e.g., an uplink channel), signal, and/or the like 3816. The second wireless apparatus 3802 may include a reconstruction model 3804 that it may use to generate a reconstruction 3806 of the channel information 3805.

In some embodiments, the generation model 3803 and the reconstruction model 3804 may be trained (e.g., in an auto-encoder configuration) to jointly compress and/or decompress the channel information 3805 using any training scheme, including one or more joint training and/or deployment frameworks disclosed herein.

The first wireless apparatus 3801 and the second wireless apparatus 3802 may include compression-prediction logic 3881 and 3882, respectively, which, individually and/or collectively, may implement some or all of the functionality relating to channel information compression with predictive information disclosed herein. Compression-prediction logic 3881 may include various combinations of all, some, or none of inference logic 3881A, data collection logic 3881B, and/or CPU logic 3881C. Similarly, compression-prediction logic 3882 may include various combinations of all, some, or none of compression-prediction logic 3882A, data collection logic 3882B, and/or CPU logic 3882C.

Inference logic 3881A and 3882A may implement, individually and/or collectively, functionality relating to performing inference operations for channel information (e.g., CSI) compression using prediction models and/or generation and reconstruction models (e.g., encoder and decoder models) in which channel information feedback may include predictive information. To implement such functionality, inference logic 3881A and 3882A may exchange inference information 3883A such as report configurations, identifiers, time domain properties, observation and/or prediction windows, channel resources, subband configurations, report quantities, report links, indications, and/or the like.

Data collection logic 3881B and 3882B may implement, individually and/or collectively, functionality relating to training, and/or collecting training data for, prediction models and/or generation and reconstruction models (e.g., encoder and decoder models) in channel information (e.g., CSI) compression schemes in which channel information feedback may include predictive information. To implement such functionality, data collection logic 3881B and 3882B may exchange data collection information 3883B such as report configurations, training data, time domain properties, observation and/or prediction windows, information on measurement slots (e.g., slots during which UE 3901 may base CSI feedback on actual measurements) and/or prediction slots (e.g., slots during which UE 3901 may base CSI feedback on predicted CSI), loss functions, and/or the like.

CPU logic 3881C and 3882C may implement, individually and/or collectively, functionality relating to CSI Processing Unit (CPU) aspects of channel information compression with predictive information. To implement such functionality, CPU logic 3881C and 3882C may exchange CPU information 3883C such as report configurations, numbers of CPUs supported, and/or the like.

Although some functionality disclosed herein may be characterized as, and/or implemented with, inference logic 3881A and 3882A, data collection logic 3881B and 3882B, and/or CPU logic 3881C and 3881C, there may be overlap and/or interdependency between functionality implemented by these logic elements. Some functionality may be spread between different logic elements, consolidated within fewer logic elements, and/or performed at least partially by other portions of the compression-prediction logic 3881 and 3882.

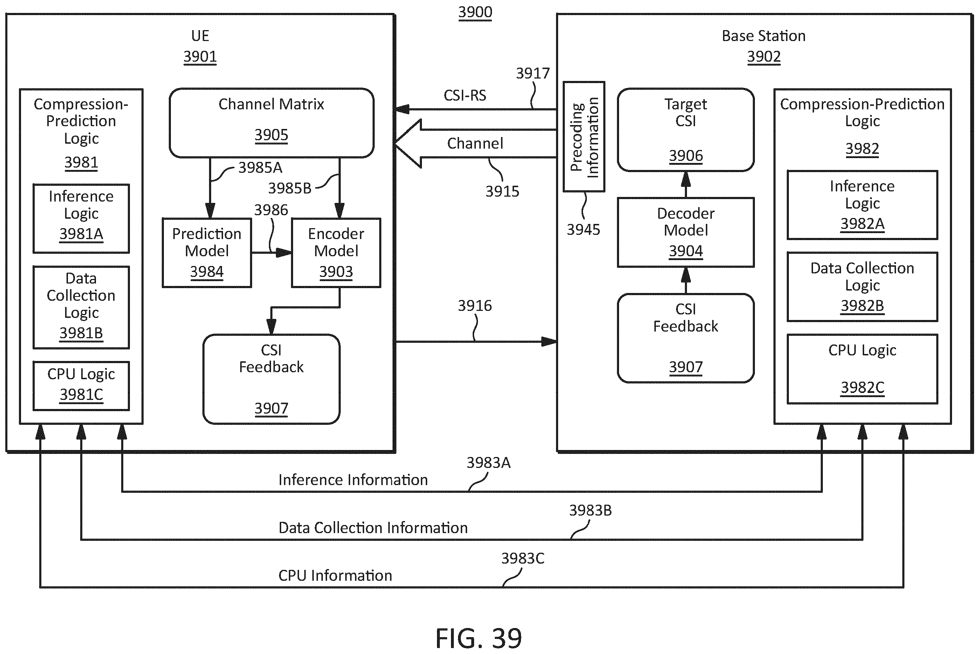

Fig. 39 illustrates an example embodiment of a communication system having functionality relating to channel information compression with predictive information according to the disclosure. The system 3900 illustrated in Fig. 39 may include one or more elements (e.g., components, operations, and/or the like) that may be similar to those in the embodiments illustrated in Fig. 4, Fig. 7, Fig. 38, and/or other drawings in which similar elements may be indicated by reference numbers ending in, and/or containing, the same digits, letters, and/or the like. The system 3900 illustrated in Fig. 39 may be used, for example, to implement schemes for channel information compression with predictive information as described throughout the disclosure.

For purposes of illustrating some example embodiments of schemes for channel information compression with predictive information, the system 3900 illustrated in Fig. 39 is shown with some example implementation details. Specifically, the first communication apparatus may be implemented with a UE 3901, the second communication apparatus may be implemented with a base station 3902, the reference signal may be implemented with a CSI-RS signal 3917, the channel information may be implemented with a channel matrix 3905, the generation model may be implemented with an encoder model 3903 (which may also be referred to as an encoder), the representation of channel information may be implemented with CSI feedback 3907, the reconstruction model may be implemented with a decoder model 3904 (which may also be referred to as a decoder), and the reconstruction of the channel information may be implemented with target CSI 3906 (e.g., a precoder matrix, one or more coefficients that may be used to determine a precoder matrix by a combination of basis vectors, and/or the like). However, the principles of the system 3900 illustrated in Fig. 39 are not limited to these or any other implementation details.

The UE 3901 may include UE-side compression-prediction logic 3981 which may include inference logic 3981A, data collection logic 3981B, and/or CPU logic 3981C which may operate in a manner similar to compression-prediction logic 3881 and/or corresponding logic therein illustrated in Fig. 38. The base station 3902 may include base station-side compression-prediction logic 3982 which may include inference logic 3982A, data collection logic 3982B, and/or CPU logic 3982C which may operate in a manner similar to compression-prediction logic 3882 and/or corresponding logic therein illustrated in Fig. 38.

Inference with Prediction Model

For purposes of illustration, some embodiments of inference operations may be described in the context of the wireless system 3900 illustrated in Fig. 39 including UE 3901, base station (e.g., a gNB) 3902, and/or inference logic 3981A and 3982A implementing an SPC scheme. The principles disclosed herein, however, are not limited to the implementation details disclosed in Fig. 39 and may be applied in any other context including, for example, the system 3800 illustrated in Fig. 38 including inference logic 3881A and 3882A, and/or JPC schemes.

Referring again to Fig. 39, in some embodiments, a CSI prediction scheme may operate in a manner that may not be readily visible to one or more apparatus. For example, base station 3902 may operate on an assumption that UE 3901 may first generate some predicted CSI (e.g., 3986) and then apply the predicted CSI to encoder 3903. Depending on the implementation details, such an embodiment may be useful, for example, for a base station to perform LCM tasks such as model activation and/or deactivation, performance monitoring, data collection, and/or the like.

In a first type of technique for performing inference (e.g., in the absence of a CSI compression task or functionality), base station 3902 may activate a CSI prediction configuration, for example, using a CSI-ReportConfig that may include one or more time domain properties of an observation window, a prediction window, one or more PUCCH resources, one or more subband configurations, and/or the like.

In a second type of technique for performing inference, (e.g., in the absence of a CSI prediction task or functionality), to perform CSI compression, base station 3902 may configure a CSI report configuration (which may also be referred to and/or implemented with a CSI-ReportConfig) that may include one or more time domain properties for the CSI compression and possibly one or more additional parameters such as one or more PUCCH resources, information for one or more subbands, and/or the like. The CSI-ReportConfig may also include one or more model IDs and/or pairing IDs, for example, for prediction model 3984, encoder model 3903, decoder model 3904, and/or the like. (One or more model IDs and/or pairing IDs may be in contrast to the role of a PMI codebook type in systems with non-AI/ML CSI reporting.)

In some implementations of a SPC scheme, the output of a CSI prediction model 3984 is not reported to a base station 3902 directly (e.g., as a CSI report). Therefore, it may be beneficial to indicate to UE 3901 that output of CSI prediction model 3984 is not reported to base station 3902. Some methods for performing such an indication are as follows.

Method (a) (Report quantity) The report quantity (e.g., ReportQuantity) of the CSI-ReportConfig corresponding to the CSI prediction may be set to "None". Additionally, or alternatively (e.g., equivalently), one or more other information elements (IEs) may be included to indicate to UE 3901 that the CSI-ReportConfig corresponding to the CSI prediction is not a standalone CSI-ReportConfig and the prediction results may not be reported to base station 3902.

Method (b) (Linked CSI-ReportConfig) A CSI prediction report configuration CSI-ReportConfig with an ID parameter reportConfigId #1 may be linked to another CSI compression report configuration CSI-ReportConfig with an ID parameter reportConfigId #2. The linkage may be indicated, for example, by an additional IE in the one or both of the report configurations. For example, in the first report configuration an IE "linkedreportConfigID" may be included and may take the value of reportConfigID #2. This may indicate that the two CSI-ReportConfigs are linked, so UE 3901 will report the output of the CSI prediction model 3984 via the first report configuration, but only use it for the CSI compression task.

In a third type of technique for performing inference (e.g., with an SPC scheme), base station 3902 may configure only a CSI compression report configuration (e.g., in a manner similar to the second technique described above). If base station 3902 needs the output of the CSI prediction model 3984 to be reported in addition of the output of the encoder model 3903, base station 3902 may use an IE in a report configuration to indicate to UE 3901 to report the output of the CSI prediction model 3984. Based on receiving the indication, UE 3901 may report the output of the prediction model 3984 as a CSI report, for example, by concatenating the output of the prediction model 3984 to CSI feedback 3907 from the CSI compression encoder model 3903 and reporting the combined information to base station 3902 as one CSI report. In some embodiments, an indication by base station 3902 may indicate a codebook (e.g., a Release-18 Doppler codebook) for UE 3901 to use to report the CSI prediction results from the prediction model 3984.

Training Data Collection

For purposes of illustration, some embodiments of training data collection operations may be described in the context of the wireless system 3900 illustrated in Fig. 39 including UE 3901, base station (e.g., a gNB) 3902, and/or data collection logic 3981B and 3982B implementing an SPC scheme. The principles disclosed herein, however, are not limited to the implementation details disclosed in Fig. 39 and may be applied in any other context including, for example, the system 3800 illustrated in Fig. 38 including data collection logic 3881B and 3882B, and/or JPC schemes.

For purposes of illustration, some embodiments UE-side data collection schemes are described below for use in training only a CSI prediction model, only a CSI compression (e.g., encoder) model, or both.

Training Data Collection for CSI Prediction Performance

Referring again to Fig. 39, in some embodiments, UE 3901 may collect training data for training CSI prediction model 3984 based on an observation window and/or prediction window as well as subband and/or spatial configurations. Depending on the implementation details, there may be little or no impact on the training of CSI prediction model 3984, for example, the interaction between CSI prediction model 3984 and CSI encoder model 3903 may not considered in this case. Therefore, existing methods for training data collection for stand-alone UE-side CSI prediction models may be used.

Training Data Collection for CSI Compression Performance

In some embodiments, CSI encoder model 3903 may be trained assuming CSI prediction model 3984 is pre-trained and used for inference with encoder model 3903. The following are some example modes for collecting training data and obtain corresponding labels.

Mode A: In this mode, training data may primarily or only include target CSI corresponding to the $N_M$ measurement slots in which target CSI is measured. Predicted CSI (e.g., output 3986 from model 3984) corresponding to $N_P$ prediction slots may be used for training such that the total number of labels $N_T = N_M + N_P$ labels for target CSI determined as the $N_M$ measured target CSI and $N_P$ predicted one target CSI. For example, encoder model 3903 may be trained to minimize a loss between $N_T$ reconstructed target CSI at the output of decoder model 3904 and the $N_T$ labels. When training model encoder model 3903, the inputs may be the $N_M$ measured target CSI 3985B and $N_P$ predicted CSI 3986 (e.g., output from model 3984). All, some, or none of the measured target CSI 3985A maybe applied as input to prediction model 3984. In some embodiments of this mode, training data may be collected via a data collection CSI-ReportConfig where the CSI-RSs may be configured and transmitted corresponding to $N_M$ measured time instances (e.g., one or more specific time domain properties of an observation window).

In some embodiments, and depending on the implementation details, this mode may be described and/or characterized as being used with a non-ideal CSI prediction model.

Mode B: In this mode, base station 3902 may transmit CSI-RSs in one or more prediction slots in addition to one or more measurement slots such that UE 3901 may measures the CSI in the one or more prediction slots in addition to one or more measurement slots (which may also be referred to as observation slots). Training data may primarily or only include target CSI in the $N_M$ measured slots. With $N_P$ prediction CSI in $N_P$ slots, the $N_T = N_M + N_P$ labels for the target CSIs may be determined as the $N_M + N_P$ measured CSI in the observation and prediction slots. The encoder model 3903 is trained to minimize a loss between the $N_T$ reconstructed target CSI at the output of the decoder and the $N_T$ labels. The $N_M + N_P$ measured target CSI may be used as input to train encoder model 3903. In this mode, data may be collected via a data collection CSI-ReportConfig where CSI-RSs may be configured and transmitted corresponding to $N_M + N_P$ measured time instances (e.g., one or more specific time domain properties of an observation window and/or a prediction window).

In some embodiments, and depending on the implementation details, this mode may be used in situations in which one or more predicted CSI at the output prediction model 3984 are not sufficiently accurate. In some embodiments, and depending on the implementation details, this mode may be described and/or characterized as being used with an ideal CSI prediction model.

Training Data Collection for CSI Prediction and Compression Performance

In some embodiments, collecting data to train CSI encoder model 3903 in a manner that may improve or optimize the joint performance of CS prediction model 3984 and encoder model 3903 together may be performed in a manner similar to Mode B described above, e.g., by transmitting one or more reference signals from base station 3902 and measuring, by the UE, the target CSI in $N_T$ slots. Additionally, or alternatively, however, one or more of the following modifications may be made to Mode B to improve or optimize the joint performance of CS prediction model 3984 and encoder model 3903.

(1) One or more of the $N_M$ measured target CSI and $N_P$ predicted target CSI generated by CSI prediction model 3984 may be used as inputs to encoder model 3903.

(2) While training encoder model 3903, CSI prediction model 3984 may be held constant (e.g., frozen). Depending on the implementation details, this may be similar to an embodiment with a pre-trained (e.g., optimized) prediction model 3984.

(3) When training the model 3903, CSI prediction model 3984 may be trained jointly with encoder model 3903. In one version of this technique, prediction model 3984 and encoder model 3903 may be trained using a loss (e.g., a loss function) determined between the output of decoder 3904 and the $N_T$ measured labels. In another version (3b) of this technique, prediction model 3984 and encoder model 3903 may be trained using a loss (e.g., a loss function) determined as a summation of two terms: one term may be determined as a loss between the $N_P$ measured CSI and $N_P$ predicted CSI (e.g., for training prediction model 3984); and the other term may be determined as a loss between the output of decoder 3904 and the $N_T$ measured labels.

CPU Frameworks

For purposes of illustration, some embodiments of CSI Processing Unit (CPU) framework aspects may be described in the context of the wireless system 3900 illustrated in Fig. 39 including UE 3901, base station (e.g., a gNB) 3902, and/or CPU logic 3981C and 3982C implementing an SPC scheme. The principles disclosed herein, however, are not limited to the implementation details disclosed in Fig. 39 and may be applied in any other context including, for example, the system 3800 illustrated in Fig. 38 including CPU logic 3881C and 3882C, and/or JPC schemes.

Referring again to Fig. 39, some embodiments may implement an SPC scheme in which UE 3901 may be configured with an AI/ML CSI prediction CSI-ReportConfig and an AI/ML CSI compression CSI-ReportConfig which may be linked together, and the report quantity for the first CSI-ReportConfig may be set to "None". Such a configuration may be used, for example, to implement the third type of technique for performing inference (e.g., base station 3902 may configure only a CSI compression report configuration) as discussed above. CPU related aspects for one or more alternative techniques for performing inference, which may be based on configuring a CSI compression CSI-ReportConfig may essentially be handled with one or more existing schemes available for an AI/ML CSI compression CSI-ReportConfig.

In some embodiments in which a report quantity may be set to "none," one or more reports may or must be counted toward a CPU budget (e.g., $O_{CPU} = N_{CPU,SPC}$) even though the UE may not report the CSI for the AIML CSI prediction CSI-ReportConfig. One technique to accommodate this constraint is to specify an amount (e.g., a fixed value) of $N_{CPU,SPC}$ in a specification which a UE may consult to determine the amount. Additionally, or alternatively, another technique to accommodate this constraint is to determine an amount of $N_{CPU,SPC}$ based on a UE capability. For example, a UE may report a value for $N_{CPU,SPC}$ that the UE may support, and a base station may configure the applicable value, for example, via RRC.

Example Implementation Environments

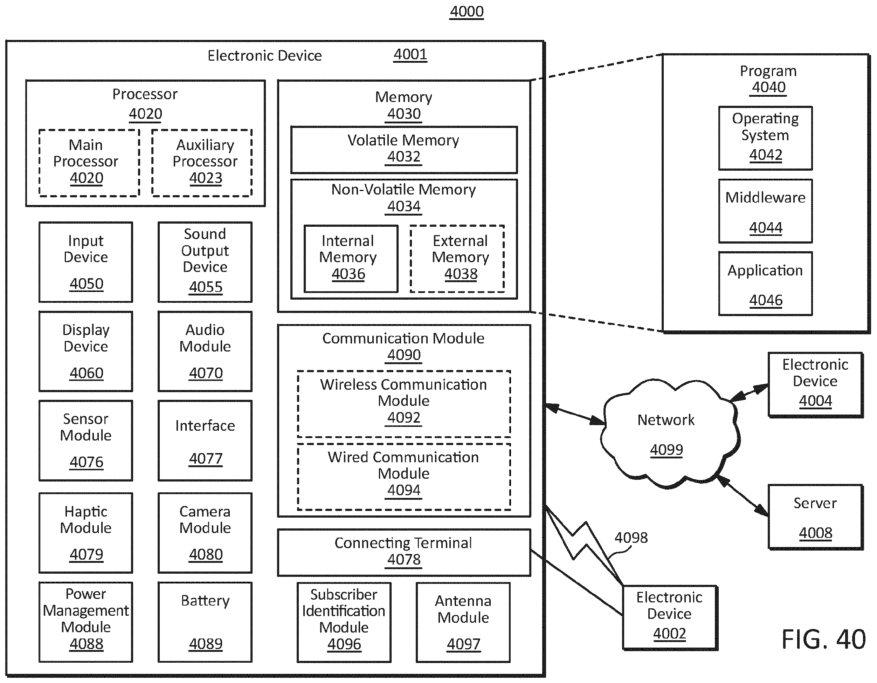

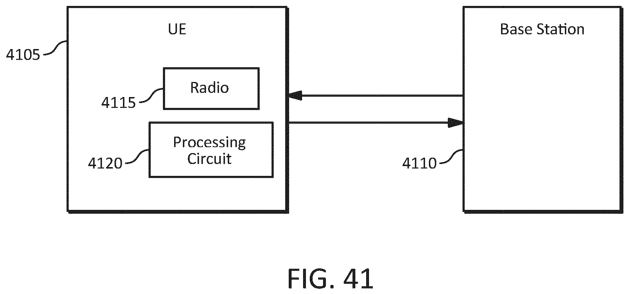

Any of the functionality disclosed herein relating to training collaboration including logic such as training collaboration logic 3171, 3172, 3271, and/or 3272, and/or any portions thereof including model specification logic 3171A, 3172A, 3271A, and/or 3272A, capability and operation logic 3171B, 3172B, 3271B, and/or 3272B, and/or data transfer logic 3171C, 3172C, 3271C, and/or 3272C may be implemented with hardware, software, or a combination thereof, including, for example, using one or more of controllers 1304 and/or 1404 illustrated in Fig. 13 and/or Fig. 14, wireless communication module 4090 illustrated in Fig. 40, and/or processing circuit 4120 illustrated in Fig. 41.

Any of the functionality disclosed herein relating to channel information compression with predictive information including logic such as compression-prediction logic 3881, 3882, 3981, and/or 3982, and/or any portions thereof including inference logic 3881A, 3882A, 3981A, and/or 3982A, data collection logic 3881B, 3882B, 3981B, and/or 3982B, and/or CPU logic 3881C, 3882C, 3981C, and/or 3982C may be implemented with hardware, software, or a combination thereof, including, for example, using one or more of controllers 1304 and/or 1404 illustrated in Fig. 13 and/or Fig. 14, wireless communication module 4090 illustrated in Fig. 40, and/or processing circuit 4120 illustrated in Fig. 41.

FIG. 40 is a block diagram of an electronic device in a network environment 4000, according to an embodiment. The embodiment illustrated in Fig. 40 may be used to implement any of the systems, methods, apparatus, devices, and/or the like described herein. For example, the electronic device 4001 may be used to implement any of the UEs and/or base stations described herein. In such embodiments, any of the UE and/or base station functionality may be implemented, at least in part, with the wireless communication module 4090.

Referring to FIG. 40, an electronic device 4001 in a network environment 4000 may communicate with an electronic device 4002 via a first network 4098 (e.g., a short-range wireless communication network), or an electronic device 4004 or a server 4008 via a second network 4099 (e.g., a long-range wireless communication network). The electronic device 4001 may communicate with the electronic device 4004 via the server 4008. The electronic device 4001 may include a processor 4020, a memory 4030, an input device 4050, a sound output device 4055, a display device 4060, an audio module 4070, a sensor module 4076, an interface 4077, a haptic module 4079, a camera module 4080, a power management module 4088, a battery 4089, a communication module 4090, a subscriber identification module (SIM) card 4096, or an antenna module 4097. In one embodiment, at least one (e.g., the display device 4060 or the camera module 4080) of the components may be omitted from the electronic device 4001, or one or more other components may be added to the electronic device 4001. Some of the components may be implemented as a single integrated circuit (IC). For example, the sensor module 4076 (e.g., a fingerprint sensor, an iris sensor, or an illuminance sensor) may be embedded in the display device 4060 (e.g., a display).

The processor 4020 may execute software (e.g., a program 4040) to control at least one other component (e.g., a hardware or a software component) of the electronic device 4001 coupled with the processor 4020 and may perform various data processing or computations.

As at least part of the data processing or computations, the processor 4020 may load a command or data received from another component (e.g., the sensor module 4076 or the communication module 4090) in volatile memory 4032, process the command or the data stored in the volatile memory 4032, and store resulting data in non-volatile memory 4034. The processor 4020 may include a main processor 4021 (e.g., a central processing unit (CPU) or an application processor (AP)), and an auxiliary processor 4023 (e.g., a graphics processing unit (GPU), an image signal processor (ISP), a sensor hub processor, or a communication processor (CP)) that is operable independently from, or in conjunction with, the main processor 4021. Additionally, or alternatively, the auxiliary processor 4023 may be adapted to consume less power than the main processor 4021, or execute a particular function. The auxiliary processor 4023 may be implemented as being separate from, or a part of, the main processor 4021.

The auxiliary processor 4023 may control at least some of the functions or states related to at least one component (e.g., the display device 4060, the sensor module 4076, or the communication module 4090) among the components of the electronic device 4001, instead of the main processor 4021 while the main processor 4021 is in an inactive (e.g., sleep) state, or together with the main processor 4021 while the main processor 4021 is in an active state (e.g., executing an application). The auxiliary processor 4023 (e.g., an image signal processor or a communication processor) may be implemented as part of another component (e.g., the camera module 4080 or the communication module 4090) functionally related to the auxiliary processor 4023.

The memory 4030 may store various data used by at least one component (e.g., the processor 4020 or the sensor module 4076) of the electronic device 4001. The various data may include, for example, software (e.g., the program 4040) and input data or output data for a command related thereto. The memory 4030 may include the volatile memory 4032 or the non-volatile memory 4034. Non-volatile memory 4034 may include internal memory 4036 and/or external memory 4038.

The program 4040 may be stored in the memory 4030 as software, and may include, for example, an operating system (OS) 4042, middleware 4044, or an application 4046.

The input device 4050 may receive a command or data to be used by another component (e.g., the processor 4020) of the electronic device 4001, from the outside (e.g., a user) of the electronic device 4001. The input device 4050 may include, for example, a microphone, a mouse, or a keyboard.

The sound output device 4055 may output sound signals to the outside of the electronic device 4001. The sound output device 4055 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 4060 may visually provide information to the outside (e.g., a user) of the electronic device 4001. The display device 4060 may include, for example, a display, a hologram device, or a projector and control circuitry to control a corresponding one of the displays, hologram device, and projector. The display device 4060 may include touch circuitry adapted to detect a touch, or sensor circuitry (e.g., a pressure sensor) adapted to measure the intensity of force incurred by the touch.

The audio module 4070 may convert a sound into an electrical signal and vice versa. The audio module 4070 may obtain the sound via the input device 4050 or output the sound via the sound output device 4055 or a headphone of an external electronic device 4002 directly (e.g., wired) or wirelessly coupled with the electronic device 4001.

The sensor module 4076 may detect an operational state (e.g., power or temperature) of the electronic device 4001 or an environmental state (e.g., a state of a user) external to the electronic device 4001, and then generate an electrical signal or data value corresponding to the detected state. The sensor module 4076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 4077 may support one or more specified protocols to be used for the electronic device 4001 to be coupled with the external electronic device 4002 directly (e.g., wired) or wirelessly. The interface 4077 may include, for example, a high- definition multimedia interface (HDMI), a universal serial bus (USB) interface, a secure digital (SD) card interface, or an audio interface.

A connecting terminal 4078 may include a connector via which the electronic device 4001 may be physically connected with the external electronic device 4002. The connecting terminal 4078 may include, for example, an HDMI connector, a USB connector, an SD card connector, or an audio connector (e.g., a headphone connector).

The haptic module 4079 may convert an electrical signal into a mechanical stimulus (e.g., a vibration or a movement) or an electrical stimulus which may be recognized by a user via tactile sensation or kinesthetic sensation. The haptic module 4079 may include, for example, a motor, a piezoelectric element, or an electrical stimulator.

The camera module 4080 may capture a still image or moving images. The camera module 4080 may include one or more lenses, image sensors, image signal processors, or flashes. The power management module 4088 may manage power supplied to the electronic device 4001. The power management module 4088 may be implemented as at least part of, for example, a power management integrated circuit (PMIC).

The battery 4089 may supply power to at least one component of the electronic device 4001. The battery 4089 may include, for example, a primary cell which is not rechargeable, a secondary cell which is rechargeable, or a fuel cell.

The communication module 4090 may support establishing a direct (e.g., wired) communication channel or a wireless communication channel between the electronic device 4001 and the external electronic device (e.g., the electronic device 4002, the electronic device 4004, or the server 4008) and performing communication via the established communication channel. The communication module 4090 may include one or more communication processors that are operable independently from the processor 4020 (e.g., the AP) and supports a direct (e.g., wired) communication or a wireless communication. The communication module 4090 may include a wireless communication module 4092 (e.g., a cellular communication module, a short-range wireless communication module, or a global navigation satellite system (GNSS) communication module) or a wired communication module 4094 (e.g., a local area network (LAN) communication module or a power line communication (PLC) module). A corresponding one of these communication modules may communicate with the external electronic device via the first network 4098 (e.g., a short-range communication network, such as BLUETOOTH™, wireless-fidelity (Wi-Fi) direct, or a standard of the Infrared Data Association (IrDA)) or the second network 4099 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 4092 may identify and authenticate the electronic device 4001 in a communication network, such as the first network 4098 or the second network 4099, using subscriber information (e.g., international mobile subscriber identity (IMSI)) stored in the subscriber identification module 4096.

The antenna module 4097 may transmit or receive a signal or power to or from the outside (e.g., the external electronic device) of the electronic device 4001. The antenna module 4097 may include one or more antennas, and, therefrom, at least one antenna appropriate for a communication scheme used in the communication network, such as the first network 4098 or the second network 4099, may be selected, for example, by the communication module 4090 (e.g., the wireless communication module 4092). The signal or the power may then be transmitted or received between the communication module 4090 and the external electronic device via the selected at least one antenna.

Commands or data may be transmitted or received between the electronic device 4001 and the external electronic device 4004 via the server 4008 coupled with the second network 4099. Each of the electronic devices 4002 and 4004 may be a device of a same type as, or a different type, from the electronic device 4001. All or some of operations to be executed at the electronic device 4001 may be executed at one or more of the external electronic devices 4002, 4004, or 4008. For example, if the electronic device 4001 should perform a function or a service automatically, or in response to a request from a user or another device, the electronic device 4001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 4001. The electronic device 4001 may provide the outcome, with or without further processing of the outcome, as at least part of a reply to the request. To that end, a cloud computing, distributed computing, or client-server computing technology may be used, for example.

Fig. 41 shows a system including a UE and a base station in communication with each other, according to an embodiment. The UE 4105 may include a radio 4115 and a processing circuit (or a means for processing) 4120, which may perform various methods disclosed herein, e.g., any of the methods illustrated with respect to Figs. 1-12 and/or 15-23. For example, the processing circuit 4120 may receive, via the radio 4115, transmissions from a network node that may be implemented, for example, with a base station ( e.g., a gNB) 4110, and the processing circuit 4120 may transmit, via the radio 4115, signals to the base station 4110.

As another example, the processing circuit 4120 may implement the CSI determination logic 2452 and/or generation model 2403, and the base station 4110 may implement logic to provide the restriction information 2461 and/or the reconstruction model 2404 as illustrated in Fig. 24.

As another example, the processing circuit 4120 may implement the precoding determination logic 2552 and/or encoder model 2503, and the base station 4110 may implement logic to provide the restricted sub-space information 2561 and/or the decoder model 2504 as illustrated in Fig. 25.

As another example, the processing circuit 4120 may implement the precoding determination logic 2652 and/or encoder model 2603, and the base station 4110 may implement logic to provide the restricted sub-space information 2661 and/or the decoder model 2604 as illustrated in Fig. 26.

As another example, the processing circuit 4120 may implement the generation model 2703, and the base station 4110 may implement the reconstruction model 2704 as illustrated in Fig. 27.

As another example, the processing circuit 4120 may implement the data collection logic 2866 and/or the generation model 2803, and the base station 4110 may implement the data collection logic 2867 and/or the reconstruction model 2804 as illustrated in Fig. 28.

As another example, the processing circuit 4120 may implement the data collection logic 2966 and/or the encoder model 2903, and the base station 4110 may implement the data collection logic 2967 and/or the decoder model 2904 as illustrated in Fig. 28.

As another example, the processing circuit 4120 may implement the data collection logic 3066 and/or the encoder model 3003, and one or more instances of the base station 4110 may implement one or more of the data collection logic 3067A and/or 3067B and/or the decoder models 3004A and/or 3004B as illustrated in Fig. 30.

As another example, the processing circuit 4120 may implement any of the functionality disclosed herein relating to training collaboration including logic such as training collaboration logic 3881, 3882, 3981, and/or 3982, and/or any portions thereof including inference logic 3881A, 3882A, 3981A, and/or 3982A, data collection logic 3881B, 3882B, 3981B, and/or 3982B, and/or CPU logic 3881C, 3882C, 3981C, and/or 3982C.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively, or additionally, the program instructions can be encoded on an artificially generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

The embodiments disclosed herein may be described in the context of various implementation details, but the principles of this disclosure are not limited to these or any other specific details. Some functionality has been described as being implemented by certain components, but in other embodiments, the functionality may be distributed between different systems and components in different locations. A reference to a component or element may refer to only a portion of the component or element. The use of terms such as "first" and "second" in this disclosure and the claims may only be for purposes of distinguishing the things they modify and may not indicate any spatial or temporal order unless apparent otherwise from context. A reference to a first thing may not imply the existence of a second thing. Moreover, the various details and embodiments described above may be combined to produce additional embodiments according to the inventive principles of this patent disclosure. Various organizational aids such as section headings and the like may be provided as a convenience, but the subject matter arranged according to these aids and the inventive principles of this patent disclosure are not defined or limited by these organizational aids.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

**Claims**

1. An apparatus (401, 701, 1300, 1601, 1801, 2401, 2801, 2901, 3001, 3101, 3201, 3801, 3901, 4105) comprising:

   a receiver configured to receive a reference signal (717, 1617, 2017, 2417, 2817, 2917, 3017A, 3017B, 3117, 3217, 3817, 3917) using a channel (715, 2015, 2415, 2815, 2915, 3015A, 3015B, 3115, 3215, 3815, 3915);
   a transmitter configured to transmit a representation (407, 1607, 1707, 1807, 1907, 2016, 2407, 2807, 2907, 3007, 3107, 3207, 3807, 3907) relating to the channel (715, 2015, 2415, 2815, 2915, 3015A, 3015B, 3115, 3215, 3815, 3915); and
   a processing circuit (1306, 4120) configured to:

   determine channel information (405, 1805, 2005, 2405, 2705, 2805, 2905, 3005, 3105, 3205, 3805, 3905) based on the reference signal (717, 1617, 2017, 2417, 2817, 3017A, 3017B, 3117, 3217, 3817, 3917);
   generate, using a model, the representation (1607, 1707, 1807, 1907, 2016, 2407, 2807, 2907, 3007, 3107, 3207, 3807, 3907) based on the channel information (405, 1805, 2005, 2405, 2705, 2805, 2905, 3005, 3105, 3205, 3805, 3905); and
   transfer, using the receiver or the transmitter, at least one of the following:

   (a) model information (3173A, 3273A) to specify the model,
   (b) capability information (3173B, 3273B) for the apparatus relating to the model, and
   (c) data set information (3173C, 3273C) to specify a data set for the model.

2. The apparatus of claim 1, wherein the processing circuit (1306, 4120) is configured to transfer, using the receiver or the transmitter, model information (3173A, 3273A) to specify the model.

3. The apparatus (401, 701, 1300, 1601, 1801, 2401, 2801, 2901, 3001, 3101, 3201, 3801, 3901, 4105) of claim 2, wherein the model information (3173A, 3273A) comprises an identifier for the model.

4. The apparatus (401, 701, 1300, 1601, 1801, 2401, 2801, 2901, 3001, 3101, 3201, 3801, 3901, 4105) of claim 2 or 3, wherein the model information (3173A, 3273A) comprises structure information for the model.

5. The apparatus (401, 701, 1300, 1601, 1801, 2401, 2801, 2901, 3001, 3101, 3201, 3801, 3901, 4105) of any one of claims 2 to 4, wherein the model information (3173A, 3273A) comprises information about a type of input for the model, and/or

wherein the model information (3173A, 3273A) comprises information about a format of input for the model.

6. The apparatus of any one of claims 2 to 5, wherein the model information (3173A, 3273A) comprises mapping information for mapping channel information to an input of the model.

7. The apparatus (401, 701, 1300, 1601, 1801, 2401, 2801, 2901, 3001, 3101, 3201, 3801, 3901, 4105) of claim 6, wherein the mapping information comprises information for a first subband and information for a second subband, and/or
   wherein the mapping information comprises information for a first slot and information for a second slot.

8. The apparatus (401, 701, 1300, 1601, 1801, 2401, 2801, 2901, 3001, 3101, 3201, 3801, 3901, 4105) of any one of claim 1 to 7, wherein the processing circuit (1306, 4120) is configured to transfer, using the receiver or the transmitter, capability information (3173B, 3273B) for the apparatus relating to the model.

9. The apparatus (401, 701, 1300, 1601, 1801, 2401, 2801, 2901, 3001, 3101, 3201, 3801, 3901, 4105) of claim 8, wherein the capability information (3173B, 3273B) comprises information about a model supported by the apparatus.

10. The apparatus (401, 701, 1300, 1601, 1801, 2401, 2801, 2901, 3001, 3101, 3201, 3801, 3901, 4105) of claim 8 or 9, wherein the capability information (3173B, 3273B) comprises information about a model structure supported by the apparatus.

11. The apparatus (401, 701, 1300, 1601, 1801, 2401, 2801, 2901, 3001, 3101, 3201, 3801, 3901, 4105) of any one of claims 8 to 10, wherein the capability information (3173B, 3273B) comprises information (3883A, 3983A) about an inference operation for the model.

12. The apparatus (401, 701, 1300, 1601, 1801, 2401, 2801, 2901, 3001, 3101, 3201, 3801, 3901, 4105) of any one of claims 8 to 11, wherein the processing circuit (1306, 4120) is configured to transfer the capability information (3173B, 3273B) using a channel information report configuration.

13. The apparatus (401, 701, 1300, 1601, 1801, 2401, 2801, 2901, 3001, 3101, 3201, 3801, 3901, 4105) of any one of claims 8 to 12, wherein the capability information (3173B, 3273B) comprises information about a type of collaboration supported by the apparatus, and/or

    wherein the capability information (3173B, 3273B) comprises information about a capability of the apparatus to modify the model, and/or
    wherein the capability information (3173B, 3273B) comprises information about an amount of time associated with modifying the model.

14. The apparatus (401, 701, 1300, 1601, 1801, 2401, 2801, 2901, 3001, 3101, 3201, 3801, 3901, 4105) of any one of claim 1 to 13, wherein the processing circuit (1306, 4120) is configured to transfer, using the receiver or the transmitter, data set information to specify a data set for the model.

15. The apparatus (401, 701, 1300, 1601, 1801, 2401, 2801, 2901, 3001, 3101, 3201, 3801, 3901, 4105) of claim 14, wherein the data set information comprises a type of information in the data set, and/or

    wherein the data set information comprises a format of information in the data set, and/or
    wherein the data set information comprises mapping information for the data set.

Wireless Apparatus
101

Physical Layer
Information
105

↓

Machine Learning
Model
103

↓

Representation of
Physical Layer
Information
107

109

FIG. 1

Wireless Apparatus
202

210

Representation of
Physical Layer
Information
208

↓

Machine Learning
Model
204

↓

Reconstruction of
Physical Layer
Information
206

FIG. 2

FIG. 3

FIG. 4

**UE (Node B) 501**

Measurement 518

← DL Signal (e.g., RS) 517

Machine Learning Model 503

Quantizer 519

→ UL Signal (Bit stream) 520

**gNB (Node A) 502**

Extracted Information 522

Machine Learning Model 504

Dequantizer 521

## FIG. 5

**UE (Node A) 602**

Extracted Information 622

→ UL Signal (e.g., RS) 617

Machine Learning Model 604

Dequantizer 621

← DL Signal (Bit stream) 620

**gNB (Node B) 601**

Measurement 618

Machine Learning Model 603

Quantizer 619

## FIG. 6

700

UE
701

| Channel State Information 718 | ◄─ CSI-RS/DMRS 717 ─ | Reconstruction of Channel State Information 722 |

Channel 715

Machine Learning Encoder 703

Machine Learning Decoder 704

Quantizer 719

UL Signal (Bit stream) 720

Dequantizer 721

gNB
702

## FIG. 7

800

823

Initialize Training Process

824

Training

Candidate
model

Failed, no
training
allowed

825

Failed,
further
training
allowed

826

Validation

Model
development
failed

Failed, no
training
allowed

Passed

827

Failed,
further
training
allowed

Testing

Final
model

828

Inference

FIG. 8

Base station trains reference encoder and decoder models using training data set. — 929

Base station shares reference decoder model with UE. — 930

Share reference encoder with UE? — 931

Yes

No

Use shared encoder as reference encoder. — 932

UE establishes reference encoder model. — 933

UE trains reference encoder model at time points $t_i$ — 934

FIG. 9

FIG. 10

1100

| Training Data 1111 | → | Pre-Processor 1137 | → | Generation Model 1103 | → | Representation of Training Data 1107 | → | Reconstruction Model 1104 | → | Post-Processor 1138 | → | Reconstructed Training Data 1112 |

Training Feedback

1114

1139

1140

Loss Function 1113

1141

1142

FIG. 11

EP 4 645 768 A1

1200

```
┌──────────┐      ┌──────────┐      ┌──────────────┐      ┌──────────────┐      ┌──────────────┐
│  Test    │      │Generation│      │Representation│      │Reconstruction│      │ Reconstructed│
│  Data    │ ───> │  Model   │ ───> │  of Test Data│ ───> │    Model     │ ───> │  Test Data   │
│  1211    │      │  1203    │      │    1207      │      │    1204      │      │    1212      │
└──────────┘      └──────────┘      └──────────────┘      └──────────────┘      └──────────────┘
```

FIG. 12

User Equipment          1300

Controller          1304

| Memory 1308 | Processor 1306 | | Transceiver 1302 |

FIG. 13

1400          Base Station

Controller          1404

| Transceiver 1402 | | Processor 1406 | Memory 1408 |

FIG. 14

Start — 1502

Determine, at a wireless apparatus, physical layer information for the wireless apparatus. — 1504

Generate a representation of the physical layer information using a machine learning model. — 1506

Transmit, from the wireless apparatus, the representation of the physical layer information — 1508

End — 1510

FIG. 15

FIG. 16

1700

Precoder$_1$, CQI$_1$

(Subband 1)

Encoder
1703

Decoder
1704

RecPrecoder$_1$, RecCQI$_1$

(Subband 1)

Representation

1707

Precoder$_N$, CQI$_N$

(Subband N)

RecPrecoder$_N$, RecCQI$_N$

(Subband N)

FIG. 17

FIG. 18

FIG. 19

EP 4 645 768 A1

FIG. 20

FIG. 21

EP 4 645 768 A1

FIG. 22

FIG. 23

EP 4 645 768 A1

FIG. 24

EP 4 645 768 A1

FIG. 25

Base Station 2602

Reconstruction of Precoding Information 2606

2664

Decoder Model 2604

Representation based on Precoding Information and Restricted Sub-Space 2607

Precoding Information 2645

2661 Restricted Sub-Space

2617 CSI-RS

2615 Channel

2616

2600

UE 2601

Precoding Information 2605

2663

Encoder Model 2603

Representation based on Precoding Information and Restricted Sub-Space 2607

Precoding Determination Logic 2652

Encoder Input Configuration
Decoder Output Configuration

FIG. 26

FIG. 27

FIG. 28

FIG. 29

EP 4 645 768 A1

FIG. 30

FIG. 31

FIG. 32

3300

Target CSI Matrices 3305 → Reshaping Logic 3374 → Encoder Model 3303

CSI Feedback 3307

Decoder Model 3304 → Reshaping Logic 3375 → Reconstructed Target CSI Matrices 3306

FIG. 33

3400

AP-CSI-RS/
CSI-IM

DCI Triggering
a CSI report

PUSCH carrying
aperiodic CSI report

$Z'_{ref}$

$Z_{ref}$

time

FIG. 34

3500

P-CSI-RS

PDCCH triggering a
CSI report based
on P-CSI-RS
measurement

Slot n-n$_{CSI-ref}$

PUSCH carrying
aperiodic CSI report

Time gap larger than $Z'_{ref}$

time

FIG. 35

3600

P/SP CSI report
occasion

Slot n-n$_{CSI-ref}$

P-CSI-RS

CPU process for
P/SP CSI report

time

FIG. 36

EP 4 645 768 A1

3700

PDCCH triggering a
CSI report based
on P-CSI-RS
measurement

AP-CSI report
on PUSCH

P-CSI-RS

Slot $n\text{-}n_{CSI\text{-}ref}$

CPU process for
AP-CSI report

time

FIG. 37

FIG. 38

FIG. 39

FIG. 40

FIG. 41

## EUROPEAN SEARCH REPORT

**Application Number**

EP 25 17 2610

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/013851 A1 (NTT DOCOMO INC [JP]) 18 January 2024 (2024-01-18) * the whole document * ----- | 1-15 | INV. H04L25/02 |

**TECHNICAL FIELDS SEARCHED (IPC)**

H04L

The present search report has been drawn up for all claims

| Place of search | Date of completion of the search | Examiner |
|---|---|---|
| Munich | 19 August 2025 | Baltersee, Jens |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 2610

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2025

| Patent document cited in search report | Publication date | Patent family member(s) | Publication date |
|---|---|---|---|
| WO 2024013851 A1 | 18-01-2024 | NONE | |

For more details about this annex : see Official Journal of the European Patent Office, No. 12/82

EPO FORM P0459